# EUROPEAN PATENT SPECIFICATION

(11) **EP 4 290 965 B1**
(45) Date of publication and mention of the grant of the patent: **11.11.2026**
(21) Application number: 22771765.9
(22) Date of filing: 16.03.2022
(51) Int. Cl.: H04W 72/12, H04W 72/02, H04L 1/18, H04L 1/1822, H04L 1/08, H04L 1/1867, H04W 72/11, H04W 72/51

(54) **GRANT-FREE DATA TRANSMISSION METHOD AND DEVICE IN WIRELESS COMMUNICATION SYSTEM**
BERECHTIGUNGSFREIES DATENÜBERTRAGUNGSVERFAHREN UND VORRICHTUNG IN EINEM DRAHTLOSKOMMUNIKATIONSSYSTEM
PROCÉDÉ ET DISPOSITIF DE TRANSMISSION DE DONNÉES SANS AUTORISATION DANS UN SYSTÈME DE COMMUNICATION SANS FIL

(30) Priority: 17.03.2021 KR 20210034681
(43) Date of publication of application: 13.12.2023
(73) Proprietor: Samsung Electronics Co., Ltd., Suwon-si, Gyeonggi-do 16677 (KR)
(72) Inventor: PARK, Sungjin, Suwon-si, Gyeonggi-do 16677 (KR); RYU, Hyunseok, Suwon-si, Gyeonggi-do 16677 (KR); YEO, Jeongho, Suwon-si, Gyeonggi-do 16677 (KR)
(74) Representative: Gulde & Partner
(86) International application number: PCT/KR2022/003691
(87) International publication number: WO 2022/197099

(56) References cited:
- US-A1- 2014 086 137
- US-A1- 2019 246 420
- US-A1- 2020 008 097
- VIVO: "Other issues for URLLC and UE features", vol. RAN WG1, no. Reno, USA; 20191118 - 20191122, 9 November 2019 (2019-11-09), XP051823169, Retrieved from the Internet <URL:https://ftp.3gpp.org/tsg_ran/WG1_RL1/TSGR1_99/Docs/R1-1912037.zip R1-1912037 Other issues for URLLC and UE features.docx> [retrieved on 20191109]
- NTT DOCOMO ET AL: "Discussions on DL SPS enhancement", vol. RAN WG1, no. Reno, USA; 20191118 - 20191122, 9 November 2019 (2019-11-09), pages 1 - 9, XP051823670, Retrieved from the Internet <URL:https://ftp.3gpp.org/tsg_ran/WG1_RL1/TSGR1_99/Docs/R1-1912891.zip R1-1912891.docx> [retrieved on 20191109]
- APPLE INC.: "Discussion on UE feedback enhancements for HARQ-ACK", 3GPP DRAFT; R1-2101378, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 18 January 2021 (2021-01-18), Mobile Competence Centre ; 650, route des Lucioles ; F-06921 Sophia-Antipolis Cedex ; France , XP051971545
- INTEL CORPORATION: "MBS MAC Layer and Group Scheduling Aspects", 3GPP DRAFT; R2-2100361, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic meeting; 20210125 - 20210205, 15 January 2021 (2021-01-15), Mobile Competence Centre ; 650, route des Lucioles ; F-06921 Sophia-Antipolis Cedex ; France , XP051973547

## Description

### [Technical Field]

The disclosure relates to a method and a device for performing grant-free transmission and reception of data in a wireless communication system. Specifically, the disclosure relates to a method of performing grant-free transmission of data in downlink.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Furthermore, the 5G system is evolving to provide various services can be provided, and accordignly there is a need for schemes to efficiently provide these services. Therefore, research on grant-free based communication is actively conducted. VIVO: "Other issues for URLLC and UE features", 3GPP DRAFT; R1-1912037, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, RAN WG1, Reno, USA; 9 November 2019 (2019-11-09), discusses URLLC and UE features.

### [Disclosure of Invention]

### [Technical Problem]

The disclosure describes an embodiment of performing grant-free data transmission or reception so as to efficiently use wireless resources. Specifically, the disclosure describes a downlink grant-free data transmission or reception method and an uplink grant-free data transmission or reception method.

### [Solution to Problem]

The invention is set out in the appended set of claims. In order to solve the problem described above, a method performed by a terminal of the disclosure includes receiving a semi-persistent scheduling (SPS) configuration including an SPS configuration index from a base station, identifying a first set of at least one unicast PDSCH and a second set of at least one multicast PDSCH, based on the SPS configuration, performing reception of a PDSCH having a lowest SPS configuration index, in case that the PDSCH is related to a cell radio network temporary identifier (C-RNTI), excluding the received PDSCH and a PDSCH overlapping with the received PDSCH from the first set, and in case that the PDSCH is not related to the C-RNTI, excluding the received PDSCH and a PDSCH overlapping with the received PDSCH from the second set, and until the first set and the second set are empty or until the number of received PDSCHs is identical to a maximum number of PDSCHs supported by the terminal, repeating the reception and the excluding.

In order to solve the problem described above, a method performed by a base station of the disclosure includes transmitting a semi-persistent scheduling (SPS) configuration including an SPS configuration index to a terminal, wherein a first set of at least one unicast PDSCH and a second set of at least one multicast PDSCH correspond to the SPS configuration, performing transmission of a PDSCH having a lowest SPS configuration index, in case that the PDSCH is related to a cell radio network temporary identifier (C-RNTI), excluding the transmitted PDSCH and a PDSCH overlapping with the transmitted PDSCH from the first set, and in case that the PDSCH is not related to the C-RNTI, excluding the transmitted PDSCH and a PDSCH overlapping with the transmitted PDSCH from the second set, and until the first set and the second set are empty or until the number of transmitted PDSCHs is identical to a maximum number of PDSCHs supported by the terminal, repeating the transmission and the excluding.

In order to solve the problem described above, a terminal of the disclosure includes a transceiver, and a controller configured to receive a semi-persistent scheduling (SPS) configuration including an SPS configuration index from a base station, identify a first set of at least one unicast PDSCH and a second set of at least one multicast PDSCH, based on the SPS configuration, perform reception of a PDSCH having a lowest SPS configuration index, in case that the PDSCH is related to a cell radio network temporary identifier (C-RNTI), exclude the received PDSCH and a PDSCH overlapping with the received PDSCH from the first set, and in case that the PDSCH is not related to the C-RNTI, exclude the received PDSCH and a PDSCH overlapping with the received PDSCH from the second set, and until the first set and the second set are empty or until the number of received PDSCHs is identical to a maximum number of PDSCHs supported by the terminal, repeat the reception and the excluding.

In order to solve the problem described above, a base station of the disclosure includes a transceiver, and a controller configured to transmit a semi-persistent scheduling (SPS) configuration including an SPS configuration index to a terminal, wherein a first set of at least one unicast PDSCH and a second set of at least one multicast PDSCH correspond to the SPS configuration, perform transmission of a PDSCH having a lowest SPS configuration index, in case that the PDSCH is related to a cell radio network temporary identifier (C-RNTI), exclude the transmitted PDSCH and a PDSCH overlapping with the transmitted PDSCH from the first set, and in case that the PDSCH is not related to the C-RNTI, exclude the transmitted PDSCH and a PDSCH overlapping with the transmitted PDSCH from the second set, and until the first set and the second set are empty or until the number of transmitted PDSCHs is identical to a maximum number of PDSCHs supported by the terminal, repeat the transmission and the excluding.

### [Advantageous Effects of Invention]

According to an embodiment of the disclosure, in grant-free data transmission or reception, wireless resources may be efficiently used, and various services may be efficiently provided to a user according to priority.

### [Brief Description of Drawings]

FIG. 1 is a diagram illustrating a transmission structure in a time-frequency domain that is a wireless resource region of a 5G or NR system according to an embodiment of the disclosure;
FIG. 2 is a diagram illustrating an example of allocating pieces of data for eMBB, URLLC, and mMTC in a time-frequency resource domain in a 5G or NR system according to an embodiment;
FIG. 3 is a diagram illustrating a grant-free transmission or reception operation according to an embodiment of the disclosure;
FIG. 4 is a diagram illustrating a method of configuring a semi-static HARQ-ACK codebook in an NR system according to an embodiment of the disclosure;
FIG. 5 is a diagram illustrating a method of configuring a dynamic HARQ-ACK codebook in an NR system according to an embodiment of the disclosure;
FIG. 6 is a diagram illustrating a process of transmitting a HARQ-ACK for a DL SPS according to an embodiment of the disclosure;
FIG. 7 is a block diagram illustrating a process in which a terminal transmits HARQ-ACK information based on a semi-static HARQ-ACK codebook for DCI indicating deactivation of an SPS physical downlink shared channel (PDSCH) according to an embodiment of the disclosure;
FIG. 8 is a block diagram illustrating a method in which a terminal determines a dynamic HARQ-ACK codebook for SPS PDSCH reception according to an embodiment of the disclosure;
FIG. 9 is a block diagram illustrating a method in which a terminal transmits HARQ-ACK information according to a DL SPS transmission period according to an embodiment of the disclosure;
FIG. 10 is a block diagram illustrating a terminal operation for dynamically changing a DL SPS transmission period according to an embodiment of the disclosure;
FIG. 11 is a diagram illustrating a method of transmitting HARQ-ACK information for SPS release by a terminal in a situation where two or more DL SPSs are activated according to an embodiment of the disclosure;
FIG. 12 is a diagram illustrating a grant-free operation in a situation where a terminal is connected to two or more transmission and reception points (TRPs) according to an embodiment of the disclosure;
FIG. 13 is a diagram illustrating a DL SPS reception operation of a terminal in a situation where two or more DL SPSs overlap with each other in time resources according to an embodiment of the disclosure;
FIG. 14 is a block diagram illustrating a reception operation of a terminal in a situation where two or more DL SPSs overlap with each other in time resources according to an embodiment of the disclosure;
FIG. 15 is a diagram briefly illustrating an example of a signal transmission/reception method for a group cast service in a wireless communication system according to various embodiments of the disclosure;
FIG. 16 is a diagram illustrating a SPS-based groupcast data transmission or reception method according to an embodiment of the disclosure;
FIG. 17 is a flowchart illustrating an SPS operation method of a terminal according to an embodiment of the disclosure;
FIG. 18 is a diagram illustrating a situation of a terminal where multiple SPS PDSCHs overlap with each other according to an embodiment of the disclosure;
FIG. 19 is a flowchart illustrating a terminal operation for SPS PDSCH reception according to an embodiment of the disclosure;
FIG. 20 is a block diagram illustrating a structure of a terminal capable of performing an embodiment of the disclosure; and
FIG. 21 illustrates a structure of a base station capable of performing an embodiment.

### [Mode for the Invention]

Hereinafter, embodiments will be described in detail with reference to the accompanying drawings.

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Further, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services. In addition, communication standards for 5G or new radio (NR) as 5th generation mobile communication systems have been established.

As a typical example of the broadband wireless communication system, the 5G or NR system employs an orthogonal frequency division multiplexing (OFDM) scheme in a downlink (DL) and an uplink (UL). More specifically, a cyclic-prefix OFDM (CP-OFDM) scheme is employed in a downlink and discrete Fourier transform spreading OFDM (DFT-S-OFDM) is employed together with the CP-OFDM in an uplink (UL). The uplink indicates a radio link through which a user equipment (UE) {or a mobile station (MS)} transmits data or control signals to a base station (BS) (eNode B), and the downlink indicates a radio link through which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

The 5G or NR system employs a hybrid automatic repeat request (HARQ) scheme for, when a decoding failure has occurred in an initial transmission, retransmitting corresponding data in a physical layer. The HARQ scheme means that if a receiver fails to correctly decode data, the receiver transmits information (negative acknowledgement, NACK) notifying of a decoding failure to a transmitter, so as to allow the transmitter to retransmit corresponding data in a physical layer. The receiver combines the data retransmitted by the transmitter with the data previously failed to be decoded, to improve data reception performance. Furthermore, if the receiver correctly decodes data, the receiver may transmit information (acknowledgement, ACK) notifying of a decoding success to the transmitter, so as to allow the transmitter to transmit new data.

Meanwhile, a new radio access technology (NR) system, which is a new 5G communication, is designed to enable various services to be freely multiplexed in time and frequency resources, and accordingly, waveform, numerology, reference signals, etc. may be dynamically or freely allocated according to the needs of a corresponding service. The types of services supported in the 5G or NR system may be divided into categories, such as enhanced mobile broadband (eMBB), massive machine type communications (mMTC), and ultra-reliable and low-latency communications (URLLC). eMBB is a service aiming for high-speed transmission of a large amount of data, mMTC is a service aiming for terminal power minimization and access by multiple terminals, and URLLC is a service aiming for high reliability and low latency. Different requirements may be applied according to a service type applied to a terminal.

In the disclosure, the terms are defined in consideration of the functions, and the meaning of the terms may vary according to the intention of a user or operator, convention, or the like. Therefore, the definitions of the terms should be made based on the contents throughout the specification. Hereinafter, a base station is a subject configured to perform resource allocation to a terminal, and may be at least one of a gNode B (gNB), an eNode B (eNB), a Node B, a base station (BS), a wireless access unit, a base station controller, or a node on a network. A terminal may include a user equipment (UE), a mobile station (MS), a cellular phone, a smartphone, a computer, or a multimedia system capable of a communication function. Hereinafter, an NR system is explained as an example in the disclosure. However, the disclosure is not limited thereto, and embodiments may be also applied to various communication systems having similar technical backgrounds or channel types. In addition, an embodiment of the disclosure may be also applied to another communication system through partial modification without departing from the scope of the disclosure through a determination of a person skilled in the art.

In the disclosure, the conventionally used terms "physical channel" and "signal" may be used together with data or a control signal. For example, a PDSCH is a physical channel through which data is transmitted, but may be called data in the disclosure. That is, PDSCH transmission or reception may be understood as data transmission or reception.

In the disclosure, higher signaling (or may be used together with a higher signal, a higher layer signal, or a higher layer signaling) is a signal transfer method in which a signal is transferred to a terminal by a base station by using a physical layer downlink data channel, or is transferred to a base station by a terminal by using a physical layer uplink data channel. The higher signaling may be referred to as RRC signaling or a medium access control (MAC) control element (CE).

Recently, as studies on a 5G communication system are conducted, various methods for scheduling communication with a terminal are discussed. Accordingly, a method for efficient scheduling and data transmission or reception considering the characteristics of the 5G communication system is required. Therefore, in order to provide a user with multiple services in a communication system, a method and a device using same, by which each of the services is providable in the same time interval according to the characteristics of a corresponding service, are required.

A terminal may receive separate control information from a base station so as to transmit or receive data to or from the base station. However, in a case of periodically generated traffic or a service type requiring low latency and/or high reliability, it may be possible to transmit or receive data without the separate control information. This transmission method is called a configured grant (may be used together with grant-free or configured scheduling)-based data transmission method in the disclosure. A method of, after receiving data transmission resource configuration and relevant information configured through control information, receiving or transmitting data is called a first signal transmission or reception type. A method of transmitting or receiving data, based on previously configured information without control information is called a second signal transmission or reception type. For the second signal transmission or reception type, a previously configured resource region periodically exists. These regions may be configured by an uplink (UL) type 1 grant, which is a method in which only a higher signal is used, and an uplink (UL) type 2 grant (or semi-persistent scheduling (SPS)) in which a combination of a higher signal and a L1 signal (i.e., downlink control information, DCI) is used. In a case of the UL type 2 grant (or SPS), a part of information is determined based on a higher signal, and the remaining information, such as whether data is actually transmitted, is determined based on a L1 signal. The L1 signal may be generally classified into a signal indicating activation of resources configured as a higher configuration, and a signaling indicating release of the activated resources.

The disclosure includes a method of, in a case where a DL SPS transmission period has aperiodicity or is smaller than one slot, determining a semi-static HARQ-ACK codebook and a dynamic HARQ-ACK codebook corresponding to the case, and a method of transmitting HARQ-ACK information corresponding thereto.

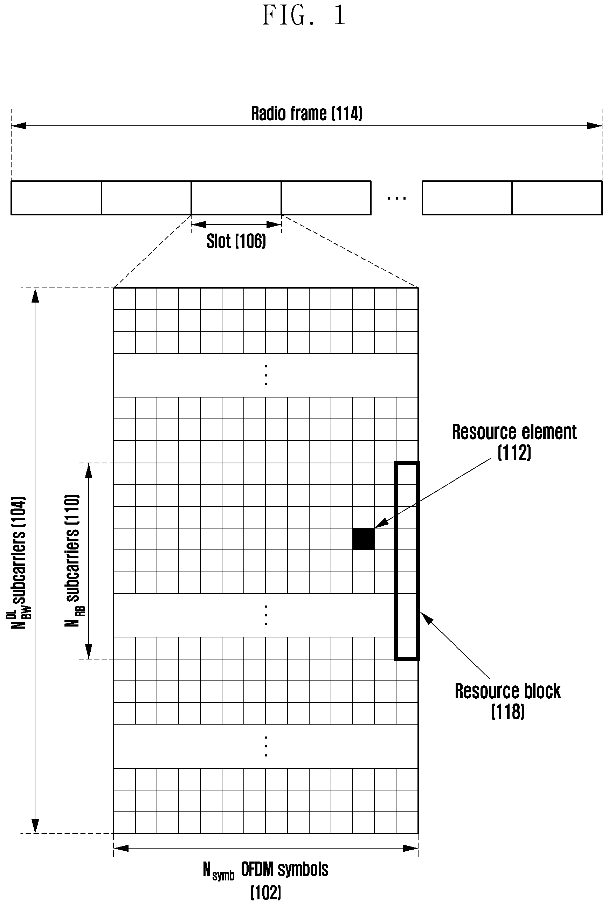

FIG. 1 is a diagram illustrating a transmission structure in a time-frequency domain that is a wireless resource region of a 5G or NR system according to an embodiment of the disclosure.

Referring to FIG. 1, in the wireless resource region, the horizontal axis indicates a time domain and the vertical axis indicates a frequency domain. In the time domain, the minimum transmission unit is an OFDM symbol, and N_{symb} number of OFDM symbols 122 constitute one slot 126. The length of a subframe may be defined as 1.0 ms, and the length of a radio frame 114 may be defined as 10 ms. In the frequency domain, the minimum transmission unit is a subcarrier, and the bandwidth of the entire system transmission band may be configured by a total of N_{BW} subcarriers 124. However, the above specific numerical values may be variably applied according to a system.

In the time-frequency resource region, the basic unit is a resource element (RE) 112, which may be represented by an OFDM symbol index and a subcarrier index. A resource block (RB) 108 may be defined as N_{RB} number of consecutive subcarriers 110 in the frequency domain.

Generally, the minimum transmission unit of data is an RB unit. Generally, in a 5G or NR system, N_{symb} may be equal to 14, N_{RB} may be equal to 12, and N_{BW} may be proportional to the bandwidth of the system transmission band. A data rate increases in proportion to the number of RBs scheduled to a terminal. In the 5G or NR system, in a case of a FDD system operating the uplink and the downlink by distinguishing them according to frequency, a downlink transmission bandwidth and an uplink transmission bandwidth may be different from each other. A channel bandwidth indicates an RF bandwidth corresponding to a system transmission bandwidth. Table 1 below shows the correlation between a channel bandwidth and a system transmission bandwidth defined in a LTE system, which is 4th generation wireless communication before a 5G or NR system. For example, an LTE system having a 10 MHz channel bandwidth has a transmission bandwidth configured by 50 RBs.

**[Table 1]**

| | | | | | | |
|---|---|---|---|---|---|---|
| Channel bandwidth BW_{Channel} [MHz] | 1.4 | 3 | 5 | 10 | 15 | 20 |
| Transmission bandwidth configuration NRB | 6 | 15 | 25 | 50 | 75 | 100 |

A 5G or NR system may employ a wider channel bandwidth than the channel bandwidths of LTE present in Table 1. Table 2 shows the correlation between a system transmission bandwidth, a channel bandwidth, and subcarrier spacing (SCS) in a 5G or NR system.

**[Table 2]**

| | SCS [kHz] | Channel bandwidth BW_{Channel} [MHz] | | | | | | | | | |
|---|---|---|---|---|---|---|---|---|---|---|---|
| | | 5 | 10 | 15 | 20 | 25 | 40 | 50 | 60 | 80 | 100 |
| Maximum transmission bandwidth N_{RB} | 15 | 25 | 52 | 79 | 106 | 133 | 216 | 270 | N.A. | N.A. | N.A. |
| | 30 | 11 | 24 | 38 | 51 | 65 | 106 | 133 | 162 | 217 | 273 |
| | 60 | N.A. | 11 | 18 | 24 | 31 | 51 | 65 | 79 | 107 | 135 |

In a 5G or NR system, scheduling information for downlink data or uplink data is transferred from a base station to a terminal through downlink control information (hereinafter, "DCI"). DCI is defined according to various formats, and each of the formats may represent whether the DCI is scheduling information (a UL grant) on uplink data or scheduling information (a DL grant) on downlink data, whether the DCI is compact DCI including control information having a small size, whether spatial multiplexing using multiple antennas is applied, whether the DCI is DCI used for power control, etc. For example, DCI format 1_1, which is scheduling control information (a DL grant) on downlink data, may include one of the pieces of control information described below. - Carrier indicator: This indicates a frequency carrier on which transmission is performed.
- DCI format indicator: This is an indicator for distinguishing whether corresponding DCI is used for downlink or uplink.
- Bandwidth part (BWP) indicator: This indicates a BWP in which transmission is performed.
- Frequency domain resource allocation: This indicates an RB in the frequency domain, which is allocated for data transmission. A represented resource is determined according to a system bandwidth and a resource allocation scheme.
- Time domain resource allocation: This indicates an OFDM symbol of a slot on which a data-related channel is to be transmitted.
- VRB-to-PRB mapping: This indicates a method by which a virtual RB (hereinafter, VRB) index and a physical RB (hereinafter, PRB) index are to be mapped.
- Modulation and coding scheme (hereinafter, MCS): This indicates a modulation scheme and a coding rate which have been used for data transmission. That is, the modulation and coding scheme may indicate a coding rate value capable of informing of a transport block size (TBS) and channel coding information, together with information relating to whether the modulation scheme corresponds to quadrature phase shift keying (QPSK), a 16 quadrature amplitude modulation (QAM), a 64 QAM, or a 256 QAM.
- Code block group (CBG) transmission information: This indicates, when CBG retransmission is configured, information on a CBG to be transmitted.
- HARQ process number: This indicates a process number of HARQ.
- New data indicator: This indicates whether transmission is a HARQ initial transmission or retransmission.
- Redundancy version: This indicates a redundancy version of a HARQ.
- Physical uplink control channel (PUCCH) resource indicator: This indicates a PUCCH resource on which ACK/NACK information for downlink data is transmitted.
- PDSCH-to-HARQ feedback timing indicator: This indicates a slot in which ACK/NACK information for downlink data is transmitted.
- Transmit power control (TPC) command for PUCCH: This indicates a transmit power control command for a PUCCH which is an uplink control channel.

In a case of PUSCH transmission, the time domain resource assignment may be transferred by information on a slot in which the PUSCH is transmitted, S indicating the position of the starting OFDM symbol of the slot, and L indicating the number of OFDM symbols to which the PUSCH is mapped. S described above may indicate a position relative to the start of the slot, L may indicate the number of consecutive OFDM symbols, and S and L may be determined from a start and length indicator value (SLIV) defined as below.

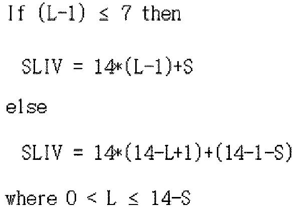

Generally, in a 5G or NR system, a table including, in one row, a SLIV value, a PUSCH mapping type, and information of a slot on which the PUSCH is transmitted, may be configured through RRC configuration. Thereafter, the time domain resource assignment of DCI may indicate an index value in a configured table, whereby a base station transfers, to a terminal, a SLIV value, a PUSCH mapping type, and information on a slot in which a PUSCH is transmitted. This method is also applied to PDSCH.

Specifically, if a base station indicates, to a terminal, m which is the index of a time resource assignment field included in DCI scheduling a PDSCH, this indication informs of a combination of DRMS type A position information, PDSCH mapping type information, slot index K0, data resource starting symbol S, and data resource assignment length L, the combination corresponding to m+1 in a table showing time domain resource assignment information. For example, Table 3 below is a table including pieces of normal cyclic prefix-based PDSCH time domain resource assignment information.

**[Table 3]**

| Row index | *dmrs-TypeA-Position* | PDSCH mapping type | *K₀* | *S* | *L* |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 23 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

In Table 3, dmrs-typeA-Position is a field indicating the position of a symbol transmitting a DMRS in one slot indicated by a system information block (SIB) which is one of pieces of terminal-common control information. An available value of the field is 2 or 3. If the number of symbols configuring one slot is a total of 14, and the first symbol index is 0, 2 implies the third symbol, and 3 implies the fourth symbol. In Table 3, PDSCH mapping type is information notifying of the position of a DMRS in a scheduled data resource region. If PDSCH mapping type is A, a DMRS is always transmitted or received at a symbol position determined by dmrs-typeA-Position regardless of an assigned data time domain resource. If PDSCH mapping type is B, a DMRS is always transmitted or received at the position of the first symbol in an assigned data time domain resource. In other words, PDSCH mapping type B does not use dmrs-typeA-Position information.

In Table 3, K₀ implies the offset between the index of a slot to which a physical downlink control channel (PDCCH) transmitting DCI belongs and the index of a slot to which a PDSCH or PUSCH scheduled by the DCI belongs. For example, if the slot index of a PDCCH is n, the slot index of a PDSCH or PUSCH scheduled by DCI of the PDCCH is n+K₀. In Table 3, S implies the index of the starting symbol of a data time domain resource in one slot. The range of an available S value is 0 to 13 based on a normal cyclic prefix. In Table 3, L is the length of a data time domain resource interval in one slot. The range of an available L value is 1 to 14.

In a 5G or NR system, a PUSCH mapping type is defined to be type A and type B. In PUSCH mapping type A, the first OFDM symbol among DMRS OFDM symbols is positioned at the second or third OFDM symbol in a slot. In PUSCH mapping type B, the first OFDM symbol among DMRS OFDM symbols is positioned at the first OFDM symbol of a time domain resource assigned for PUSCH transmission. The PUSCH time domain resource assignment method described above is applicable identically to PDSCH time domain resource assignment.

DCI may be transmitted on a PDCCH (or control information, hereinafter, PDCCH may be used together with control information), which is a downlink physical control channel, through a channel coding and modulation process. Generally, DCI is scrambled with a particular radio network temporary identifier (a RNTI or a terminal identifier) independently for each terminal, and then a cyclic redundancy check (CRC) is added to the DCI. The DCI is channel-coded, and then is configured to be an independent PDCCH to be transmitted. A PDCCH is mapped to a control resource set (CORESET) configured for a terminal, and then is transmitted.

Downlink data may be transmitted on a PDSCH, which is a physical channel for downlink data transmission. A PDSCH may be transmitted after a control channel transmission interval, and scheduling information relating to a specific mapping position in the frequency domain, a modulation scheme, etc. is determined based on DCI transmitted through a PDCCH.

Through MCS among pieces of control information configuring DCI, a base station notifies a terminal of a modulation scheme applied to a PDSCH to be transmitted, and the size (TBS) of data to be transmitted. In an embodiment, MCS may be configured by 5 bits or larger or smaller. A TBS corresponds to the size of data (a transport block, TB), which a base station is to transmit, before channel coding for error correction is applied to the data.

In the disclosure, a transport block (TB) may include a MAC header, a MAC CE, one or more MAC service data units (SDUs), and padding bits. In addition, a TB may indicate the unit of data transferred from an MAC layer to a physical layer, or an MAC protocol data unit (PDU).

A modulation scheme supported by a 5G or NR system is QPSK, 16 QAM, 64 QAM, and 256 QAM, and the modulation orders (Qₘ) of them correspond to 2, 4, 6, and 8, respectively. That is, 2 bits per symbol may be transmitted in QPSK modulation, 4 bits per OFDM symbol may be transmitted in 16 QAM modulation, 6 bits per symbol may be transmitted in 64 QAM modulation, and 8 bits per symbol may be transmitted in 256 QAM modulation.

If a PDSCH is scheduled by the DCI, HARQ-ACK information indicating whether decoding of the PDSCH succeeds or fails is transmitted from a terminal to a base station through a PUCCH. Such HARQ-ACK information is transmitted in a slot indicated by a PDSCH-to-HARQ feedback timing indicator included in DCI scheduling a PDSCH, and a value mapped to each of PDSCH-to-HARQ feedback timing indicators having 1 to 3 bits is configured by a higher layer signal as shown in Table 4. If a PDSCH-to-HARQ feedback timing indicator indicates k, a terminal transmits HARQ-ACK information after passage of k slots from slot n transmitting a PDSCH, that is, transmits the information in slot n+k.

**[Table 4]**

| **PDSCH-to-HARQ_feedback timing indicator** | | | **Number of slots k** |
|---|---|---|---|
| 1 bit | 2 bits | 3 bits | |
| '0' | '00' | '000' | 1^{st} value provided by *dl-DataToUL-ACK* |
| '1' | '01' | '001' | 2^{nd} value provided by *dl-DataToUL-ACK* |
| | '10' | '010' | 3^{rd} value provided by *dl-DataToUL-ACK* |
| | '11' | '011' | 4^{th} value provided by *dl-DataToUL-ACK* |
| | | '100' | 5^{th} value provided by *dl-DataToUL-ACK* |
| | | '101' | 6^{th} value provided by *dl-DataToUL-ACK* |
| | | '110' | 7^{th} value provided by *dl-DataToUL-ACK* |
| | | '111' | 8^{th} value provided by *dl-DataToUL-ACK* |

If DCI format 1_1 scheduling a PDSCH does not include a PDSCH-to-HARQ feedback timing indicator, a terminal transmits HARQ-ACK information in slot n+k according to a k value configured through higher layer signaling. When HARQ-ACK information is transmitted on a PUCCH, a terminal transmits the information to a base station by using a PUCCH resource determined based on a PUCCH resource indicator included in DCI scheduling a PDSCH. The ID of the PUCCH resource mapped to the PUCCH resource indicator may be configured through higher layer signaling.

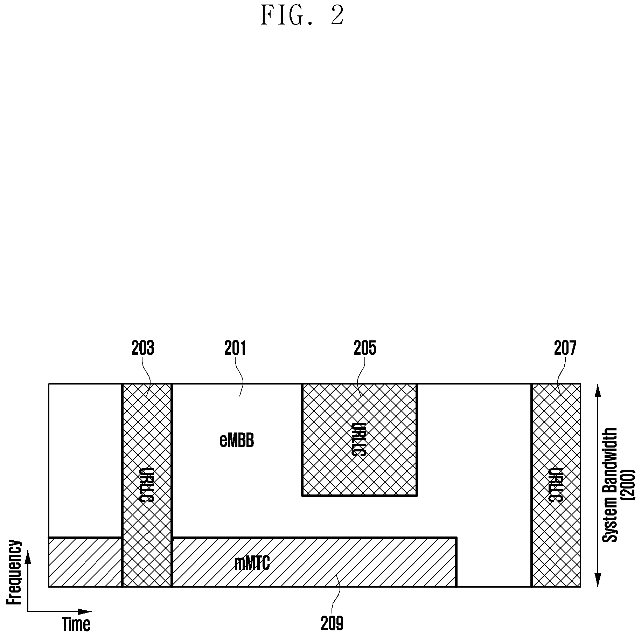

FIG. 2 is a diagram illustrating an example of allocating pieces of data for eMBB, URLLC, and mMTC in a time-frequency resource domain in a 5G or NR system according to an embodiment of the disclosure.

Referring to FIG. 2, data for eMBB, URLLC, and mMTC may be allocated in an entire system frequency band 200. If, while eMBB data 201 and mMTC data 209 are allocated and transmitted in a particular frequency band, URLLC data 203, 205, and 207 occur and are required to be transmitted, a transmitter may empty parts to which the eMBB data 201 and mMTC data 209 have already been assigned, or may not transmit the eMBB data and mMTC data to transmit the URLLC data 203, 205, and 207. Among the above services, URLLC is required to reduce a latency time, and thus URLLC data may be assigned, for transmission, to a part of a resource to which eMBB or mMTC data is allocated. When URLLC data is additionally assigned to and transmitted on a resource to which eMBB data is assigned, the eMBB data may not be transmitted in the overlapped time-frequency resource, and thus the transmission performance of eMBB data may be degraded. That is, eMBB data transmission may fail due to URLLC assignment.

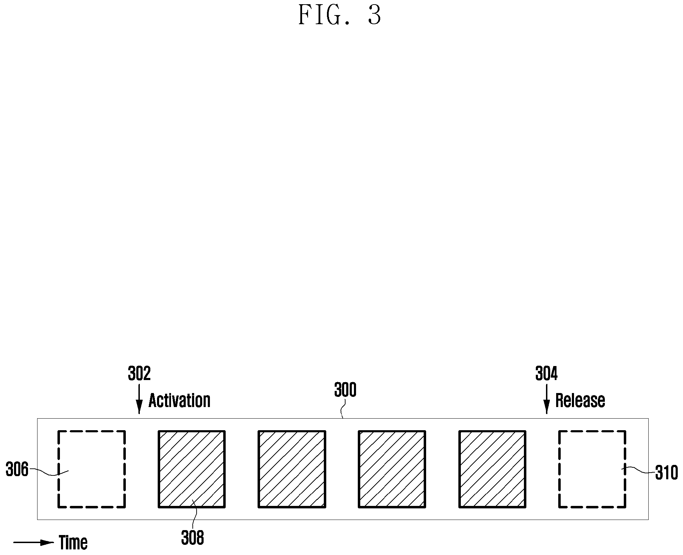

FIG. 3 is a diagram illustrating a grant-free transmission or reception operation according to an embodiment of the disclosure.

A terminal is a first signal transmission or reception type in which downlink data is received from a base station according to information configured by only a higher signal, and a second signal transmission or reception type in which downlink data is received according to transmission configuration information indicated by a higher signal and a L1 signal. In the disclosure, a terminal operation method for the second signal transmission or reception type will be mainly described. In the disclosure, SPS that is the second signal type for downlink data reception may imply grant-free PDSCH transmission in downlink. In DL SPS, a terminal may receive grant-free PDSCH transmission through a higher signal configuration and additional configuration information indicated by DCI.

DL SPS means downlink semi-persistent scheduling, and corresponds to a method in which a base station periodically transmits or receives, to or from a terminal, downlink data information, based on information configured by higher signaling without particular downlink control information scheduling. The DL SPS may be applied to VoIP or a periodically generated traffic situation. In addition, a resource configuration for DL SPS is periodic, but actually generated data may be aperiodic. In this case, a terminal does not know whether actual data occurs in the periodically configured resources, and may be able to perform the following two types of operations.
- Method 1-1: The terminal transmits, to the base station, HARQ-ACK information relating to a result of demodulation/decoding of data received in a periodically configured DL SPS resource region in an uplink resource region corresponding to the corresponding resource region.
- Method 1-2: When detection of a signal for at least a DMRS or data is successful in a periodically configured DL SPS resource region, the terminal transmits, to the base station, HARQ-ACK information in an uplink resource region corresponding to the corresponding resource region with respect to a result of demodulation/decoding of the received data.
- Method 1-3: When decoding/demodulation of a periodically configured DL SPS resource region is successful (i.e., ACK occurred), the terminal transmits, to the base station, HARQ-ACK information relating to a result of demodulation/decoding of received data in an uplink resource region corresponding to the corresponding resource region.

According to method 1-1, even if the base station actually does not transmit downlink data in a DL SPS resource region, the terminal may always transmit HARQ-ACK information in an uplink resource region corresponding to the DL SPS resource region.

According to method 1-2, the terminal does not know when the base station transmits data through a DL SPS resource region. Therefore, the terminal may transmit HARQ-ACK information in a situation where the terminal knows whether data is transmitted or received, such as when the terminal succeeds in DMRS detection or CRC detection is successful.

According to method 1-3, only when the terminal succeeds in data demodulation/decoding, the terminal transmits HARQ-ACK information in an uplink resource region corresponding to a corresponding DL SPS resource region.

The terminal may be able to always support only one of the described methods, or may be able to support two or more of them. The terminal may be able to select one of the methods by using a 3GPP standard specification or a higher signal. For example, in a case where method 1-1 is indicated by a higher signal, the terminal may transmit HARQ-ACK information for corresponding DL SPS, based on method 1-1.

Alternatively, it is also possible that one method is selected according to DL SPS higher configuration information. For example, in DL SPS higher configuration information, if a transmission period corresponds to n slots or more, the terminal may apply method 1-1, and otherwise, the terminal may apply method 1-3. Although a transmission period is used as an example in the above example, the method is applicable to an applied MCS table, DMRS configuration information, resource configuration information, and the like.

A terminal may receive downlink data in a downlink resource region configured through higher signaling. Activation or release of the downlink resource region configured through higher signaling may be performed by L1 signaling.

FIG. 3 illustrates an operation related to DL SPS according to an embodiment of the disclosure. A terminal may receive the following pieces of DL SPS configuration information through a higher signal.
- Periodicity: A DL SPS transmission period
- nrofHARQ-Processes: The number of HARQ processes configured for DL SPS
- n1PUCCH-AN: HARQ resource configuration information for DL SPS
- mcs-Table: MCS table configuration information applied to DL SPS

In the disclosure, all the pieces of DL SPS configuration information are configurable for each primary cell (Pcell) or secondary cell (Scell), and are also configurable for each frequency band interval (bandwidth part (BWP)). Furthermore, one or more DL SPSs are configurable for each BWP and each particular cell.

As illustrated in FIG. 3, a terminal may determine grant-free transmission or reception configuration information 300 through higher signal reception for a DL SPS. The terminal may transmit or receive data in a configured resource region 308 after receiving DCI indicating activation of the DL SPS (as indicated by reference numeral 302), and is unable to transmit or receive data in a resource region 306 before receiving the DCI. Moreover, the terminal is unable to receive data in a resource region 310 after receiving DCI indicating release of the DL SPS (as indicated by reference numeral 304).

If the following two conditions are both satisfied so as to activate or release SPS scheduling, the terminal may verify a DL SPS assignment PDCCH.
- Condition 1: A CRC bit of a DCI format transmitted in the PDCCH is scrambled with a CS-RNTI configured through higher signaling
- Condition 2: A new data indicator (NDI) field for an activated transport block is configured as 0.

If a part of fields configuring a DCI format transmitted in the DL SPS assignment PDCCH is the same as that present in [Table 5] or [Table 6], the terminal may determine that information in the DCI format corresponds to valid activation or valid release of DL SPS. For example, when a DCI format including information shown in [Table 5] is detected, the terminal may determine that a DL SPS has been activated. As another example, when a DCI format including information shown in [Table 6] is detected, the terminal may determine that a DL SPS has been released.

If a part of fields configuring a DCI format transmitted in the DL SPS assignment PDCCH is not the same as that present in [Table 5] (special field configuration information for activating DL SPS) or [Table 6] (special field configuration information for releasing DL SPS), the terminal may determine that the DCI format has been detected as a CRC that does not match.

**[Table 5]**

| | DCI format 1_0 | DCI format 1_1 |
|---|---|---|
| HARQ process number | set to all '0's | set to all '0's |
| Redundancy version | set to '00' | For the enabled transport block: set to '00' |

**[Table 6]**

| | DCI format 1_0 |
|---|---|
| HARQ process number | set to all '0's |
| Redundancy version | set to '00' |
| Modulation and coding scheme | set to all '1's |
| Resource block assignment | set to all '1's |

When a PDSCH is received without PDCCH reception, or a PDCCH indicating SPS PDSCH release is received, the terminal may generate a HARQ-ACK information bit corresponding to the received PDSCH or PDCCH. In addition, at least in Rel-15 NR, the terminal may not expect to transmit a piece(s) of HARQ-ACK information for reception of two or more SPS PDSCHs, in one PUCCH resource. In other words, at least in Rel-15 NR, the terminal may transmit only HARQ-ACK information for reception of one SPS PDSCH in one PUCCH resource.

DL SPS may also be configured in a PCell and an SCell. Parameters which are configurable by DL SPS higher signaling are as below.
- Periodicity: A transmission period of DL SPS
- nrofHARQ-processes: The number of HARQ processes which are configurable for DL SPS
- n1PUCCH-AN: A PUCCH HARQ resource for DL SPS, a base station configures the resource by using a PUCCH format 0 or 1.

Tables 5 and 6 may include fields that are configurable in a situation where only one DL SPS is configurable for each cell and each BWP. In a situation where multiple DL SPSs are configured for each cell and each BWP, a DCI field for activating (or releasing) each DL SPS resource may vary. The disclosure provides a method for solving such a situation.

In the disclosure, not all the DCI formats mentioned in [Table 5] and [Table 6] are used to activate or release a DL SPS resource. For example, DCI format 1_0 and DCI format 1_1 used for scheduling a PDSCH are used to activate a DL SPS resource. For example, DCI format 1_0 used for scheduling a PDSCH is used to release a DL SPS resource.

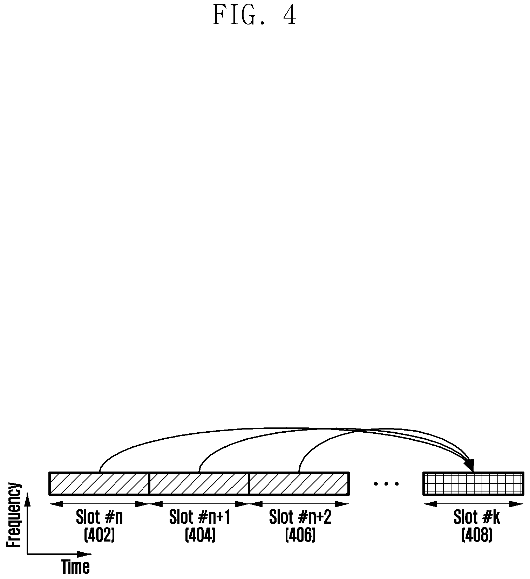

FIG. 4 is a diagram illustrating a method of configuring a semi-static HARQ-ACK codebook in an NR system.

In a situation where the number of HARQ-ACK PUCCHs which a terminal is able to transmit in one slot is limited to one, when semi-static HARQ-ACK codebook information is received through a higher configuration, the terminal reports HARQ-ACK information for PDSCH reception and SPS PDSCH release in a HARQ-ACK codebook in a slot indicated by the value of a PDSCH-to-HARQ_feedback timing indicator included in DCI format 1_0 or DCI format 1_1. The terminal reports a HARQ-ACK information bit value as NACK in a HARQ-ACK codebook in a slot not indicated by a PDSCH-to-HARQ_feedback timing indicator field in DCI format 1_0 or DCI format 1_1. If the terminal reports only HARQ-ACK information for one SPS PDSCH release or one PDSCH reception in M_{A,C} occasions for candidate PDSCH reception, and the reporting is scheduled by DCI format 1_0 including information indicating that a counter DACI field is 1 in a Pcell, the terminal determines one HARQ-ACK codebook for the SPS PDSCH release or the PDSCH reception.

In other cases, a HARQ-ACK codebook determination method according to the following methods is employed.

When a set of PDSCH reception candidate occasions in serving cell c is M_{A,c}, M_{A,c} may be obtained through the [pseudo-code 1] stages below.

### [pseudo-code 1 start]

- Step 1: Initialize j to 0, and initialize M_{A,c} to an empty set. Initialize k, which is a HARQ-ACK transmission timing index, to 0.
- Step 2: Configure R as a set of rows of a table including information on a slot to which a PDSCH is mapped, starting symbol information, and information on the number or length of symbols. If a PDSCH-available mapping symbol indicated by each value of R is configured to a UL symbol according to DL and UL configurations provided as a higher configuration, remove a corresponding row from R.
- Step 3-1: If the terminal may receive one unicast PDSCH in one slot and R is not an empty set, add one PDSCH to set M_{A,c}.
- Step 3-2: If the terminal is able to receive two or more unicast PDSCHs in one slot, count the number of PDSCHs allocatable in different symbols from the calculated R, and add the counted number of PDSCHs to M_{A,c}.
- Step 4: Increase k by 1 and restart from step 2.

### [pseudo-code 1 end]

If FIG. 4 is used as an example with respect to pseudo-code 1 described above, in order to perform HARQ-ACK PUCCH transmission in slot #k 408, all slot candidates for which a PDSCH-to-HARQ-ACK timing capable of indicating slot #k 408 is possible may be considered. In FIG. 4, it is assumed that HARQ-ACK transmission in slot #k 408 is possible by a PDSCH-to-HARQ-ACK timing combination in which only PDSCHs scheduled in slot #n 402, slot #n+1 404, and slot #n+2 406 are possible. In consideration of time domain resource configuration information of a PDSCH which is schedulable in each of the slots 402, 404, and 406, and information indicating whether a symbol in a slot is uplink or downlink, the number of PDSCHs which are maximally schedulable for each slot is derived. For example, if two PDSCHs are maximally schedulable in the slot 402, three PDSCHs are maximally schedulable in the slot 404, and two PDSCHs are maximally schedulable in the slot 406, a maximum number of PDSCHs included in a HARQ-ACK codebook transmitted in the slot 408 is a total of 7. This is called the cardinality of a HARQ-ACK codebook.

In a particular slot, step 3-2 will be described through Table 7 below (default PDSCH time domain resource allocation A for normal CP).

**[Table 7]**

| Row index | dmrs-TypeA-Position | PDSCH mapping type | K₀ | S | L | Ending | Order |
|---|---|---|---|---|---|---|---|
| 1 | 2 | Type A | 0 | 2 | 12 | 13 | 1x |
| | 3 | Type A | 0 | 3 | 11 | 13 | 1x |
| 2 | 2 | Type A | 0 | 2 | 10 | 11 | 1x |
| | 3 | Type A | 0 | 3 | 9 | 11 | 1x |
| 3 | 2 | Type A | 0 | 2 | 9 | 10 | 1x |
| | 3 | Type A | 0 | 3 | 8 | 10 | 1x |
| 4 | 2 | Type A | 0 | 2 | 7 | 8 | 1x |
| | 3 | Type A | 0 | 3 | 6 | 8 | 1x |
| 5 | 2 | Type A | 0 | 2 | 5 | 6 | 1x |
| | 3 | Type A | 0 | 3 | 4 | 6 | 1x |
| 6 | 2 | Type B | 0 | 9 | 4 | 12 | 2x |
| | 3 | Type B | 0 | 10 | 4 | 13 | 3 |
| 7 | 2 | Type B | 0 | 4 | 4 | 7 | 1x |
| | 3 | Type B | 0 | 6 | 4 | 9 | 2 |
| 8 | 2,3 | Type B | 0 | 5 | 7 | 11 | 1x |
| 9 | 2,3 | Type B | 0 | 5 | 2 | 6 | 1x |
| 10 | 2,3 | Type B | 0 | 9 | 2 | 10 | 2x |
| 11 | 2,3 | Type B | 0 | 12 | 2 | 13 | 3x |
| 12 | 2,3 | Type A | 0 | 1 | 13 | 13 | 1x |
| 13 | 2.3 | Type A | 0 | 1 | 6 | 6 | 1x |
| 14 | 2,3 | Type A | 0 | 2 | 4 | 5 | 1 |
| 15 | 2,3 | Type B | 0 | 4 | 7 | 10 | 1x |
| 16 | 2,3 | Type B | 0 | 8 | 4 | 11 | 2x |

Table 7 is a time resource allocation table by which a terminal operates as a default before a time resource is allocated for the terminal through a separate RRC signal. For reference, a PDSCH time resource allocation value is determined by a dmrs-TypeA-Position which is a terminal-common RRC signal in addition to a row index value being separately indicated by RRC. In Table 7, the ending column and the order column are separately added for convenience of explanation, and the two columns may not actually exist. The ending column implies the ending symbol of a scheduled PDSCH, and the order column implies the position value of a code located in a particular codebook in a semi-static HARQ-ACK codebook. The table is applied to time resource allocation applied in DCI format 1_0 of a common search region of a PDCCH.

The terminal performs the following steps to calculate a magnitude number of PDSCHs that do not overlap in a particular slot, so as to determine a HARQ-ACK codebook.
* Step 1: Search for a PDSCH allocation value that is earliest ended in a slot among all rows in a PDSCH time resource allocation table. In Table 7, it may be noted that a row index of 14 is earliest ended. This is expressed by 1 in the order column. Other row indexes overlapping with a row index of 14 by at least one symbol are marked as 1x in the order column.
* Step 2: Search for a PDSCH allocation value which is earliest ended among the remaining row indexes which have not been marked in the order column. In Table 7, a row indicated by a row index of 7 and a dmrs-TypeA-Position value of 3 corresponds to the value. Other row indexes overlapping with the row index by at least one symbol are marked as 2x in the order column.
* Step 3: Increase and mark the order value while repeating step 2. For example, search for a PDSCH allocation value that is earliest ended among the row indexes which have not been in the order column in Table 7. In Table 7, a row indicated by a row index of 6 and a dmrs-TypeA-Position value of 3 corresponds to the value. Other row indexes overlapping with the row index by at least one symbol are marked as 3x in the order column.
* Step 4: When all the row indexes are marked with orders, end the procedure. The magnitude of a corresponding order corresponds to a maximum number of PDSCHs which are schedulable in a corresponding slot without time overlapping. Scheduling without time overlapping means that different PDSCHs are scheduled by TDM.

In the order column of Table 7, a maximum order value implies a HARQ-ACK codebook size of a corresponding slot, and an order value indicates a HARQ-ACK codebook point at which a HARQ-ACK feedback bit for a corresponding scheduled PDSCH is positioned. For example, a row index of 16 in Table 7 implies that a HARQ-ACK feedback bit exists in the second code position in a semi-static HARQ-ACK codebook, the size of which is 3. If a set of occasions for candidate PDSCH receptions in serving cell c is M_{A,c}, a terminal transmitting a HARQ-ACK feedback may determine M_{A,c} through the [pseudo-code 1] or [pseudo-code 2] steps. M_{A,c} may be used to determine the number of HARQ-ACK bits that the terminal is required to transmit. Specifically, a HARQ-ACK codebook may be configured by using the cardinality of a M_{A,c} set.

As another example, the considerations for determination of a semi-static HARQ-ACK codebook (or type 1 HARQ-ACK codebook) may be as below.

a) on a set of slot timing values *K*₁ associated with the active UL BWP
   - a) If the UE is configured to monitor PDCCH for DCI format 1_0 and is not configured to monitor PDCCH for DCI format 1_1 on serving cell c, *K*₁ is provided by the slot timing values {1, 2, 3, 4, 5, 6, 7, 8} for DCI format 1_0
   - b) If the UE is configured to monitor PDCCH for DCI format 1_1 for serving cell c, *K*₁ is provided by *dl-DaraToUL-ACK* for DCI format 1_1
b) or a set of row indexes *R* of a table that is provided either by a first set of row indexes of a table that is provided by *PDSCH-TimeDomainResourceAllocationList* in *PDSCH-ConfigCommon* or by Default PDSCH time domain resource allocation A [6, TS 38.214], or by the union of the first set of row indexes and a second set of row indexes, if provided by *PDSCH-TimeDomainResourceAllocationList* in *PDSCH-Config,* associated with the active DL BWP and defining respective sets of slot offsets *K*₀, start and length indicators *SLIV,* and PDSCH mapping types for PDSCH reception as described in [6, TS 38.214]
c) on the ratio 2*^{µ^{DL}-µ^{UL}}* between the downlink SCS configuration µ*_{DL}* and the uplink SCS configuration µ*_{UL}* provided by *subcarrierSpacing* in *BHP-Downlink* and *BWP-Uplink* for the active DL BWP and the active UL BWP, respectively
d) if provided, on *TDD-UL-DL-ConfigurationCommon* and *TDD-UL-DL-ConfigDedicated* as described in Subclause 11.1.

As another example, a pseudo-code for determination of a HARQ-ACK codebook may be as below.

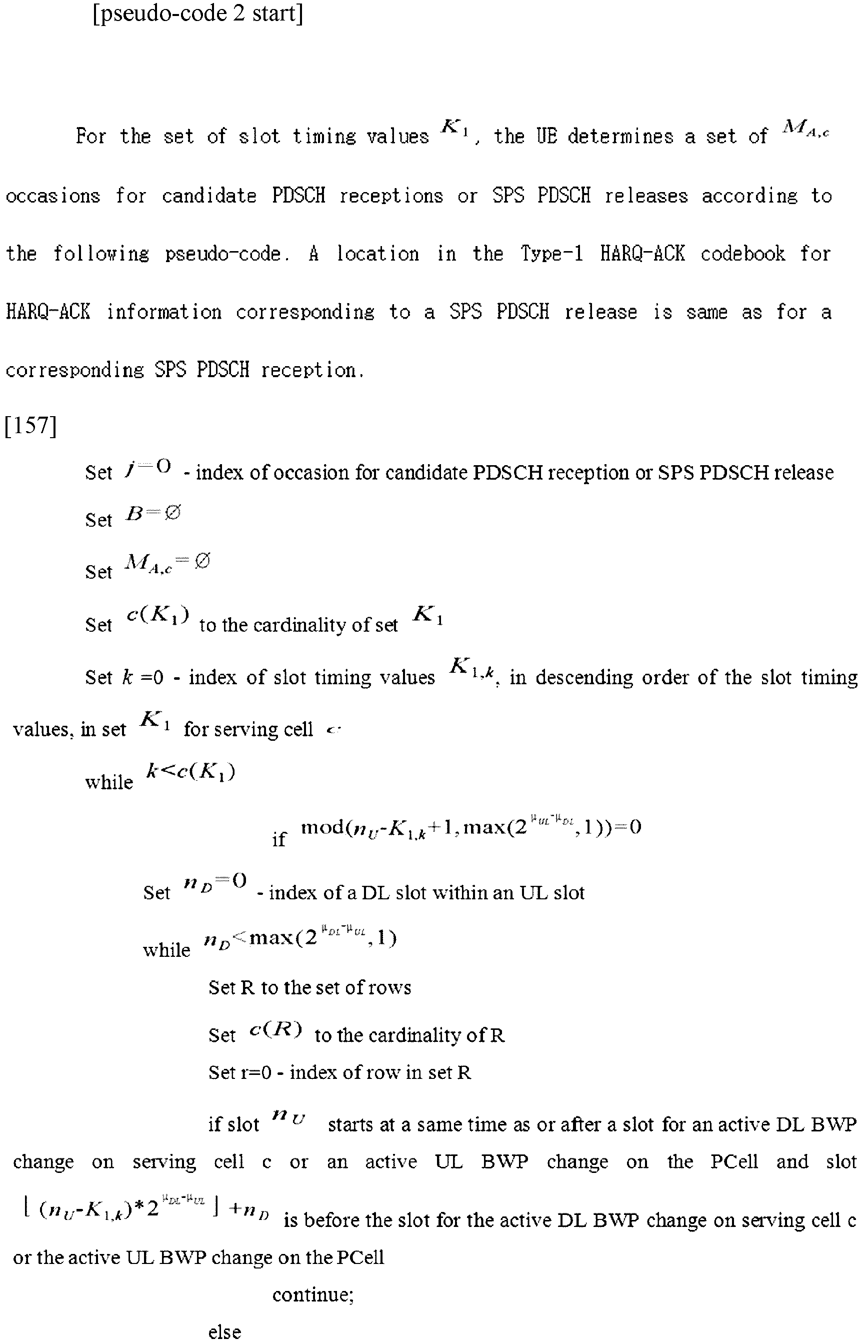

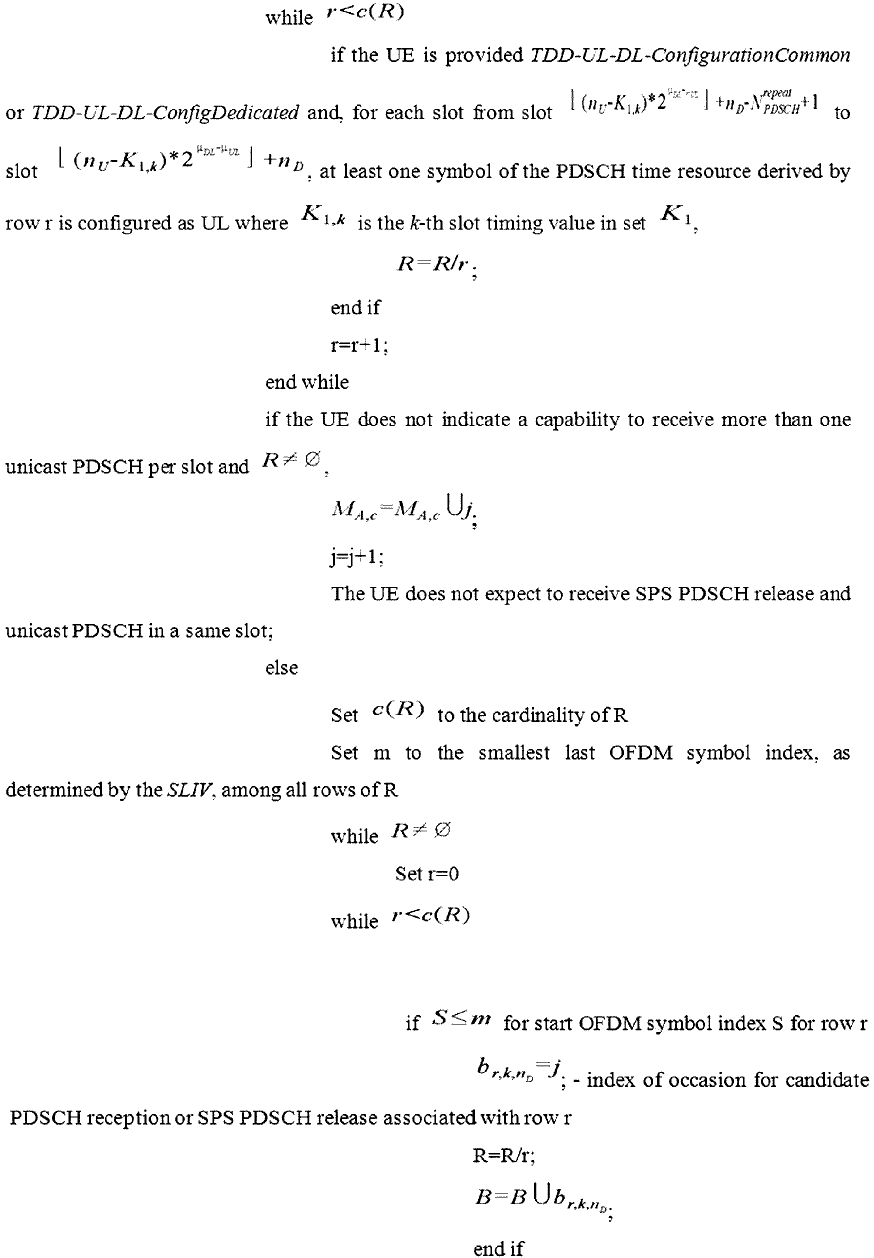

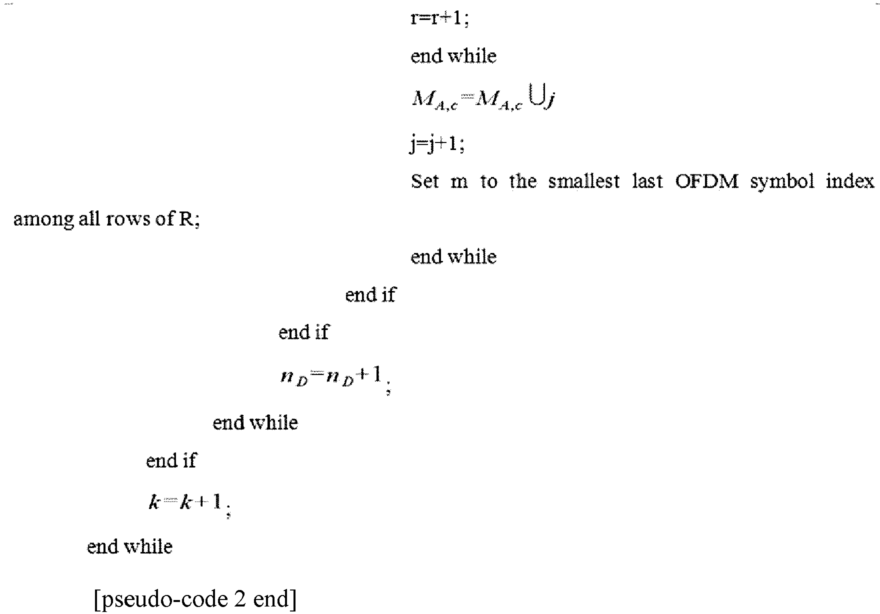

In pseudo-code 2, the position of a HARQ-ACK codebook containing HARQ-ACK information for DCI indicating DL SPS release is based on the position at which a DL SPS PDSCH is received. For example, in a case where the starting symbol of transmitting a DL SPS PDSCH is transmitted is the fourth OFDM symbol in a slot, and the length thereof is 5 symbols, in relation to HARQ-ACK information containing a DL SPS release indicating release of a corresponding SPS, it is assumed that a PDSCH starting from the fourth OFDM symbol of a slot in which the DL SPS release is transmitted and having a length of 5 symbols is mapped, and HARQ-ACK information corresponding to the PDSCH is determined through a PDSCH-to-HARQ-ACK timing indicator and a PUSCH resource indicator included in control information indicating the DL SPS release. As another example, in a case where the starting symbol at which a DL SPS PDSCH is transmitted is the fourth OFDM symbol in a slot, and the length thereof is 5 symbols, in relation to HARQ-ACK information containing a DL SPS release indicating release of a corresponding SPS, it is assumed that a PDSCH starting from the fourth OFDM symbol of a slot indicated by time domain resource allocation (TDRA) of DCI which is the DL SPS release and having a length of 5 symbols is mapped, and HARQ-ACK information corresponding to the PDSCH is determined through a PDSCH-to-HARQ-ACK timing indicator and a PUSCH resource indicator included in control information indicating the DL SPS release.

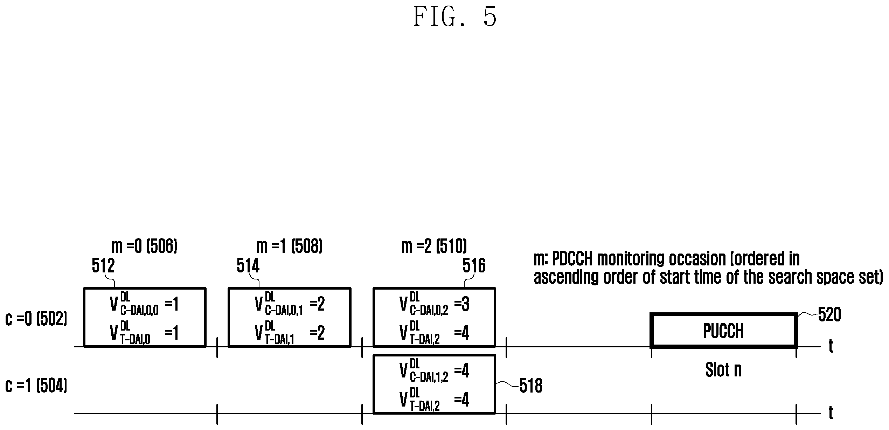

FIG. 5 is a diagram illustrating a method of configuring a dynamic HARQ-ACK codebook in an NR system.

A terminal transmits HARQ-ACK information transmitted in one PUCCH in slot n, based on a PDSCH-to-HARQ_feedback timing value for PUCCH transmission of HARQ-ACK information in slot n for PDSCH reception or SPS PDSCH release, and a K0 that is transmission slot position information of a PDSCH scheduled by DCI format 1_0 or 1_1. Specifically, in order to transmit the above HARQ-ACK information, the terminal determines a HARQ-ACK codebook of a PUCCH transmitted in a slot determined by a PDSCH-to-HARQ_feedback timing and K0, based on a DAI included in DCI indicating PDSCH or SPS PDSCH release.

The DAI is configured by a counter DAI and a total DAI. The counter DAI is information indicating the position of HARQ-ACK information in a HARQ-ACK codebook, which corresponds to a PDSCH scheduled by DCI format 1_0 or DCI format 1_1. Specifically, a counter DAI value in DCI format 1_0 or 1_1 indicates an accumulative value of PDSCH reception or SPS PDSCH release scheduled by DCI format 1_0 or 1_1 in particular cell c. The above accumulative value is configured based on a PDCCH monitoring occasion in which the scheduled DCI exists and a serving cell.

The total DAI is a value indicating a HARQ-ACK codebook size. Specifically, a total DAI value implies a total number of PDSCHs or SPS PDSCH releases which are scheduled before a time point at which DCI is scheduled. The total DAI is a parameter used in a case where, in a carrier aggregation (CA) situation, HARQ-ACK information for serving cell c also includes HARQ-ACK information for a PDSCH scheduled in other cells including serving cell c. In other words, there is no total DAI parameter in a system operated by one cell.

An example of an operation relating to the DAI is illustrated in FIG. 5. FIG. 5 shows that, in a situation where two carriers are configured for a terminal, when the terminal transmits a HARQ-ACK codebook selected based on a DAI, through a PUCCH 520 in an n-th slot of carrier 0 502, the values of a counter DAI (C-DAI) and a total DAI (T-DAI) indicated by DCI discovered in each PDCCH monitoring occasion configured for each carrier are changed.

First, DCI discovered in an occasion 506 indicated by m=0 has a C-DAI of 1 and a T-DAI of 1 (as indicated by reference numeral 512). DCI discovered in an occasion 508 indicated by m=1 has a C-DAI of 2 and a T-DAI of 2 (as indicated by reference numeral 514). DCI discovered in an occasion 510 indicated by m=2 in carrier 0 (c=0, 502) has a C-DAI of 3 (as indicated by reference numeral 516). DCI discovered in an occasion 510 indicated by m=2 in carrier 1 (c=1, 504) has a C-DAI of 4 (as indicated by reference numeral 518). If carriers 0 and 1 are scheduled in the same monitoring occasion, all the T-DAIs are indicated by 4.

FIG. 4 and FIG. 5 illustrate a method of determining a HARQ-ACK codebook in a situation where only one PUCCH containing HARQ-ACK information is transmitted in one slot. This method corresponds to mode 1. As an example of a method in which one PUCCH transmission resource is determined in one slot, when PDSCHs scheduled in different pieces of DCI are multiplexed into one HARQ-ACK codebook in the same slot and are then transmitted, a PUCCH resource selected for HARQ-ACK transmission is determined as a PUCCH resource indicated by a PUCCH resource field indicated in DCI lastly scheduling a PDSCH. That is, a PUCCH resource indicated by a PUCCH resource field indicated in DCI scheduled before the DCI is disregarded.

In the following description, HARQ-ACK codebook determination methods and devices are defined in a situation where two or more PUCCHs containing HARQ-ACK information is transmissible in one slot. These methods and devices are called mode 2. A terminal is able to operate only in mode 1 (transmission of only one HARQ-ACK PUCCH in one slot) or operate only in mode 2 (transmission of one or more HARQ-ACK PUCCHs in one slot). Alternatively, a terminal supporting both mode 1 and mode 2 may be configured by a base station to operate in only one mode through higher signaling, or may be implicitly by a DCI format, an RNTI, a particular field value of DCI, and scrambling to operate in one mode among mode 1 and mode 2. For example, a PDSCH scheduled by DCI format A, and pieces of HARQ-ACK information associated with the PDSCH are based on mode 1, and a PDSCH scheduled by DCI format B, and pieces of HARQ-ACK information associated with the PDSCH are based on mode 2.

Whether the above HARQ-ACK codebook is semi-static as illustrated in FIG. 4, or dynamic as illustrated in FIG. 5 is determined by an RRC signal.

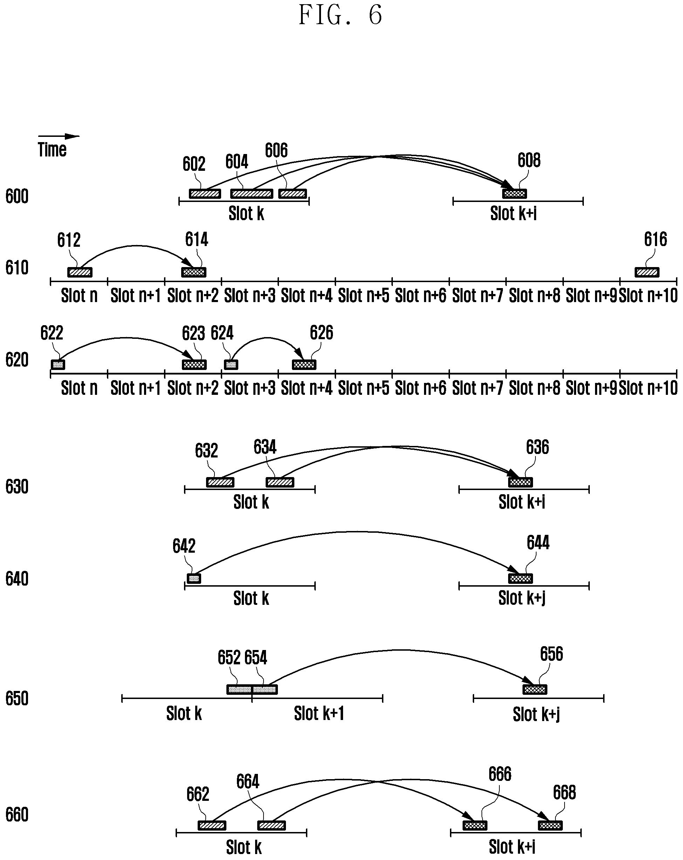

FIG. 6 is a diagram illustrating a HARQ-ACK transmission process for DL SPS according to the disclosure.

Case 600 of FIG. 6 shows a situation where that PDSCHs 602, 604, and 606, which are maximally receivable while not overlapping with each other in slot k in terms of time resources, are mapped. For example, if a PDSCH-to-HARQ feedback timing indicator is not included in a DCI format scheduling a PDSCH, a terminal transmits HARQ-ACK information 608 in slot k+1 according to the value of l, which is configured by higher layer signaling. Therefore, the size of a semi-static HARQ-ACK codebook of slot k+l is the same as the number of PDSCHs which are maximally transmissible in slot k, and may be 3. If HARQ-ACK information for each PDSCH is one bit, the HARQ-ACK codebook 608 in case 600 of FIG. 6 may be configured by a total of 3 bits which are [X, Y, Z], and X may be HARQ-ACK information for the PDSCH 602, Y may be HARQ-ACK information for the PDSCH 604, and Z may be HARQ-ACK information for the PDSCH 606. If the reception of a PDSCH is successful, the corresponding information may be mapped as ACK. Otherwise, the information may be mapped as NACK. In addition, if DCI does not actually schedule a corresponding PDSCH, the terminal reports NACK as HARQ-ACK information. Specifically, the position of a HARQ-ACK codebook may be changed according to the SLIV of a PDSCH which is schedulable in DCI, and may be determined by Table 7, [pseudo code 1], or [pseudo code 2].

Case 610 of FIG. 6 shows HARQ-ACK transmission in a situation where a DL SPS is activated. In Rel-15 NR, the minimum period of a DL SPS is 10 ms. In case 610, the length of one slot at 15 kHz subcarrier spacing is 1 ms. Therefore, an SPS PDSCH 612 may be transmitted in slot n, and then, an SPS PDSCH 616 may be transmitted in slot n+10.

In order to provide HARQ-ACK information for each SPS PDSCH, a base station informs of a period of SPS, HARQ-ACK transmission resource information, a MCS table configuration, and the number of HARQ processes through a higher signal, and then informs of a frequency resource, a time resource, and an MCS value according to information included in a DCI format indicating activation of a corresponding SPS. For reference, a PUCCH resource transmitting HARQ-ACK information may be also configured by a higher signal, and the PUCCH resource has the following attributes.
- Hopping or not
- PUCCH format (the starting symbol, and the length of symbols)

In the attributes, there may be no MCS table configuration and HARQ-ACK transmission resource information. If there is HARQ-ACK transmission resource information, Rel-15 NR supports PUCCH format 0 or 1 capable of transmitting up to two bits. However, a release after Rel-15 NR is able to sufficiently support PUCCH format 2, 3, or 4 which is two bits or more.

A DL SPS higher signal configuration includes HARQ-ACK transmission resource information. Therefore, the terminal may disregard a PUCCH resource indicator existing in a DCI format indicating DL SPS activation. Alternatively, there may be no PUCCH resource indicator field in the DCI format. Meanwhile, if there is no HARQ-ACK transmission resource information in a DL SPS higher signal configuration, the terminal transmits HARQ-ACK information corresponding to a DL SPS in a PUCCH resource determined by a PUCCH resource indicator in a DCI format activating the DL SPS. In addition, the difference between a slot in which an SPS PDSCH is transmitted and a slot in which corresponding HARQ-ACK information is transmitted is determined by a value indicated by a PDSCH-to-HARQ-ACK feedback timing indicator of a DCI format activating a DL SPS, or follows a particular value previously configured by a higher signal, when the indicator does not exist.

For example, as in case 610 illustrated in FIG. 6, if a PDSCH-to-HARQ-ACK feedback timing indicator is 2, HARQ-ACK information for the SPS PDSCH 612 transmitted in slot n is transmitted through a PUCCH 614 in slot n+2. Moreover, the PUCCH transmitting the HARQ-ACK information may be configured by a higher signal, or may be determined by an L1 signal indicating the DL SPS activation. A HARQ-ACK codebook position for the SPS PDSCH 612, which is transmitted through the PUCCH 614, is the position of Y in [X Y Z] under an assumption that, as in case 600 of FIG. 6, a maximum of three PDSCHs are receivable and the time resource of the PDSCH 612 is the same as that of the PDSCH 604.

If DCI indicating DL SPS release is transmitted, the terminal is required to transmit HARQ-ACK information for the DCI to the base station. However, in a case of a semi-static HARQ-ACK codebook, the size and position of the HARQ-ACK codebook are determined by a time resource region to which a PDSCH is allocated, and a slot interval (PDSCH to HARQ-ACK feedback timing) between the PDSCH and the HARQ-ACK, which is indicated by an L1 signal or a higher signal, as described above in the disclosure. Therefore, when a semi-static HARQ-ACK codebook for DCI indicating DL SPS release is transmitted, a position in the HARQ-ACK codebook is not randomly determined, and requires a particular rule. In Rel-15 NR, the position of HARQ-ACK information for DCI indicating DL SPS release is mapped to be the same as a transmission resource region of a corresponding DL SPS PDSCH. For example, case 620 illustrated in FIG. 6 shows a situation where DCI 622 indicating release of a DL SPS PDSCH is transmitted in slot n. If a PDSCH-to-HARQ-ACK feedback timing indicator included in the format of the DCI 622 indicates 2, HARQ-ACK information for the DCI 622 may be transmitted through a PUCCH 623 in slot n+2. In relation to the position of a HARQ-ACK codebook, under an assumption that a pre-configured SPS PDSCH is scheduled in slot n, the terminal maps HARQ-ACK information for the DCI 622 indicating DL SPS release to a HARQ-ACK codebook position corresponding to the SPS PDSCH, and then transmit the mapped HARQ-ACK information. In relation thereto, the following two methods are possible. A base station and a terminal may transmit or receive corresponding DCI by at least one method according to a specification or a base station configuration.
* Method 2-1-1: Transmission of DCI indicating DL SPS release only in a previously configured slot in which an SPS PDSCH is to be transmitted.

For example, as in case 620 illustrated in FIG. 6, if an SPS PDSCH is configured to be transmitted in slot n, a terminal transmits the DCI 622 indicating SPS release only in slot n. The position of a slot in which HARQ-ACK information for the DCI is transmitted is the same as that of a slot determined under an assumption that an SPS PDSCH is transmitted. In other words, when a slot in which HARQ-ACK information for a SPS PDSCH is transmitted is slot n+2, a slot in which HARQ-ACK information for DCI indicating DL SPS PDSCH release is transmitted is also slot n+2.
* Method 2-1-2: Transmission of DCI indicating DL SPS release in a random slot regardless of a slot in which a SPS PDSCH is transmitted.

For example, as in case 620 illustrated in FIG. 6, if an SPS PDSCH is transmitted in slots n, n+10, n+20, ..., a base station transmits DCI 624 indicating release of the DL SPS PDSCH in slot n+3. When a value indicated by a PDSCH-to-HARQ-ACK feedback timing indicator included in the DCI is 1 or when there is no corresponding field and a value previously configured by a higher signal is 1, HARQ-ACK information 626 for the DCI indicating release of the DL SPS PDSCH is transmitted and received in slot n+4.

There may be a case where the minimum period of a DL SPS is shorter than 10 ms. For example, if there is data requiring high reliability and low latency in wireless communication between different apparatuses in a factory, and the transmission period of the data is constant and short, the minimum period is required to be shorter than 10 ms, which is the current value. Therefore, a DL SPS transmission period may be determined in a slot unit, a symbol unit, or a symbol group unit rather than the unit of ms and regardless of subcarrier spacing. For reference, the minimum transmission period of an uplink configured grant PUSCH resource is two symbols.

Case 630 illustrated in FIG. 6 shows a situation where a DL SPS transmission period is seven symbols which are smaller than a slot. The transmission period is within one slot. Therefore, a maximum of two SPS PDSCHs 632 and 634 may be transmitted in slot k. HARQ-ACK information corresponding to the SPS PDSCH 632 and the SPS PDSCH 634 is transmitted in a slot following a value indicated by a PDSCH-to-HARQ-ACK feedback timing indicator included in DCI indicating SPS activation, or a value previously configured by a higher signal if there is no corresponding field. For example, if the value is i, the terminal transmits the HARQ-ACK information 636 for the SPS PDSCH 632 and the SPS PDSCH 634 in slot k+i. The position of a HARQ-ACK codebook included in the HARQ-ACK information is required to be determined in consideration of the transmission period as well as a TDRA, which is time resource information by which the SPS PDSCHs are scheduled. In the conventional method, only one SPS PDSCH is transmissible per slot, and thus the position of a HARQ-ACK codebook is determined based on a TDRA, which is time resource information, without considering a transmission period. However, a DL SPS transmission period is smaller than a slot, a transmission period and a TDRA, which is time resource information, are required to be considered together to determine the position of a HARQ-ACK codebook. The TDRA is a time domain resource allocation, and includes starting symbol and length information for transmission of an SPS PDSCH. For example, if a DL SPS transmission period is seven symbols, and the starting symbol and the length of a DL SPS PDSCH, determined by a TDRA, are 2 and 3, respectively, two DL SPS PDSCHs may exist in one slot as in case 630 of FIG. 6. That is, the first SPS PDSCH 632 is a PDSCH having OFDM symbol indexes 2, 3, and 4 determined by a TDRA, and the second SPS PDSCH 634 is a PDSCH having OFDM symbol indexes 9, 10, and 11 in consideration of the TDRA and the transmission period of seven symbols. That is, the second SPS PDSCH in the slot has the same length as that of the first SPS PDSCH, but has an offset moved by the transmission period. In summary, with respect to the generation or determination of a semi-static HARQ-ACK codebook, a terminal determines the position of a HARQ-ACK codebook for an SPS PDSCH in one slot by using time resource allocation information when a SPS PDSCH transmission period is larger than one slot, and considering time resource allocation information and the SPS PDSCH transmission period together when the SPS PDSCH transmission period is smaller than one slot.

When an SPS PDSCH transmission period is smaller than one slot, an SPS PDSCH may extend over a slot boundary according to a combination of the transmission period and a TDRA. Case 650 of FIG. 6 shows the corresponding example, and in this case, the base station configures one PDSCH, which extends over the slot boundary, to be divided into a PDSCH 652 and a PDSCH 654 and then be repeatedly transmitted. The PDSCH 652 and the PDSCH 654 may always have an identical length, or different lengths. In addition, only one piece of HARQ-ACK information 656 for the SPS PDSCH configured by the PDSCH 652 and the PDSCH 654 is transmitted by a terminal, and a slot serving as a corresponding criterion is slot k+1 in which the PDSCH 654 is lastly repeatedly transmitted.

### [Embodiment 1: Method of mapping semi-static HARQ-ACK Codebook for DCI Indicating DL SPS Release]

In a case where the transmission period of an SPS PDSCH is smaller than one slot, when a terminal transmits HARQ-ACK information for DCI requesting release of the SPS PDSCH, based on a semi-static HARQ-ACK codebook, the terminal maps the HARQ-ACK codebook for the DCI by at least one of the following methods.
* Method 2-2-1: The position of a semi-static HARQ-ACK codebook for HARQ-ACK information for DCI indicating SPS PDSCH release is the same as that of a HARQ-ACK codebook for an SPS PDSCH which is positioned at the foremost in terms of time resource among SPS PDSCHs received in one slot.
   - In a case where the number of SPS PDSCHs of a slot in which DCI indicating SPS PDSCH release is transmitted is two or more, the terminal maps HARQ-ACK information for the DCI to the position of a semi-static HARQ-ACK codebook for HARQ-ACK information of the first SPS PDSCH in terms of time, and transmits the mapped HARQ-ACK information.
   - For example, in a case where the number of PDSCHs which include an SPS PDSCH and are maximally transmissible or receivable without simultaneous PDSCH reception in a slot in which DCI indicating SPS PDSCH release is to be transmitted is 4, a HARQ-ACK codebook size for the slot is 4. HARQ-ACK information for SPS PDSCH or PDSCH reception may be mapped at respective positions, such as {1, 2, 3, 4}. If two SPS PDSCHs are mapped to corresponding pieces of HARQ-ACK information at the positions of {2} and {3}, respectively, HARQ-ACK information indicating DL SPS PDSCH release is mapped to the {2} position.
* Method 2-2-2: The position of a semi-static HARQ-ACK codebook for HARQ-ACK information for DCI indicating SPS PDSCH release is the same as that of a HARQ-ACK codebook for an SPS PDSCH which is positioned at the latest in terms of time resource among SPS PDSCHs received in one slot.
   - In a case where the number of SPS PDSCHs of a slot in which DCI indicating SPS PDSCH release is transmitted is two or more, the terminal maps HARQ-ACK information for the DCI to the position of a semi-static HARQ-ACK codebook for HARQ-ACK information of the last SPS PDSCH in terms of time, and transmits the mapped HARQ-ACK information.
   - For example, in a case where the number of PDSCHs which include an SPS PDSCH and are maximally transmissible or receivable without simultaneous PDSCH reception in a slot in which DCI indicating SPS PDSCH release is to be transmitted is 4, the size of a HARQ-ACK codebook for the slot is 4. HARQ-ACK information for SPS PDSCH or PDSCH reception may be mapped at respective positions, such as {1, 2, 3, 4}. If two SPS PDSCHs are mapped to corresponding pieces of HARQ-ACK information at the positions of {2} and {3}, respectively, HARQ-ACK information indicating DL SPS PDSCH release is mapped to the {3} position.
* Method 2-2-3: The position of a semi-static HARQ-ACK codebook for HARQ-ACK information for DCI indicating SPS PDSCH release is the same as those of all HARQ-ACK codebooks for SPS PDSCHs received in one slot.
   - In a case where the number of SPS PDSCHs of a slot in which DCI indicating SPS PDSCH release is transmitted is two or more, the terminal repeatedly maps HARQ-ACK information for the DCI to semi-static HARQ-ACK codebook positions for pieces of HARQ-ACK information of all the SPS PDSCHs, and transmits the mapped HARQ-ACK information.
   - For example, in a case where the number of PDSCHs which include an SPS PDSCH and are maximally transmissible or receivable without simultaneous PDSCH reception in a slot in which DCI indicating SPS PDSCH release is to be transmitted is 4, the size of a HARQ-ACK codebook for the slot is 4. HARQ-ACK information for SPS PDSCH or PDSCH reception may be mapped at respective positions, such as {1, 2, 3, 4}. If two SPS PDSCHs are mapped to corresponding pieces of HARQ-ACK information at the {2} and {3} positions, respectively, HARQ-ACK information indicating DL SPS PDSCH release is repeatedly mapped to the {2} and {3} positions. That is, the same HARQ-ACK information is mapped at the {2} and {3} positions.
* Method 2-2-4: The position of a semi-static HARQ-ACK codebook for HARQ-ACK information for DCI indicating SPS PDSCH release is one position, among multiple HARQ-ACK codebook candidate positions for SPS PDSCHs received in one slot, which is selected by a base station by using a higher signal, a L1 signal, or a combination thereof.
   - In a case where the number of SPS PDSCHs of a slot in which DCI indicating the release of a SPS PDSCH is transmitted is two or more, the base station selects one position among semi-static HARQ-ACK codebook positions for HARQ-ACK information of the SPS PDSCHs by using a higher signal, a L1 signal, or a combination thereof, and the terminal maps HARQ-ACK information for the DCI to the selected position, and transmits the mapped HARQ-ACK information.
   - For example, in a case where the number of PDSCHs which include an SPS PDSCH and are maximally transmissible or receivable without simultaneous PDSCH reception in a slot in which DCI indicating SPS PDSCH release is to be transmitted is 4, a HARQ-ACK codebook size for the slot is 4. HARQ-ACK information for SPS PDSCH or PDSCH reception may be mapped at respective positions, such as {1, 2, 3, 4}. In a situation where two SPS PDSCHs are mapped to corresponding pieces of HARQ-ACK information are mapped at the {2} and {3} positions, respectively, the base station selects {2} by using DCI indicating DL SPS PDSCH release, and the terminal maps HARQ-ACK information indicating DL SPS PDSCH release at the {2} position, and transmits the mapped HARQ-ACK information. A DCI field for determining the semi-static HARQ-ACK codebook position may be a time resource allocation field, a HARQ-ACK process number, or a PDSCH-to-HARQ feedback timing indicator. For example, a time resource allocation field in DCI indicating SPS PDSCH release may indicate time resource information of one SPS PDSCH among SPS PDSCHs transmittable in a corresponding slot, and the terminal may transmit HARQ-ACK information of the DCI at a semi-static HARQ-ACK codebook position corresponding to the indicated SPS PDSCH.
* Method 2-2-5: The position of a semi-static HARQ-ACK codebook for HARQ-ACK information for DCI indicating SPS PDSCH release is indicated or configured by a base station by using a higher signal, a L1 signal, or a combination thereof.
   - In a case where the number of PDSCHs which are maximally receivable without time overlapping in a slot in which DCI indicating SPS PDSCH release is transmitted is two or more, the base station selects one position among semi-static HARQ-ACK codebook positions for HARQ-ACK information of the PDSCHs by using a higher signal, a L1 signal, or a combination thereof, and the terminal maps HARQ-ACK information for the DCI to the selected position, and transmits the mapped HARQ-ACK information.
   - A set of semi-static HARQ-ACK codebook positions selectable by a base station by method 2-2-4 is configured by semi-static HARQ-ACK codebook positions to which pieces of HARQ-ACK information for SPS PDSCHs are mappable. A set of semi-static HARQ-ACK codebook positions selectable by a base station by method 2-2-5 is configured by semi-static HARQ-ACK codebook positions to which pieces of HARQ-ACK information for all PDSCHs are mappable.
   - For example, in a case where the number of PDSCHs which include an SPS PDSCH and are maximally transmissible or receivable without simultaneous PDSCH reception in a slot in which DCI indicating SPS PDSCH release is to be transmitted is 4, a HARQ-ACK codebook size for the slot is 4. HARQ-ACK information for SPS PDSCH or PDSCH reception may be mapped at respective positions, such as {1, 2, 3, 4}. The base station selects {1} by using DCI indicating DL SPS PDSCH release, and the terminal maps HARQ-ACK information indicating DL SPS PDSCH release at the {1} position, and transmits the mapped HARQ-ACK information. A DCI field for determining the semi-static HARQ-ACK codebook position may be a time resource allocation field, a HARQ-ACK process number, or a PDSCH-to-HARQ feedback timing indicator. For example, a time resource allocation field in DCI indicating SPS PDSCH release indicates time resource information of one PDSCH among PDSCHs transmittable in a corresponding slot, and the terminal transmits HARQ-ACK information of the DCI at a semi-static HARQ-ACK codebook position corresponding to the indicated PDSCH.

The above methods may be possible in a situation where one HARQ-ACK transmission is configured to be supported in one slot. If code block group (CBG)-based transmission is configured through a DL SPS PDSCH as a higher configuration, a terminal may repeat HARQ-ACK information for DCI indicating DL SPS PDSCH release a number of times corresponding to the number of CBGs, and map the repeated HARQ-ACK information to a semi-static HARQ-ACK codebook resource determined by at least one of the above methods, and transmit the mapped HARQ-ACK information.

The above method is described as a method of transmitting HARQ-ACK information for a DL SPS PDSCH indicating release of one SPS PDSCH reception or transmission. However, the above method may also be applied to a method of transmitting HARQ-ACK information for a DL SPS PDSCH indicating simultaneous release of transmission or reception of two or more activated PDSCHs in one cell/one BWP. For example, if one DL SPS PDSCH release signal is related to multiple SPS PDSCHs activated in one cell/one BWP, SPS PDSCHs considered for selection of a HARQ-ACK codebook position may representatively belong to one configuration, or may belong to all configurations. If SPS PDSCHs may representatively belong to one configuration, the representative configuration may have a SPS PDSCH configuration number with the lowest index, or may be the first-activated SPS PDSCH configuration. The above description corresponds to merely an example, and other similar methods may be sufficiently possible.

### [Embodiment 2: Method of mapping dynamic HARQ-ACK codebook for multiple SPS PDSCHs transmitted in one slot]

In relation to a dynamic HARQ-ACK codebook (or type 2 HARQ-ACK codebook), the position of corresponding HARQ-ACK information is determined basically by a total DAI and a counter DAI included in DCI scheduling a PDSCH. The total DAI indicates the size of a HARQ-ACK codebook transmitted in slot n, and the counter DAI indicates the position of a HARQ-ACK codebook transmitted in slot n. In Rel-15 NR, a dynamic HARQ-ACK codebook is configured by [pseudo-code 3] below.

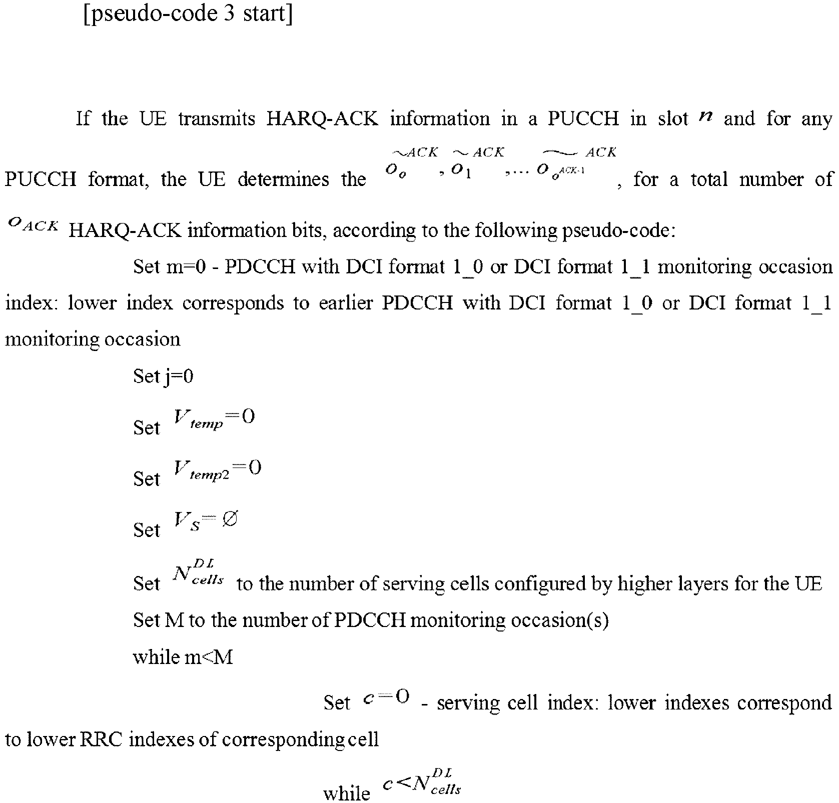

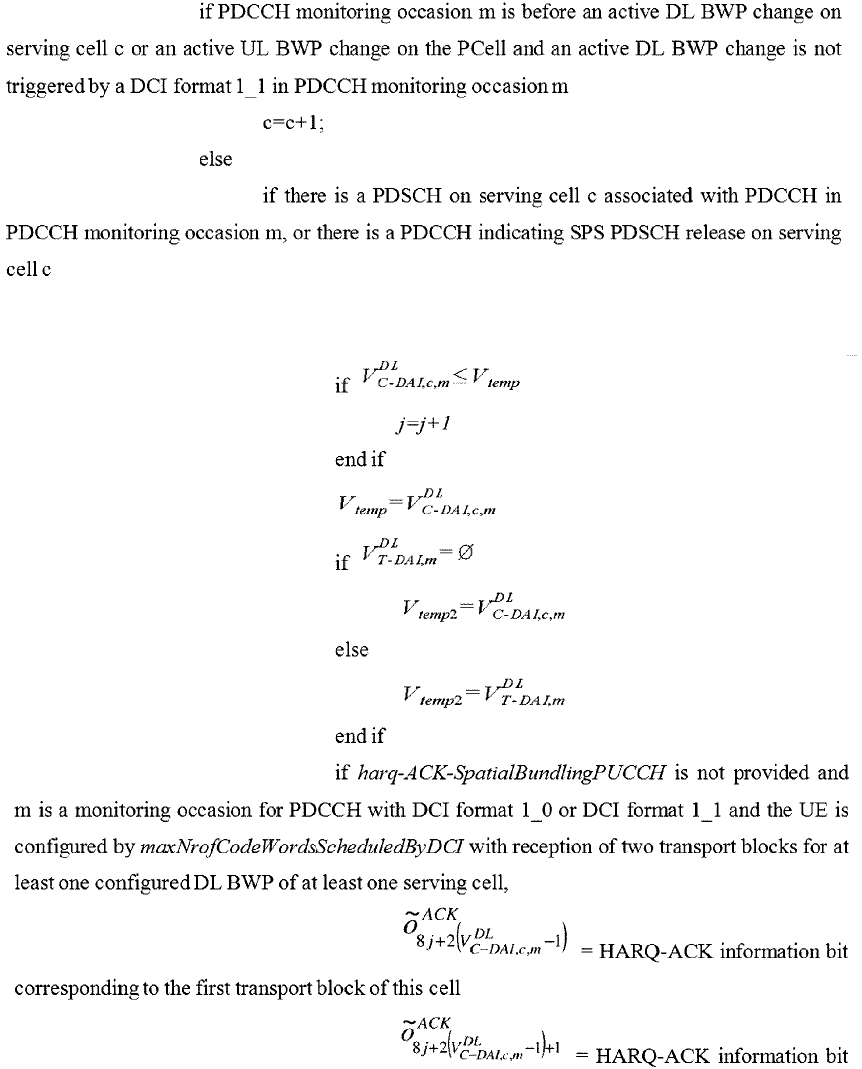

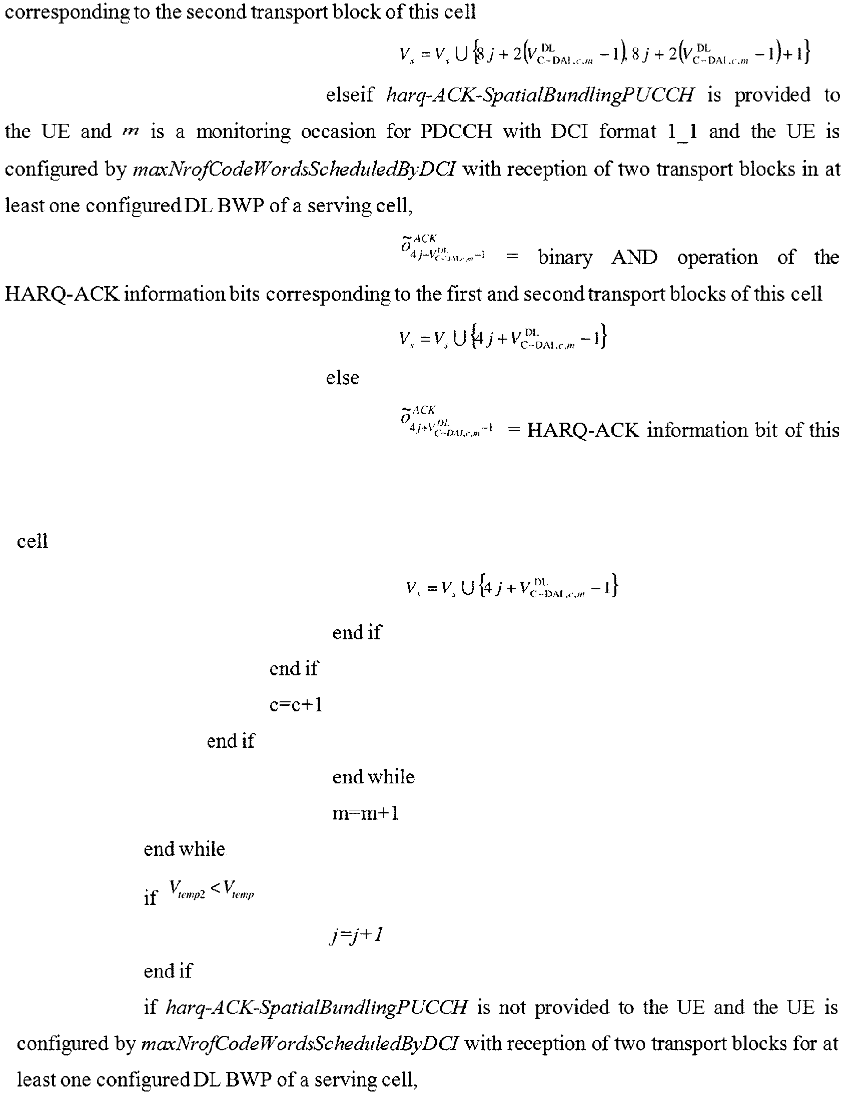

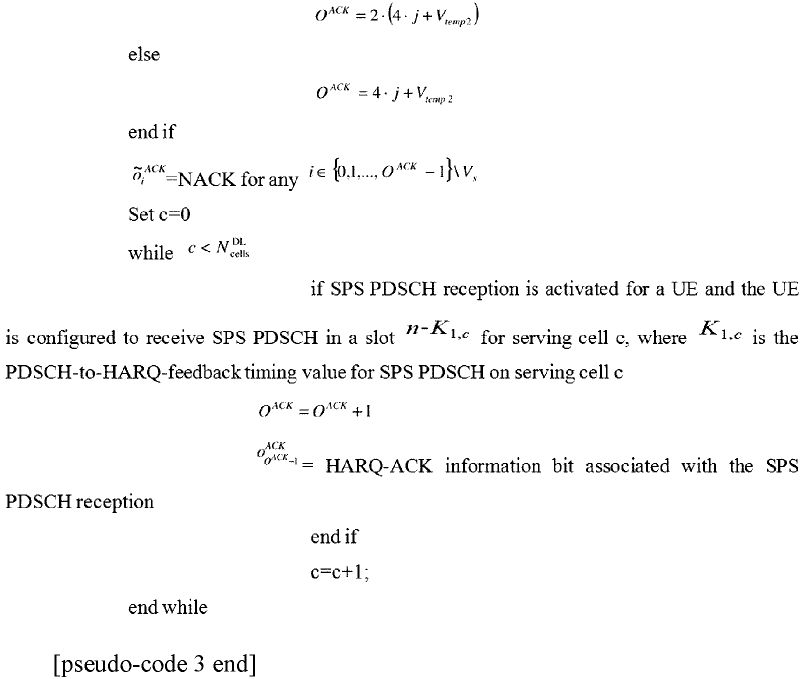

[pseudo-code 3] is applied when the transmission period of an SPS PDSCH is larger than one slot. When the transmission period of an SPS PDSCH is smaller than one slot, a dynamic HARQ-ACK codebook may be determined by [pseudo-code 4] below. Alternatively, [pseudo-code 4] may be generally applied regardless of an SPS PDSCH transmission period or the number of SPS PDSCHs activated in one cell/one BWP.

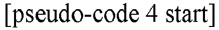

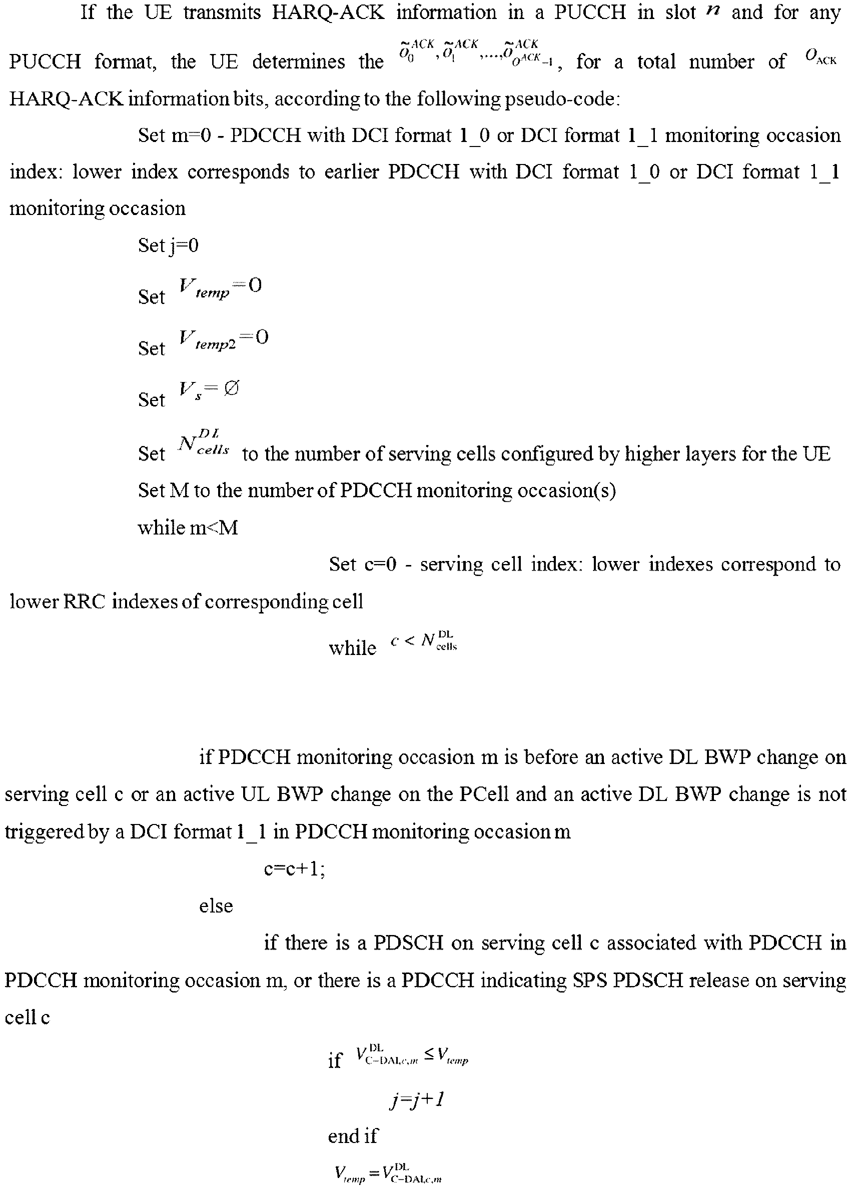

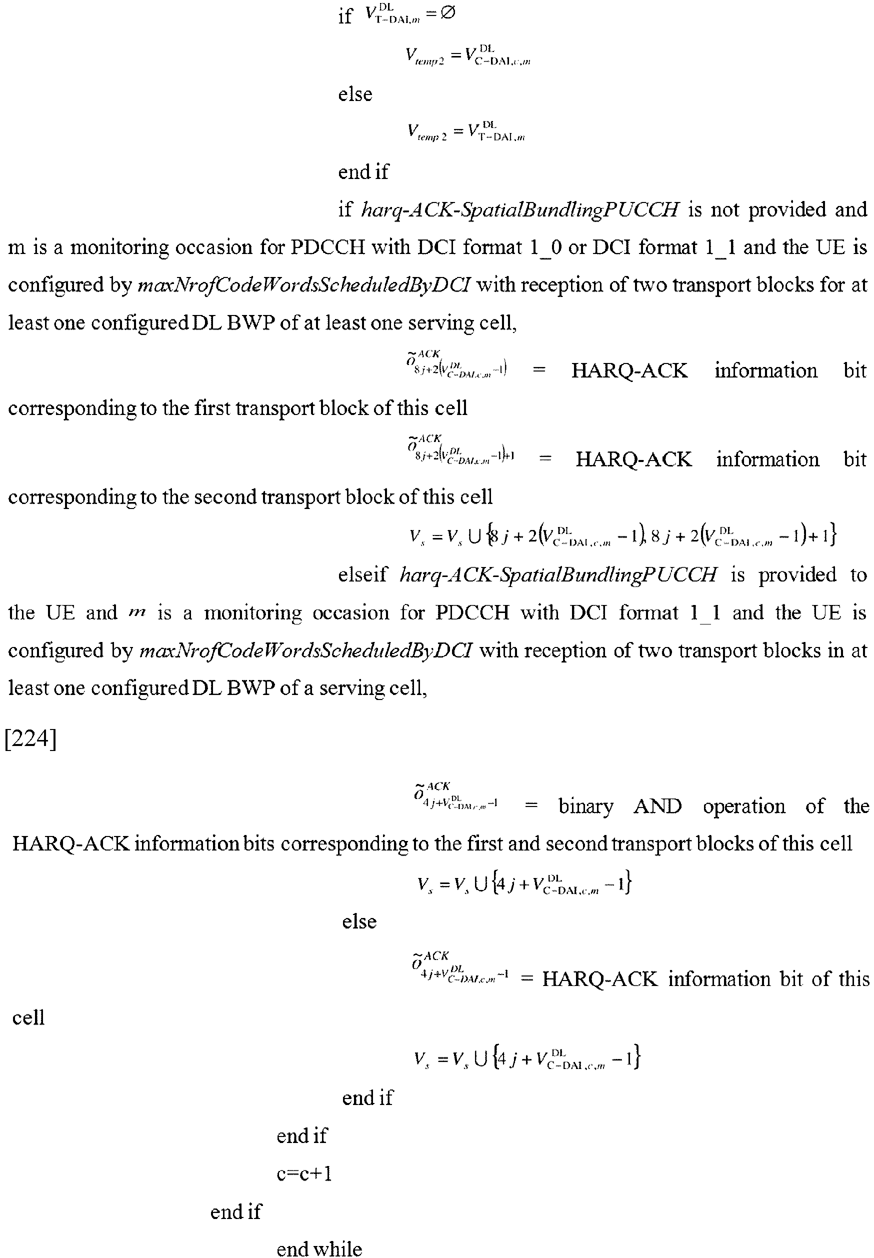

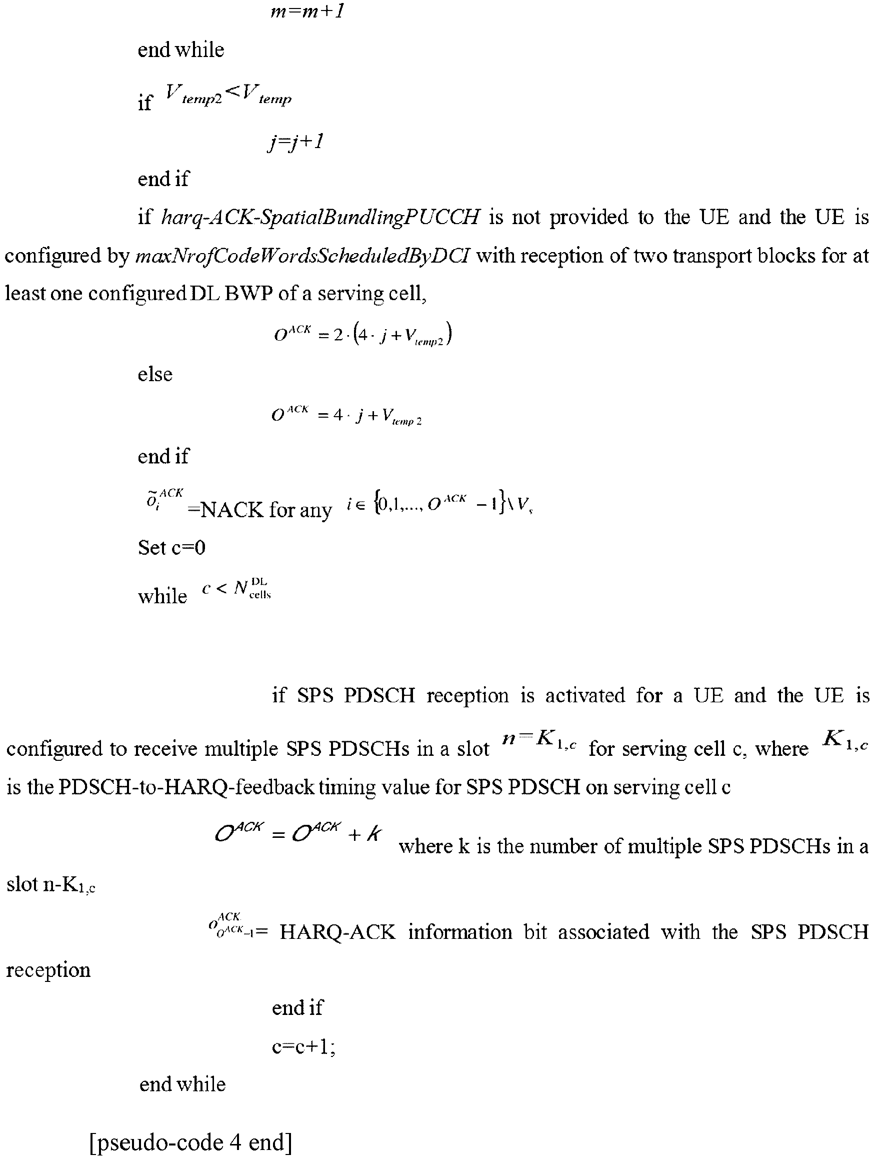

In [pseudo-code 4] above, a K value, which is the number of SPS PDSCHs within one slot, corresponds to only one SPS PDSCH configuration in one cell/one BWP, or may include all SPS PDSCH configurations in a case where multiple SPS PDSCH configurations are possible in one cell/one BWP.

[pseudo-code 3] or [pseudo-code 4] above may be applied to a situation where the number of HARQ-ACK information transmissions is limited to a maximum of one per slot.

### [Embodiment 3: Method of transmitting individual HARQ-ACKs for multiple SPS PDSCHs transmitted in one slot]

In a case where a base station configures, by using a higher signal, a terminal to employ a DL SPS transmission period smaller than one slot, and transmit only one HARQ-ACK information per slot, the terminal transmits pieces of HARQ-ACK information for a DL SPS PDSCH 632 and a DP SPS PDSCH 634 received in slot k, through a PUCCH of slot k+i previously indicated by a higher signal, a L1 signal, or a combination thereof, as illustrated in case 630 in FIG. 6. For example, the terminal determines, as a slot level, the granularity of a PDSCH-to-HARQ-ACK timing indicator in a DCI format indicating DL SPS activation, and the base station provides the terminal with a difference value between the index of a slot transmitting a DL SPS PDSCH and the index of a slot receiving HARQ-ACK information, and configures, for the terminal, a PUCCH resource in which HARQ-ACK information is transmitted in a slot indicated by L1, by using a higher signal. Case 630 illustrated in FIG. 6 shows a situation where a PDSCH to HARQ-ACK timing indicates the i value. The value may be directly selected by a L1 signal, or may be determined by configuring candidate values by using a higher signal and selecting one value among them by an L1 signal.

If the terminal or the base station wants to separately transmit or receive pieces of HARQ-ACK information for individually transmitted or received DL SPS PDSCHs, the base station may configure a DL SPS transmission period smaller than one slot, and configure to allow two or more HARQ-ACK transmissions per slot by using a higher signal. For example, as illustrated in case 660 of FIG. 6, the terminal may transmit HARQ-ACK information for an SPS PDSCH 662 received in slot k, through a PUCCH 666 in slot k+i, and transmit HARQ-ACK information for an SPS PDSCH 664 through a PUCCH 668 in slot k+i. To this end, for example, the terminal may determine, as a symbol level, the granularity of a PDSCH-to-HARQ-ACK timing indicator in a DCI format indicating DL SPS activation. The value implies the total symbol length from the transmission ending symbol (or transmission starting symbol) of an SPS PDSCH to the transmission starting symbol (or transmission ending symbol) of a PUCCH through which corresponding HARQ-ACK information is transmitted. When the ending symbol of the SPS PDSCH 662 is s0, and the starting symbol of the PUCCH 666 through which HARQ-ACK information for the SPS PDSCH 662 is transmitted is s1 in case 660 illustrated in FIG. 6, a value indicated by a PDSCH to HARQ-ACK timing indicator may be "s1-s0". The value may be directly selected by a L1 signal, or may be configured by configuring candidate values by using a higher signal and determining one value among them by an L1 signal. Through the information, the terminal may determine the starting symbol of a PUCCH through which HARQ-ACK information for an SPS PDSCH is to be transmitted. Other pieces of PUCCH transmission information may be determined by a higher signal, an L1 signal, or a combination thereof. If a PUCCH resource indicator existing in a higher signal or an L1 of Rel-15 is used, the terminal may determine that a "starting symbol index" field among values indicated by the indicator is not used. Alternatively, independently thereto, a starting symbol in which HARQ-ACK information is transmitted has already been provided through PDSCH to HARQ-ACK timing indicator information. Therefore, a new higher signal, an L1 signal, or a signal configured by a combination thereof, which lack the corresponding field, may be provided to the terminal. In short, the terminal may differently interpret a PDSCH-to-HARQ-ACK timing indicator field included in DCI indicating SPS PDSCH activation according to an SPS PDSCH transmission period, as below.
- Method 2-3-1: Determine as a slot level
- For example, if the transmission period of an SPS PDSCH is larger than one slot, the terminal determines the granularity of a PDSCH-to-HARQ-ACK timing indicator, as a slot level.
- Method 2-3-2: Determine as a symbol level
- For example, if the transmission period of an SPS PDSCH is smaller than one slot, the terminal determines the granularity of a PDSCH-to-HARQ-ACK timing indicator, as a symbol level.

### [Embodiment 4: Method of changing DL SPS/CG period for aperiodic traffic]

A transmission period of a DL SPS supported by a base station may be a unit of a slot level or a symbol level. In a case where information sensitive to latency time is periodically generated in an apparatus operated in a factory, and the period is not a value of a specification supported by a 3GPP standard organization, or a multiple of the value, the base station may not be able to configure an effective DL SPS transmission period. For example, if there is a traffic pattern having a 2.5-symbol interval, the base station may be unable to allocate only a DL SPS having the transmission period of two symbols or three symbols. Therefore, it is necessary to configure a DL SPS transmission period having aperiodicity, or introduce a signal for dynamically changing a transmission period. A terminal is able to dynamically change a transmission period by at least one of the following methods.
* Method 2-4-1: Method of allocating DL SPS transmission period having aperiodicity
   - A base station may configure a DL SPS transmission period in a bitmap type. For example, bitmap information configured by 10 bits may be configured through a higher signal. In a case where a bit of 1 indicates DL SPS transmission and a bit of 0 indicates non-DL SPS transmission, when the unit of bits indicates the unit of slots, various patterns of DL SPS transmission periods may be configured for ten slots even without periodicity. A corresponding pattern may be repeated by a unit of ten slots. Alternatively, a bitmap size and an interval indicated by a corresponding bit may be a slot, a symbol, or a symbol group. Corresponding pieces of information may be independently configured by a higher signal, or the range of a transmission interval that is indicatable by each bit may vary depending on a bitmap size. For example, if the size of a bitmap is 20, a time range indicated by each bit is the unit of seven symbols. If the size of a bitmap is 10, a time range indicated by each bit is the unit of a slot.
   - Alternatively, the base station may previously configure two or more DL SPS transmission periods by using a higher signal, and may configure, as a pattern, the time differences between DL SPSs continuously transmitted. For example, it may be possible to determine a DL SPS transmission period having the intervals of two symbols and three symbols for a 2.5-symbol traffic pattern.

Table 8 below is a table for the aperiodic DL SPS transmission period configuration. Z is a decimal having a value up to one decimal place, and has a relationship represented by X<Z<X+1. For example, if Z is 3.2, X is 3. Gap 1 implies the symbol interval between the first SPS PDSCH resource received by the terminal after reception of DCI indicating SPS activation, and the second SPS PDSCH resource. Gap 2 implies the symbol interval between the second SPS PDSCH resource and the third SPS PDSCH resource. That is, Gap i implies the symbol interval between the i-th SPS PDSCH resource and the (i+1)th SPS PDSCH resource. Configuration is a parameter for selecting one among various patterns, and [Table 8] shows configurations having a total of nine patterns. The parameter may be provided to the terminal by a higher signal or an L1 signal, and the terminal may identify a DL SPS PDSCH transmission period pattern by a value indicated by the parameter. As another example, it may also be possible to implicitly determine one value among the configurations according to a traffic generation period value. For example, when the base station and the terminal transmit or receive corresponding information by a higher signal configuration according to a 2.3-symbol traffic pattern, the base station and the terminal may determine that configuration 3 has been applied.

**[Table 8]**

| **Configuration** | **1** | **2** | **3** | **4** | **5** | **6** | **7** | **8** | **9** |
|---|---|---|---|---|---|---|---|---|---|
| Gap 1 | X+1 | X+1 | X+1 | X+1 | X+1 | X+1 | X+1 | X+1 | X+1 |
| Gap 2 | X | X | X | X | X | X+1 | X+1 | X+1 | X+1 |
| Gap 3 | X | X | X | X+1 | X+1 | X | X+1 | X+1 | X+1 |
| Gap 4 | X | X | X+1 | X | X | X+1 | X | X+1 | X+1 |
| Gap 5 | X | X | X | X | X+1 | X | X+1 | X | X+1 |
| Gap 6 | X | X+1 | X | X+1 | X | X+1 | X+1 | X+1 | X+1 |
| Gap 7 | X | X | X+1 | X | X+1 | X+1 | X | X+1 | X+1 |
| Gap 8 | X | X | X | X+1 | X | X | X+1 | X+1 | X+1 |
| Gap 9 | X | X | X | X | X+1 | X+1 | X+1 | X+1 | X+1 |
| Gap 10 | X | X | X | X | X | X | X | X | X |

### * Method 2-4-2: Dynamic DL SPS transmission period change method

### - Method 2-4-2-1: Include transmission period information in DCI indicating DL SPS activation.

This method is a method in which a DL SPS transmission period value is included in information of DCI. A corresponding transmission period value is determined by previously configuring a set of candidate values through a higher signal, and selecting a particular value in the set through DCI. For example, a transmission period is configured to be {one slot, two slots} through a higher signal, 1 bit is generated in DCI as a corresponding transmission period field, and the 1 bit indicates whether the transmission period is one slot or two slots. That is, the number of DCI bits is determined according to a set of transmission periods configured by a higher signal, and if the number of sets is N, a total of ceil(log₂(N)) bits are configured in the DCI. Corresponding DCI may correspond to non-fallback DCI such as a DCI format 1_1. The corresponding field may not exist in fallback DCI, such as a DCI format 1_0. Even if the field exists, fixed bit values and period values associated with each of the bit values may be applied.

### - Method 2-4-2-2: Use existing field in DCI format indicating DL SPS activation (1)

When one field in a DCI format indicating DL SPS activation indicates a particular value, a value of another field is used to indicate a transmission period without indicating an originally indicated value. For example, all bit values in a field indicating a HARQ process number indicate "1", a field indicating time resource information may be used to indicate one DL SPS transmission period in a set of DL SPS transmission periods previously configured by a higher signal.

### - Method 2-4-2-3: Use existing field in DCI format indicating DL SPS activation (2)

If a DCI format indicates DL SPS activation, it may be possible that a particular field in the DCI format always indicates a transmission period, or a particular value in a particular field in the DCI format indicates a transmission period. For example, if a time resource allocation field in a DCI format is verified as a format indicating SPS PDSCH activation, a base station determines that the time resource allocation field is used as a value indicating an SPS PDSCH transmission period rather than being conventionally used as a value indicating the starting symbol and the length of an SPS PDSCH.

### - Method 2-4-2-4: Implicit transmission period information configuration based on search space

A transmission period value is dynamically changed according to a search space in which DCI indicating DL SPS activation is transmitted. For example, a terminal may implicitly determine that DCI indicating DL SPS activation, which is transmitted in a common search space, has a value of transmission period A, and DCI indicating DL SPS activation, which is transmitted in a UE specific search space, has a value of transmission period B. Transmission period A and transmission period B may be previously configured by the base station for the terminal through a higher signal.

### - Method 2-4-2-5: Implicit transmission period information configuration based on DCI format

A transmission period value is dynamically changed according to a DCI format indicating DL SPS activation. For example, a terminal may implicitly determine that DCI indicating DL SPS activation, which is transmitted as DCI format 1_0 of fallback DCI, has a value of transmission period A, and DCI indicating DL SPS activation, which is transmitted as DCI format 1_1 of non-fallback DCI, has a value of transmission period B. Transmission period A and transmission period B may be previously configured by the base station for the terminal through a higher signal.

In the disclosure, the terminal does not expect that DL SPS PDSCH time resource information indicating a period beyond a DL SPS transmission period is configured or indicated for the terminal, and if a corresponding configuration or indication is received, the terminal considers same as an error and disregard same.

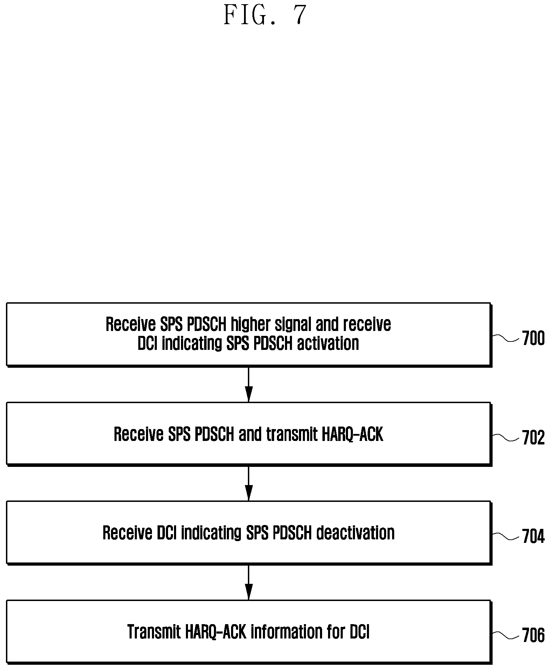

FIG. 7 is a block diagram illustrating a process in which a terminal transmits HARQ-ACK information based on a semi-static HARQ-ACK codebook for DCI indicating SPS PDSCH deactivation according to the disclosure.

A terminal receives SPS PDSCH configuration information through a higher signal. The information configured through the higher signal may include a transmission period, an MCS table, and HARQ-ACK configuration information. After the higher signal is received, the terminal receives DCI activating an SPS PDSCH from a base station (operation 700).

After the DCI indicating activation is received, the terminal periodically receives the SPS PDSCH and HARQ-ACK information corresponding thereto (operation 702).

Thereafter, when the base station does not have downlink data to periodically transmit or receive any longer, the base station transmits DCI indicating SPS PDSCH deactivation to the terminal, and the terminal receives the DCI (operation 704).

The terminal transmits HARQ-ACK information for the DCI indicating SPS PDSCH deactivation according to an SPS PDSCH transmission period (operation 706). For example, if the transmission period is larger than one slot, the terminal includes the HARQ-ACK information for the DCI indicating SPS PDSCH deactivation in a HARQ-ACK codebook position for HARQ-ACK information corresponding to the SPS PDSCH, and transmits the HARQ-ACK information.

The HARQ-ACK information may be transmissible by at least one method among method 2-1-1 or method 2-1-2 illustrated in FIG. 6. If the transmission period is smaller than one slot, the terminal may transmit the HARQ-ACK information for the DCI information indicating SPS PDSCH deactivation by at least one method among methods 2-2-1 to 2-2-5.

The above descriptions given with reference to FIG. 7 corresponds to operations applied to a case where a semi-static HARQ-ACK codebook is previously configured by a base station for a terminal through a higher signal. In addition, the above descriptions in FIG. 7 may be limitedly applied to a case where a terminal is previously configured to be able to perform one HARQ-ACK transmission per slot by a higher signal, a specification, or a UE capability.

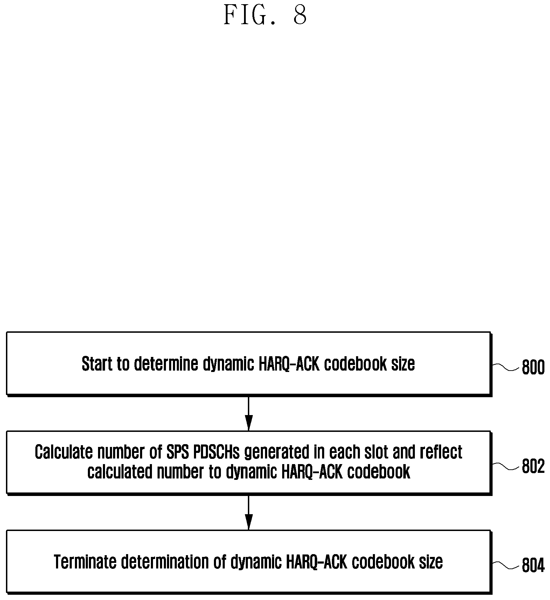

FIG. 8 is a block diagram illustrating a method in which a terminal determines a dynamic HARQ-ACK codebook for SPS PDSCH reception according to the disclosure.

If a terminal is previously configured by a higher signal, to operate with a dynamic HARQ-ACK codebook, the terminal starts to determine a HARQ-ACK codebook size for pieces of HARQ-ACK information to be transmitted in a particular slot (operation 800).

The terminal not only determines a HARQ-ACK codebook size for a dynamically scheduled PDSCH, but also calculates a total number of SPS PDSCHs generated in a slot corresponding to a slot in which HARQ-ACK information is to be transmitted, and reflects the calculated value on the HARQ-ACK codebook size (operation 802). The terminal may configure a dynamic HARQ-ACK codebook by at least one of [pseudo-code 3] or [pseudo-code 4] described with reference to FIG. 6.

Thereafter, the terminal terminates the determination of the HARQ-ACK codebook size (operation 804), and transmits the HARQ-ACK information in the corresponding slot. In addition, the above descriptions in FIG. 8 may be limitedly applied to a case where a terminal is previously configured to be able to perform one HARQ-ACK transmission per slot by a higher signal, a specification, or a terminal capability. For reference, in a case where one SPS PDSCH is repeatedly transmitted over a slot boundary as in case 650 of FIG. 6, during determination of a dynamic HARQ-ACK codebook, the terminal determines a HARQ-ACK codebook size, based on a slot in which the SPS PDSCH is repeatedly transmitted for the last time. Specifically, in a case of slot k in case 650 of FIG. 6, the SPS PDSCH 652 has been transmitted, but is not included in the number of valid SPS PDSCHs for determination of a dynamic HARQ-ACK codebook size. Instead, the terminal determines the dynamic HARQ-ACK codebook size for the SPS PDSCH 654 transmitted in slot k+1. In addition, in relation to determination of a dynamic HARQ-ACK codebook size in a particular slot in [pseudo-code 4], when the number (k) of SPS PDSCHs per slot is determined, the number of valid SPS PDSCHs is calculated in a slot (or the ending slot) to which the ending symbol of the last SPS PDSCH among repeatedly transmitted SPS PDSCHs belongs.

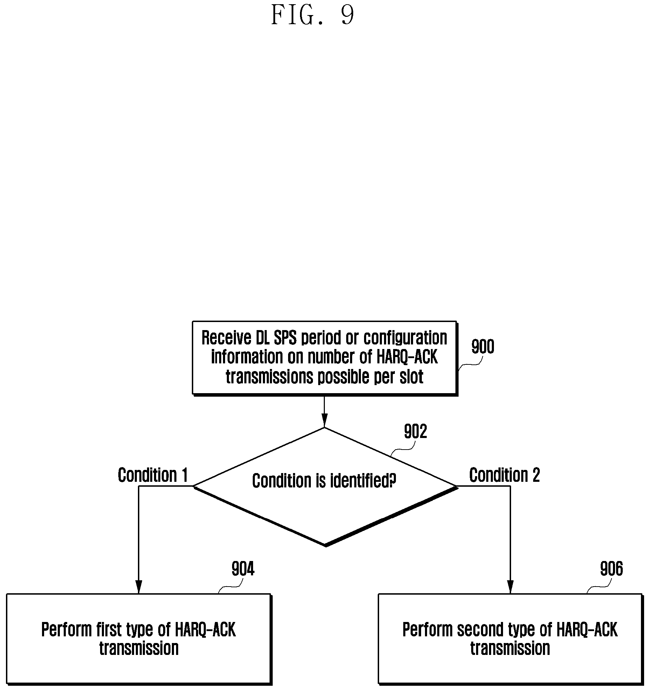

FIG. 9 is a block diagram illustrating a method in which a terminal transmits HARQ-ACK information according to a DL SPS transmission period according to the disclosure.

A terminal receives a DL SPS transmission period or configuration information on a maximum number of HARQ-ACK information transmissions per slot, which is provided by a higher signal or an L1 signal (operation 900). The terminal identifies a condition relating to the DL SPS transmission period and HARQ-ACK information transmission per slot (operation 902). If condition 1 is satisfied, the terminal performs a first type of HARQ-ACK information transmission (operation 904). If condition 2 is satisfied, the terminal performs a second type of HARQ-ACK information transmission (operation 906).

Condition 1 may be the same as at least one of the following contents.
- The transmission period of a DL SPS PDSCH is larger than one slot
- Only a maximum of one HARQ-ACK transmission per slot is possible

Condition 2 may be the same as at least one of the following contents.
- The transmission period of a DL SPS PDSCH is smaller than one slot
- Two or more HARQ-ACK transmissions per slot is possible

In the first type of HARQ-ACK information transmission described above, the following fields are included in a DCI format indicating DL SPS PDSCH activation.
- PDSCH to HARQ-ACK feedback timing indicator: This indicates a slot interval between a slot transmitting a PDSCH and a slot transmitting HARQ-ACK information in the unit of slots. As in case 650 of FIG. 6, if one SPS PDSCH is repeatedly transmitted over a slot boundary, a criterion of a slot transmitting a PDSCH is a slot of an SPS PDSCH repeatedly transmitted for the last time.
- PUCCH resource indicator: This includes the number of symbols, the starting symbol, a PRB index, a PUCCH format, etc.

Through the pieces of information, a PUCCH transmission resource through which HARQ-ACK information for a DL SPS PDSCH is to be transmitted, and a transmission format may be configured for the terminal. In addition, a set of the two field values may be previously configured through a higher signal, and one value among them may be selected based on DCI.

In the second type of HARQ-ACK information transmission described above, the following fields are included in a DCI format indicating DL SPS PDSCH activation.
- PDSCH to HARQ-ACK feedback timing indicator: This indicates the interval between the ending symbol of a PDSCH and the starting symbol in which HARQ-ACK information is transmitted in units of symbols.
- PUCCH resource indicator: This includes the number of symbols, a PRB index, a PUCCH format, etc.

Through the pieces of information, a PUCCH transmission resource through which HARQ-ACK information for a DL SPS PDSCH is to be transmitted, and a transmission format may be configured for the terminal. In addition, a set of the two field values may be previously configured through a higher signal, and one value among them may be selected based on DCI.

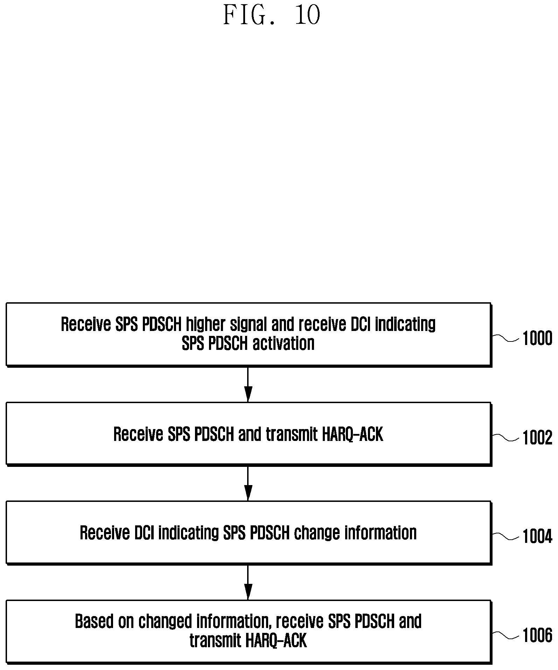

FIG. 10 is a block diagram illustrating a terminal operation for dynamically changing a DL SPS transmission period according to the disclosure.

A terminal receives pieces of higher information on an SPS PDSCH including pieces of information including a transmission period, an MCS table, and HARQ-ACK information.

Thereafter, the terminal receives DCI indicating SPS PDSCH activation (operation 1000). Then, the terminal receives the SPS PDSCH in a resource region determined by a higher signal and an L1 signal, and transmits HARQ-ACK information corresponding thereto (operation 1002).

The terminal receives DCI indicating SPS PDSCH change information (operation 1004). The change information may include an SPS PDSCH transmission period value in addition to an MCS value or a frequency and time resource region size. For reference, available methods for change of an SPS PDSCH transmission period may include at least one among method 2-4-1 and method 2-4-2 described with reference to FIG. 6. After reception of the DCI, the terminal receives an SPS PDSCH and transmits HARQ-ACK information corresponding thereto by using changed information (operation 1006). When the SPS PDSCH transmission period is changed by a higher signal or an L1 signal, if an SPS PDSCH over a slot boundary occurs according to the transmission period and a time resource region in which the SPS PDSCH is transmitted or received, the terminal may transmit or receive the SPS PDSCH by at least one method among the following methods.

### - Method 3-1: No transmission or reception of the SPS PDSCH

For example, in a case where an SPS PDSCH is allocated over slot k and slot k+1 as shown in case 650 of FIG. 6, the terminal regards such the allocated SPS PDSCH as having been incorrectly configured, does not receive same, and also does not perform HARQ-ACK information corresponding thereto.

### - Method 3-2: Repetitive transmission or reception of the SPS PDSCH after dividing same, based on a slot boundary

For example, in a case where an SPS PDSCH is allocated over slot k and slot k+1 as shown in case 650 of FIG. 6, the terminal determines that the SPS PDSCH is repeatedly received after being divided into the SPS PDSCH 652 and the SPS PDSCH 654. The terminal transmits, as HARQ-ACK information for the SPS PDSCH, only one piece of HARQ-ACK information, based on the last SPS PDSCH 654.

### - Method 3-3: Transmission or reception of a corresponding part only for a slot before a slot boundary with respect to the SPS PDSCH

For example, in a case where an SPS PDSCH is allocated over slot k and slot k+1 as shown in case 650 of FIG. 6, the terminal determines, for only the SPS PDSCH 652, that a valid SPS PDSCH has been allocated, and receives the SPS PDSCH. That is, transmission or reception for the SPS PDSCH 654 is not performed. The terminal transmits only one piece of HARQ-ACK information, based on the SPS PDSCH 652.

### - Method 3-4: Transmission or reception only for a slot after a slot boundary with respect to the SPS PDSCH

For example, in a case where an SPS PDSCH is allocated over slot k and slot k+1 as shown in case 650 of FIG. 6, the terminal determines, for only the SPS PDSCH 654, that a valid SPS PDSCH has been allocated, and receives an SPS PDSCH. That is, transmission or reception for the SPS PDSCH 652 is not performed. The terminal transmits only one piece of HARQ-ACK information, based on the SPS PDSCH 654.

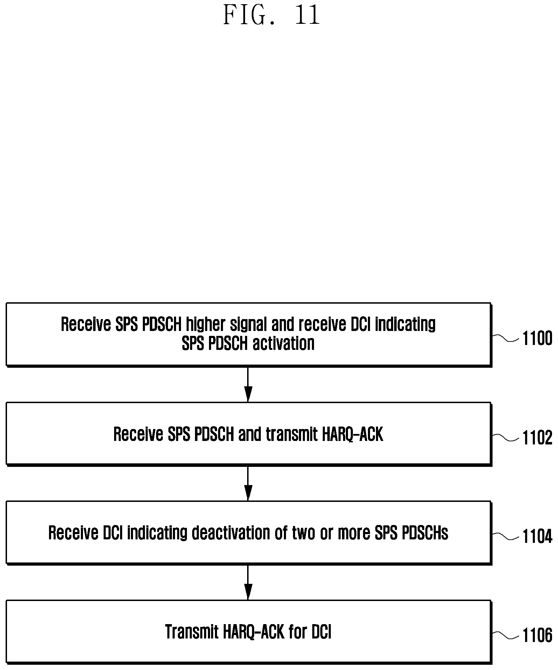

FIG. 11 is a terminal operation diagram illustrating a method of transmitting HARQ-ACK information for SPS release in a situation where two or more DL SPSs are activated according to the disclosure.

In a case where a terminal is able to operate two or more activated DL SPSs in one cell/one BWP, a base station may configure two or more DL SPSs for one terminal. The reason why two or more DL SPS configurations are supported is that, when a terminal supports various traffics, MCSs, time/frequency resource allocations, or periods of respective traffics may be different from each other and thus it is advantageous to provide a DL SPS configuration suitable for each use.

A terminal receives higher signal configuration information for DL SPS as follows.
- Periodicity: A DL SPS transmission period
- nrofHARQ-Processes: The number of HARQ processes configured for DL SPS
- n1PUCCH-AN: HARQ resource configuration information for DL SPS
- mcs-Table: MCS table configuration information applied to DL SPS
- SPS index: The index of SPS configured in one cell/one BWP

SPS index among the pieces of higher signal configuration information may be used to indicate which SPS is indicated by DCI (L1 signaling) providing SPS activation or deactivation. Specifically, in a situation where two SPSs are configured in one cell/one BWP through a higher signal, in order to know which SPS, among the two SPSs, the activation of which is indicated by DCI indicating SPS activation, a terminal may require index information indicating same in SPS higher information. For example, a HARQ process number field in DCI indicating SPS activation or deactivation indicates the index of a particular SPS, and the terminal may perform SPS activation or deactivation through same. Specifically, in a case where DCI including a CRC scrambled with a CG-RNTI includes the following information as shown in [Table 9] and a new data indicator (NDI) field of the DCI indicates 0, the terminal determines that release (deactivation) of a pre-activated particular SPS PDSCH is indicated.

**[Table 9]**

| | **DCI format 0_0** | **DCI format 1_0** |
|---|---|---|
| HARQ process number | SPS index | SPS index |
| Redundancy version | set to '00' | set to '00' |
| Modulation and coding scheme | set to all '1's | set to all '1's |
| Frequency domain resource assignment | set to all '1's | set to all '1's |

In [Table 9] above, one HARQ process number may indicate one SPS index or multiple SPS indexes. One or multiple SPS indexes may be indicated by a DCI field (a time resource field, a frequency resource field, MCS, RV, a PDSCH-to-HARQ timing field, etc.) other than the HARQ process number field. Basically, one SPS may be activated or deactivated by one DCI. The position of a type 1 HARQ-ACK codebook for HARQ-ACK indicator for DCI indicating SPS PDSCH release is the same as that of a type 1 HARQ-ACK codebook corresponding to a reception position of a corresponding SPS PDSCH. When the position of a HARQ-ACK codebook corresponding to candidate SPS PDSCH reception in a slot is k₁, the position of a HARQ-ACK codebook for DCI indicating release of a corresponding SPS PDSCH is also k₁. Therefore, when DCI indicating SPS PDSCH release is transmitted in slot k, a terminal may not expect that a PDSCH corresponding to a HARQ-ACK codebook position k₁ is scheduled in the same slot k, and when this situation occurs, the terminal considers the situation as an error case.

[Table 9] above shows DCI formats 0_0 and 1_0 as an example, but is also applicable to DCI formats 0_1 and 1_1, and is sufficiently expandably applicable to DCI formats 0_x and 1_x.

According to the above operation, a terminal receives an SPS PDSCH higher signal and receives DCI indicating SPS PDSCH activation, whereby one SPS PDSCH or two or more SPS PDSCHs are simultaneously operable in one cell/one BWP (operation 1100). Thereafter, the terminal periodically receives an SPS PDSCH activated in one cell/one BWP, and transmits HARQ-ACK information corresponding thereto (operation 1102).

The HARQ-ACK information corresponding to the SPS PDSCH may be determined by the terminal through slot interval information indicated by a PDSCH-to-HARQ-ACK timing included in activated DCI information, and information on a precise time and frequency in a corresponding slot and PUCCH format information which are indicated through n1PUCCH-AN information included in SPS higher configuration information. If there is no PDSCH-to-HARQ-ACK timing field in the DCI information, the terminal may assume, as a default value, a value previously configured through a higher signal, and determine that the value has been applied.

In a situation where type 1 HARQ-ACK codebook is configured, when the terminal receives DCI indicating deactivation of one SPS PDSCH (operation 1104), the terminal may include a HARQ-ACK codebook position for HARQ-ACK information for the DCI in a HARQ-ACK codebook position corresponding to corresponding SPS PDSCH reception, and transmit the HARQ-ACK information. If deactivation of two or more SPS PDSCHs is indicated by one DCI, the terminal may have a problem on which HARQ-ACK codebook position at which the terminal has to include and transmit the HARQ-ACK information for the DCI. In order to solve the problem, the terminal transmits HARQ-ACK by using at least one of the following methods (operation 1106).

### • Method a-1: Lowest index (or highest index)

This method is a method of, in a case where two or more SPS PDSCHs are deactivated by DCI indicating deactivation, including HARQ-ACK information corresponding to the DCI indicating the deactivation at a HARQ-ACK codebook position corresponding to SPS PDSCH reception having the lowest value (or the highest value or the middle value) among indexes of the SPS PDSCHs. For example, in a case where SPS PDSCH index 1, SPS PDSCH index 4, and SPS PDSCH index 5 are simultaneously deactivated by one DCI, the terminal includes and transmits HARQ-ACK information for the DCI at a HARQ-ACK codebook position corresponding to SPS PDSCH index 1 (or 5).

### • Method a-2: Earliest HARQ-ACK codebook occasion (latest HARQ-ACK codebook occasion)

This method is a method of, in a case where two or more SPS PDSCHs are deactivated by DCI indicating deactivation, including HARQ-ACK information corresponding to the DCI indicating the deactivation in a HARQ-ACK codebook positioned at the earliest (or the latest) among HARQ-ACK codebook positions of the SPS PDSCHs. For example, in a situation where SPS PDSCH index 1, SPS PDSCH index 4, and SPS PDSCH index 5 are simultaneously deactivated by one DCI, if a HARQ-ACK codebook position corresponding to PDSCH reception of SPS PDSCH index 1 is k₁, a HARQ-ACK codebook position corresponding to PDSCH reception of SPS PDSCH index 2 is k₂, a HARQ-ACK codebook position corresponding to PDSCH reception of SPS PDSCH index 3 is k₃, and k₁ < k₂ < k₃, the terminal includes and transmits HARQ-ACK information corresponding to the DCI at k₁ (or k₃). If two or more SPS PDSCHs have the same HARQ-ACK codebook position for PDSCH reception, the terminal considers the SPS PDSCHs as one SPS PDSCH and performs the above operation.

### • Method a-3: All HARQ-ACK codebook occasions

This method is a method of, in a case where two or more SPS PDSCHs are deactivated by DCI indicating deactivation, including and transmitting HARQ-ACK information for the DCI at all HARQ-ACK codebook positions instead of selecting a HARQ-ACK codebook position according to Method a-1 or a-2 described above. For example, in a case where SPS PDSCH index 1, SPS PDSCH index 4, and SPS PDSCH index 5 are simultaneously deactivated by one DCI, the terminal includes and transmits HARQ-ACK information for the DCI at HARQ-ACK codebook positions corresponding to SPS PDSCH indexes 1, 4, and 5. If at least two of the SPS PDSCHs have the same HARQ-ACK codebook position, the terminal considers same as one SPS PDSCH and transmits the information. As another example, in a situation where SPS PDSCH index 1, SPS PDSCH index 4, and SPS PDSCH index 5 are simultaneously deactivated by one DCI, if a HARQ-ACK codebook position corresponding to PDSCH reception of SPS PDSCH index 1 is k₁, a HARQ-ACK codebook position corresponding to PDSCH reception of SPS PDSCH index 2 is k₂, a HARQ-ACK codebook position corresponding to PDSCH reception of SPS PDSCH index 3 is k₃, and k₁ < k₂ < k₃, the terminal includes and transmits HARQ-ACK information corresponding to the DCI at k₁, k₂, and k₃. If two or more SPS PDSCHs have the same HARQ-ACK codebook position for PDSCH reception, the terminal considers the SPS PDSCHs as one SPS PDSCH and performs the above operation.

### • Method a-4: gNB configuration

This method is first a method of determining Methods a-1 to a-3 described above by a base station through a higher signal. Secondly, a base station may directly determine a HARQ-ACK codebook position through a higher signal or L1 signal without using Methods a-1 to a-3 described above. A HARQ-ACK codebook position determinable by the base station may be determined through a higher or L1 signal among available candidate HARQ-ACK codebook position candidates of two or more SPS PDSCHs when the SPS PDSCHs are deactivated by one DCI, or may be determined by a higher or L1 signal regardless of the candidates.

In a case where DCI indicating release or deactivation of one or multiple SPS PDSCHs, a terminal does not expect that a HARQ-ACK codebook position at which HARQ-ACK information for the DCI is to be transmitted is the same as that at which HARQ-ACK information for a PDSCH scheduled by a different DCI is to be transmitted, and when such scheduling is received, the terminal considers the scheduling as an error case and performs a random operation.

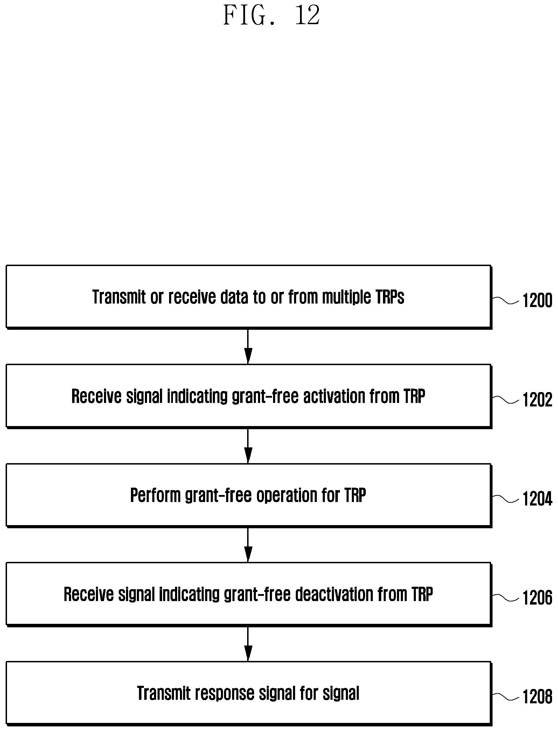

FIG. 12 is a diagram illustrating a grant-free operation in a situation where a terminal is connected to two or more transmission and reception points (TRPs) according to the disclosure.

A terminal may transmit or receive data to or from multiple TRPs (operation 1200). The term TRP may be used together with a base station (BS).

In this situation, the terminal receives a signal indicating grant-free activation from one or multiple TRPs (operation 1202). The signal may be a higher signal or an L1 signal.

The terminal may transmit or receive data to or from the one or more TRPs through a grant-free resource after receiving a signal indicating activation information (operation 1204). In addition, the terminal is able to receive one or more grant-free resource configurations in one cell and one BWP.

Thereafter, the terminal receives a signal indicating grant-free deactivation/release from the one or multiple TRPs (operation 1206). The signal may be a higher signal or an L1 signal.

The terminal transmits a response signal for the signal (operation 1208). For example, when grant-free is SPS, the signal is DCI and the terminal transmits HARQ-ACK information for the DCI. As another example, when grant- free is configured grant type 2, the signal is DCI and the terminal transmits, to a TRP, confirmation information using a MAC CE as response information for the DCI.

A grant-free operation generally is configured grant type 1 and configured grant type 2 in uplink, and is semi-persistent scheduling (SPS) in downlink. Configured grant type 1 is a type in which configured grant resource configuration and activation or deactivation is performed by a higher signal. Configured grant type 2 is a type in which partial resource configuration information is transferred through a higher signal, and remaining configured grant resource configuration information is transferred and activation or deactivation is performed through DCI (L1 signal). In the corresponding description, for convenience, all types are described as grant-free. In a case where a terminal is able to transmit or receive data to or from two or more TRPs in a situation where two or more grant-free configurations are possible in one cell and one BWP, one grant-free resource may be associated with one TRP, and data transmission or reception may be performed thereon. For example, when grant-free resource A is configured, a terminal determines that the grant-free resource is associated with TRP 1, and receives or transmits data from or to TRP 1 on a periodic grant-free resource.

Specifically, in a case of configured grant type 1, a configured grant resource configuration and activation or deactivation are indicated by only a higher signal without an L1 signal. Therefore, higher signal information may include information notifying of which TRP from which a corresponding configured grant is transmitted. For example, the following parameter may exist in pieces of higher information on a configured grant type.

### • TRP index (or spatial domain information): Information on TRP associated with configured grant

One or multiple TRPs may be associated with one configured grant. Specifically, a case where there are multiple TRPs associated with a configured grant may be subdivided into the following situations.

### • Situation b-1: Associated with different TRPs for each of particular configured grant resources

For example, in a case where one configured grant resource is periodically configured and a terminal is connected to two TRPs, odd-numbered configured grants may be associated with TRP 1 and even-numbered configured grants may be associated with TRP 2 from a time point when a configured grant is activated. To generalize this, an associated TRP for each particular configured grant may be determined by an equation as "configured grant index" mod "TRP number" = "TRP index".

### • Situation b-2: Associated with two or more TRPs for each of all configured grant resources

A terminal may transmit data to multiple TRPs for each configured grant occasion.
- Situation b-3: A transmission period is determined for each TRP regardless of a configured grant index, and thus a particular configured grant may be associated with one TRP and a different configured grant may be associated with multiple TRPs. For example, in a case where TRP 1 is associated with all configured grant resources and TRP 2 is associated with even-numbered configured grant resources in a situation where a terminal is connected to two TRPs, if data occurs only for TRP 1 on odd-numbered configured grant resources, the terminal transmits the data, and if data occurs for TRP 1 and TRP 2 in the even-numbered configured grant resources, the terminal transmits the data on the corresponding resources.

The above situation is applicable to all grant-free operations including SPS. Information relating to one grant-free resource being associated with multiple TRPs may be configured by a higher or L1 signal. In a case of SPS, a terminal receives configuration information and activation information of configured grant type 1 and then, when data occurs on a configured grant resource configured for a TRP indicated by the TRP index, transmits the data without a separate grant.

In a case of configured grant type 2, a base station transfers partial information through a higher signal, and indicates remaining configuration information and activation or deactivation through an L1 signal. When the TRP index information exists in information configured through a higher signal, a terminal receives an L1 signal indicating activation of configured grant type 2 according to the information and then, when data to be transmitted through a configured grant resource exists with respect to a TRP indicated by a TRP index provided in the corresponding higher configuration information, transmits the data without a separate grant. Meanwhile, when the higher configuration information does not include information relating to a TRP index, the terminal implicitly determines a TRP to which data is to be transmitted with respect to a resource configured as the configured grant, according to a TRP associated with a CORESET on which DCI indicating activation of configured grant type 2 is transmitted. For example, in a case where a CORESET on which DCI indicating activation of configured grant type 2 is transmitted is transmitted from TRP 1, when data occurs for a corresponding activated configured grant resource, the terminal transmits the data to TRP 1 without a separate grant. It may be possible to determine a TRP to which DCI indicating deactivation of configured grant type 2 is transmitted, through at least one of the following two methods.
- Method b-1: With respect to a configured grant resource associated with TRP 1, only DCI having been transmitted on a CORESET of TRP 1 may indicate release of a corresponding grant. If one DCI supports simultaneous release of two or more configured grant resources, this method requires both of the two or more configured grants to be associated with TRP 1.
- Method b-2: Unlike method 1, DCI having been transmitted on a CORESET associated with a TRP other than TRP 1 may also indicate release of a corresponding configured grant. If one DCI supports simultaneous release of two or more configured grant resources, this method also allows the two or more configured grants being associated with different TRPs.

Detailed operations of SPS are almost similar to those of configured grant type 2 described above, and a difference therebetween is a terminal receiving data for an activated SPS resource and reporting HARQ-ACK information therefor. If the SPS resource is associated with TRP 1, the terminal transmits HARQ-ACK information for data received on the SPS resource to TRP 1. If the SPS resource is associated with two or more TRPs, a TRP to which the terminal is to transmit HARQ-ACK information may be determined according to the above situation. If a particular SPS resource is received from TRP 1 by one SPS configuration, the terminal transmits HARQ-ACK information for a PDSCH received by a corresponding SPS to TRP 1. If a particular SPS resource is received from TRP 1 and TRP 2 by one SPS configuration, the terminal transmits HARQ-ACK information for a PDSCH received by a SPS to TRP 1 or TRP 2 by using a higher signal configuration or an L1 signal indication. Alternatively, if a particular SPS resource is received from TRP 1 and TRP 2 by one SPS configuration, the terminal transmits HARQ-ACK information for a PDSCH received by a SPS to TRP 1 having the lowest index (or if TRP 1 is master TRP, TRP 1).

As another example, in a situation where DCI indicating activation in configured grant type 2 or SPS is transmitted on a CORESET associated with TRP 1, a TRP other than TRP 1 may be sufficiently possible as a TRP with which configured grant type 2 or SPS is associated. Specifically, when the terminal determines TRP association information on the configured grant type 2 or SPS through a higher signal in advance, the above operation may be possible. Alternatively, a field directly indicating TRP information may be added in the DCI information indicating activation, or TRP information may be indirectly indicated using a HARQ process number or an RV value in the DCI.

As another example, when different grant-free resources associated with one TRP overlap with each other, the terminal is required to select one of them and transmit or receive data on the grant-free resource. A selection method is terminal implementation, or a method in which, in a case of grant-free resources, a priority value is transferred by a higher signal configuration or an L1 signal indication, and the terminal may transmit or receive data on a grant-free resource having a high priority, based on the priority value. When different grant-free resources associated with different TRPs overlap with each other, the terminal does not apply the selection method, and may be able to transmit or receive data on the grant-free resources.

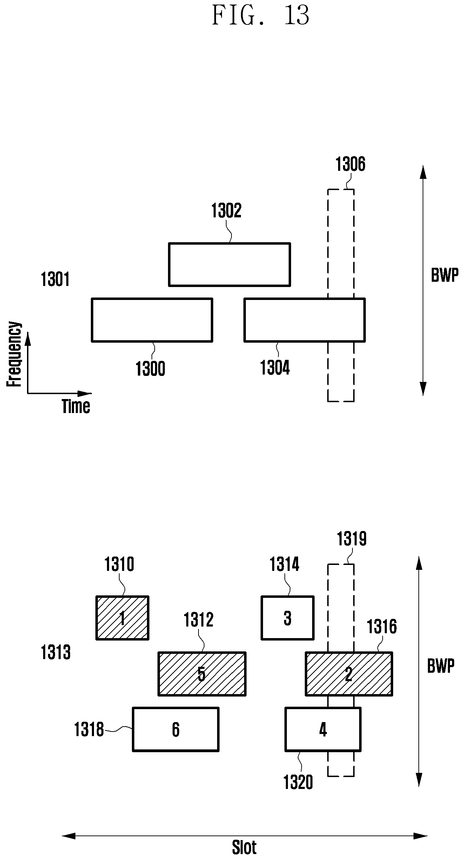

FIG. 13 is a diagram illustrating a DL SPS reception operation of a terminal in a situation where two or more DL SPSs overlap with each other in time resources according to the disclosure.

In the disclosure, DL SPS reception is described, but the disclosure is applicable to UL SPS in the same way. If the disclosure is applied to a UL SPS, a base station is able to perform transmission of configuration information and activation by DCI. However, an operation related to TB reception in a situation of overlapping in time resources may be performed by the base station rather than a terminal.

DL SPS has been described in the disclosure, but section 10.2 of 3GPP specification TS38.213, section 5.3 of TS38.321, and section 6.3.2 of TS38.331 are also referred.

As illustrated in FIG. 13, a terminal is able to receive two or more different pieces of DL SPS higher signal configuration information in one activated BWP, and activate them. In Rel-16 NR, a maximum of eight DL SPS configurations in one BWP is possible. The disclosure is not limited thereto, and is also applicable to eight or more DL SPS configurations in a BWP.

Different DL SPS PDSCHs (hereinafter, description for DL SPS) may be distinguished by index information previously configured/indicated by a higher signal or an L1 signal. For example, the index information may be explicitly included in configuration information transmitted by a higher signal. The configuration information may include at least one of periodicity, nrofHARQ-Processes, n1PUCCH-AN, and mcs-Table information for each DL SPS configuration. In addition, the configuration information may include index information for distinguishing between DL SPSs. As another example, the index information may be included in control information transmitted through a higher signal and/or an L1 signal. As another example, the index information may be implicitly configured. The index information may be configured to be sequentially increased according to a sequence in which DL SPS configuration information is included in configuration information transmitted through a higher signal. As another example, the index information may be configured to be sequentially increased in a sequence of being activated according to control information transmitted through an L1 signal after a higher configuration. If multiple DL SPSs are activated by control information, the index information may be configured to be sequentially according to a sequence of being included in a higher signal.

Moreover, a situation where two or more activated different DL SPS resources partially overlap with each other in terms of time resources may occur to the terminal. The above activation may imply a state of being configured by a higher signal, or a state of actually operating by an L1 message after configuration. Alternatively, the activation may indicate both of the two states. A time resource may be configured or allocated by information included in a higher signal, or may be configured or allocated by using information included in an L1 message or the transmission time point of the L1 message.

For example, if the transmission periods of two or more DL SPS resources are different from each other, the different DL SPS resources may overlap in a particular transmission interval or slot in terms of time resources as illustrated in FIG. 13.

Reference numeral 1301 of FIG. 13 indicates a situation where three different DL SPS resources overlap in time resources. If a terminal is able to receive only one DL SPS resource in one moment, the terminal receives only one DL SPS resource among the overlapping DL SPS resources. Therefore, there may be a method of randomly selecting, by the terminal, one among the overlapping DL SPS resources. However, in view of a base station, the base station does not know which DL SPS the terminal has received among the overlapping DL SPS resources and has transmitted HARQ-ACK information therefor. Therefore, a DL SPS resource selecting method previously defined between the base station and the terminal is required. In order to solve the problem, at least one or multiple methods among the following methods may be applicable in combination.
∘ Method 4-1: This method is a method of prioritizing a DL SPS resource having the lowest index among time-overlapped DL SPS resources. For example, if a DL SPS resource having an index of 1 and a DL SPS resource having an index of 3 overlap with each other, the terminal receives a transport block (TB) transmitted from the base station, through the DL SPS resource having the index of 1, and does not receive a transport block through the DL SPS resource having the index of 3. Therefore, the terminal may perform demodulation/decoding for the TB received through the DL SPS resource having the index of 1, and transmit HARQ-ACK information therefor through a PUCCH resource previously configured for the DL SPS resource.

Even when three or more DL SPSs are time-overlapped, the terminal receives a TB transmitted through a DL SPS resource having the lowest index value. As another example, in a situation where DL SPS resources are time-overlapped, the terminal may not receive a TB transmitted through a DL SPS resource except for the DL SPS resource having the lowest index value, or may operate under an assumption that the base station does not transmit a TB through the DL SPS resource. For example, the terminal may not perform a demodulation/decoding operation on the DL SPS resource. As another example, the terminal may not transmit feedback information for the DL SPS resource, for example, Ack/Nack information.
∘ Method 4-2: This method is a method of prioritizing a DL SPS resource having the highest index among time-overlapped DL SPS resources. For example, if a DL SPS resource having an index of 1 and a DL SPS resource having an index of 3 overlap with each other, the terminal receives a transport block (TB) transmitted from the base station, through the DL SPS resource having the index of 3, and does not receive the DL SPS resource having the index of 1. Therefore, the terminal performs demodulation/decoding for the TB received through the DL SPS resource having the index of 3, and transmits HARQ-ACK information therefor through a PUCCH resource previously configured for the DL SPS resource.

Even when three or more DL SPSs are time-overlapped, the terminal receives a TB transmitted through a DL SPS resource having the highest index value. As another example, in a time-overlapped situation, the terminal may not receive a TB transmitted through a DL SPS resource except for the DL SPS resource having the highest index value, or may operate under an assumption that the base station does not transmit a TB through the DL SPS resource. For example, the terminal may not perform a demodulation/decoding operation on the DL SPS resource. As another example, the terminal may not transmit feedback information for the DL SPS resource, for example, Ack/Nack information.
∘ Method 4-3: This method is a method of prioritizing a DL SPS in a time sequence together with method 4-1 (or method 4-2). In other words, this method is a method further including excluding a DL SPS resource already determined to have a low priority through an index comparison in resource priority determination, from priority determination performed by overlap with a different resource. The resource priority determination may sequentially proceed according to a time sequence (or a reverse-time sequence in a particular time region). The particular time region may be a particular transmission interval or slot.

Specifically, the terminal determines whether a resource of a DL SPS overlaps with a resource of another DL SPS according to a time sequence. If there is an overlap, the terminal may not perform a reception operation in a DL SPS resource having a low priority through an index comparison, or may assume that the base station has not transmitted a TB in the resource. In addition, the terminal may exclude a DL SPS having a low priority and overlapping in time resources, from a future operation of determining whether there is an overlap.

Reference numeral 1301 of FIG. 13 indicates a situation where three DL SPSs differently overlap with each other. If an index value configured for a DL SPS 1300 is 1, an index value configured for a DL SPS 1302 is 3, and an index value configured for a DL SPS 1304 is 5, the terminal does not receive the DL SPS 1304 because the index value is higher than that of the DL SPS 1302, and does not receive the DL SPS 1302 because the index value is higher than that of the DL SPS 1300, according to method 4-1. Therefore, although the DL SPS 1300 and the DL SPS 1304 do not time-overlapping with each other in the situation indicated by reference numeral 1301 in FIG. 13, the terminal may receive only the DL SPS 1300 by method 4-1. As in method 4-1, in a situation where the smaller the index, the higher the priority, an operation in which the priority of a DL SPS resource is determined by only a resource in a DL SPS is configured and index information, and the terminal receives a DL SPS having a high priority may be inefficient.

In order to solve the problem, in method 4-3, a terminal determines whether a real DL SPS time-overlaps with other valid DL SPSs at a time point at which the real DL SPS is received, and if there is an overlap, does not receive a DL SPS(s) having a low priority and excludes the DL SPS having the low priority from time overlap determination. Thereafter, the terminal performs an operation of determining whether DL SPS(s), which is not excluded from the DL SPS time overlap determination, overlaps. Specifically, a method as shown in [Table 10-1] below may be applied.

**[Table 10-1]**

| |
|---|
| Step 1: Identify a DL SPS transmission resource that is valid and activated in a particular transmission interval or slot, and if there are no more valid and activated DL SPS transmission resources, end the step. |
| Step 2: Identify whether there is a different DL SPS resource time-overlapping with a DL SPS scheduled earliest among the valid and activated DL SPS transmission resource(s) identified in step 1. |
| Step 3: If there is no overlap in step 2, the terminal receives the earliest scheduled DL SPS, considers a corresponding DL SPS resource as an invalid DL SPS resource, and proceed to step 1. |
| Step 4: If there is overlap in step 3, receive a DL SPS transmission resource having the highest priority among overlapping DL SPS transmission resources, not receive the other DL SPS transmission resources, consider all the overlapping DL SPS resources as invalid DL SPS resources, and proceed to step 1. |

The method as described above will be described with reference to the situation indicated by reference numeral 1301 in FIG. 13. If an index value configured for the DL SPS 1300 is 1, an index value configured for the DL SPS 1302 is 3, and an index value configured for the DL SPS 1304 is 5, the terminal determines, as valid DL SPS resources, all the DL SPS resources 1300, 1302, and 1304 activated in a particular transmission interval or slot in step 1. In step 2, before the DL SPS 1300 scheduled earliest in a time sequence is received, the terminal may determine whether there is another DL SPS(s) overlapping therewith. The DL SPS 1300 overlaps with the DL SPS 1302. Therefore, in step 4, the terminal receives the DL SPS 1300 (having the index value of 1) having a high priority, and does not receive the DL SPS 1302 (having the index value of 3) having a low priority. The terminal determines the DL SPS 1300 and the DL SPS 1302 as invalid DL SPSs, and proceeds to step 1 to identify the next earliest DL SPS 1304. As in step 2, the terminal determines whether there are valid DL SPS resources overlapping with the DL SPS 1304. The DL SPS 1302 is not a valid DL SPS resource any longer. Therefore, the terminal determines that there is no overlapping resource, and then proceeds to step 3. The terminal receives the DL SPS 1304. Method 4-2 is also applicable in the same way. Moreover, an operation is applied by considering a time sequence from the earliest DL SPS to the latest in [Table 10-1], but the reverse sequence is also possible.
∘ Method 4-4: This method is a method of determining a priority by considering a time resource to which a DL SPS is assigned, in addition to 4-1 (or method 4-2). In other words, this method is a method further including excluding a DL SPS resource already determined to have a low priority through an index comparison in resource priority determination, from priority determination performed by overlap with a different resource. The resource priority determination process may sequentially proceed from a DL SPS having a low index in a particular time region (or from a DL SPS having a high index). The particular time region may be a particular transmission interval or slot.

Specifically, the terminal determines whether a resource of a DL SPS overlaps with a resource of another DL SPS according to the ascending order of index in a particular time region. If there is an overlap, the terminal may not perform a reception operation in a DL SPS resource having a low priority through an index comparison, or may assume that the base station has not transmitted a TB in the resource. In addition, the terminal may exclude a DL SPS having a low priority and overlapping in time resources, from a future operation of determining whether there is an overlap.

Considering method 4-3, in the situation indicated by reference numeral 1301 in FIG. 13, if an index value configured for the DL SPS 1300 is 5, an index value configured for the DL SPS 1302 is 3, and an index value configured for the DL SPS 1304 is 1, the terminal may not receive the DL SPS 1304, and receive the DL SPS 1302 although the DL SPS overlaps with the DL SPS 1304 and has a low priority. Therefore, considering in a time sequence may cause a problem. Therefore, by considering a time resource region to which all DL SPSs activated in a particular transmission interval or slot are allocated, the terminal may exclude DL SPSs overlapping with DL SPS (A) having the highest priority by at least one symbol in view of time resources, and determine to receive DL SPS (A) having the highest priority. The terminal may exclude DL SPSs overlapping DL SPS (B) resource having the highest priority by at least one in view of time resources among the remaining DL SPS resources which are not excluded, and determine to receive DL SPS (B). The terminal may continue to perform the above operations until there are no more DL SPSs that have not been determined to be received, or have not been excluded. The terminal may receive data with respect to DL SPSs determined in the particular interval or slot, and transmit HARQ-ACK information therefor to the base station. Alternatively, a method as shown in [Table 10-2] below may be applied.

**[Table 10-2]**

| |
|---|
| Step 1: Identify a DL SPS transmission resource determined to be received or not to be received, among DL SPS resources activated in a particular transmission interval or slot, and if there is at least one DL SPS transmission resource that has not been determined to be received or not to be received, proceed to step 2, and otherwise, proceed to step 3. |
| Step 2: Determine to receive a DL SPS resource having the highest priority among DL SPS transmission resources having not been determined to be received or not to be received, in step 1, determine that the terminal does not receive DL SPS resources overlapping with the DL SPS resource by at least one symbol, and proceed to step 1. |
| Step 3: The terminal receives DL SPS resources determined to be received and reports HARQ-ACK information therefor to the base station, and does not receive DL SPS resources determined not to be received |

A more detailed description will be given with reference to a situation indicated by reference numeral 1313 of FIG. 13. Referring to the situation indicated by reference numeral 1313, DL SPSs 1310, 1312, 1314, 1316, 1318, and 1320 having six different indexes are activated, and are scheduled in one slot. If a DL SPS having a low index value has a high priority, a terminal receives the DL SPS 1310 having an index of 1, and does not receive the DL SPS 1318 having an index of 6 and overlapping with the DL SPS according to method 4-4. The terminal receives the DL SPS 1316 having an index of 2 indicating the next highest priority, and does not receive the DL SPS 1314 having an index of 3 and the DL SPS 1320 having an index of 4, which overlap with the DL SPS 1316. The terminal receives the DL SPS 1312 having an index of 5 indicating the next highest priority. Therefore, the terminal eventually receives and demodulates/decodes the DL SPSs 1310, 1312, and 1316, and then reports HARQ-ACK information therefor to the base station.
∘ Method 4-5: This method is a method of determining a priority by considering symbol orientation information in a particular transmission interval or slot in a TDD situation of method 4-3 or 4-4. A symbol orientation may be one among downlink, uplink, and flexible. The method of indicating symbol orientation information in a TDD situation refers to section 11.1 of 3GPP specification TS 38.213. Fundamentally, only in a case where all the symbols of a resource region to which a DL SPS is allocated are indicated as downlink (DL) by a higher or L1 signal, the terminal may receive data. Alternatively, if at least one symbol in resources to which a DL SPS is allocated is configured/indicated as an uplink symbol or a flexible symbol by a higher or L1 signal, the terminal may not receive the DL SPS. Therefore, it may be possible to consider method 4-3 or 4-4 by reflecting the above description. In a case of method 4-3, the following conditions may be added to [Table 10-1].
   - Only in a case where all transmission resources of DL SPSs are indicated as downlink by a higher or L1 signal, the resources are considered as valid DL SPS resources. Alternatively, DL SPS resources overlapping with, by at least one symbol, symbols configured/indicated as uplink symbols or flexible symbols by a higher or L1 signal are considered to be invalid, and the terminal does not receive the DL SPS resources. In the situation indicated by reference numeral 1301 of FIG. 13, the DL SPS 1304 overlaps with a symbol 1306 configured/indicated as an uplink symbol or a flexible symbol by a higher or L1 signal, and thus the terminal does not receive the DL SPS.

In other words, before method 4-3 is performed, the terminal determines whether each of DL SPSs overlaps with an uplink symbol or a flexible symbol. The terminal does not perform reception in an overlapping DL SPS resource, and operates under an assumption that the base station has not transmitted a TB therein. Thereafter, before method 4-3 is performed, the terminal excludes a corresponding DL SPS from priority determination.

In a case of method 4-4, at least one of the following conditions may be added to [Table 10-2].
- The terminal determines not to receive DL SPS resources overlapping with, by at least one symbol, symbols configured/indicated as uplink symbols or flexible symbols by a higher or L1 signal. In the situation indicated by reference numeral 1313 of FIG. 13, the DL SPSs 1316 and 1320 overlap with a symbol 1319 configured/indicated as an uplink or flexible symbol by a higher or L1 signal, and thus the terminal does not receive the DL SPSs 1316 and 1320. Therefore, in a case described above, the terminal receives the DL SPSs 1310, 1312, and 1314, and then reports HARQ-ACK information therefor, according to method 4-4. The terminal does not receive the DL SPSs 1318, 1316, and 1320 according to methods 4-4 and 4-5.
- Alternatively, in a case where L1 reception of a slot format indicator (SFI) is configured for the terminal in FIG. 13, a DL SPS resource eventually received by the terminal according to a priority application method of [Table 10-2] only with respect to DL SPS resources all indicated as downlink symbols by an L1 signal of the SFI.

In other words, before method 4-4 is performed, the terminal determines whether each of DL SPSs overlaps with an uplink symbol or a flexible symbol. The terminal does not perform reception in an overlapping DL SPS resource, or operates under an assumption that the base station has not transmitted a TB therein. Thereafter, before method 4-4 is performed, the terminal excludes a corresponding DL SPS from priority determination.

Alternatively, after method 4-1 to method 4-5 are performed, the terminal may determine whether, with respect to DL SPSs determined to be received, symbols configured or indicated by a higher signal or L1 signal overlap with uplink symbols or flexible symbols, and may not receive a DL SPS overlapping by at least one symbol. A terminal operation as shown [Table 10-3] below may be defined in a 3GPP specification in consideration of symbol orientation of a TDD structure.

**[Table 10-3]**

| |
|---|
| If more than one PDSCH on a serving cell each without a corresponding PDCCH transmission are partially or fully overlapping in time where all symbol of PDSCH(s) are indicated by downlink symbol if UE is provided to monitor SFI, a UE is not required to decode a PDSCH among these PDSCHs other than one with the lowest configured sps-ConfigIndex. |

As another example, the terminal may be able to select a received SPS through [Table 10-4].

**[Table 10-4]**

| | |
|---|---|
| If there are two or more PDSCHs on a serving cell scheduled without PDCCH transmission are in a slot, a terminal may first exclude PDSCHs indicated as uplink symbols by a higher signal configuration related to TDD in the slot, and then receive one or more PDSCHs scheduled without PDCCH transmission according to the following sequence. | |
| | ▪ Step 1: set j=0. j is the number of selected PDSCHs for decoding. Q is a set of activated PDSCHs scheduled without corresponding PDCCH transmission within the slot. |
| | ▪ Step 2: The terminal determines to receive a PDSCH with the lowest SPS index in set Q, updates to j=j+1, and designate the received PDSCH as a survivor PDSCH. |
| | ▪ Step 3: The survivor PDSCH in step 2 and other PDSCHs where the at least part symbols overlap with the survivor PDSCH in time resources are excluded from set Q. |
| | ▪ Step 4: Repeat step 2 and step 3 until set Q is empty or j is equal to the number of unicast PDSCHs in a slot supported by the terminal. |

An operation example of [Table 10-4] above will be described with reference to the situation indicated by reference numeral 1313 in FIG. 13. If a terminal is able to receive only a maximum of two unicast PDSCHs and reference numeral 1319 is indicated as an uplink symbol according to TDD-related higher signal configuration information, the terminal eventually selects the DL SPSs 1310 and 1314 as reception SPS PDSCHs.

Specifically, the terminal excludes the DL SPSs 1316 and 1320 before executing step 1, and may determine {1310, 1312, 1318, 1314} as a set of Q in step 1. Thereafter, the terminal selects the DL SPS 1310 having the lowest SPS index and sets j=1 in step 2.

Then, the terminal excludes the DL SPS 1310 and the DL SPS 1318 overlapping therewith from set Q in step 3.

Thereafter, j=1 is smaller than 2 that is a maximum number of unicast PDSCHs receivable by the terminal and set Q is not a null set yet, and thus the terminal proceeds to step 2 again and then selects the DL SPS 1314 and sets j=2 in step 4.

Then, the terminal excludes the DL SPS 1314 from set Q in step 3. Thereafter, because, although the DL SPS 1312 is remaining in set Q, j=2 is the same as the maximum number of unicast PDSCHs receivable by the terminal, the terminal terminates step 4 and eventually determines the DL SPSs 1310 and 1314 as SPS PDSCHs having been received by the terminal.

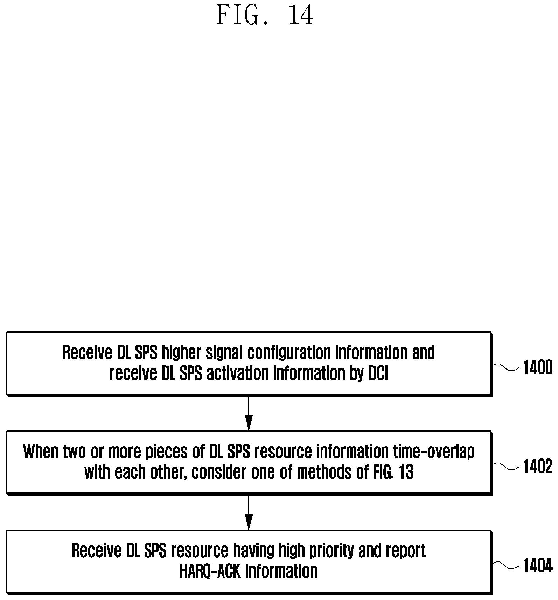

FIG. 14 is a block diagram illustrating a reception operation of a terminal in a situation where two or more DL SPSs overlap with each other in time resources according to the disclosure.

DL SPS higher configuration information may include at least the following pieces of information as shown in [Table 11] below.

**[Table 11]**

| |
|---|
| ·sps-ConfigIndex-r16: Index information of a configured SPS |
| ·SPS-ConfigDeactivationStateList-r16: Table configuration information for SPS release, wherein each state in the table includes one or multiple pieces of SPS configuration information (index). |
| ·SPS-ConfigDeactivationState-r16: This includes one or multiple pieces of SPS configuration information (index) in one state. |
| ·SPS-PUCCH-AN-List: This configures a list of a PUCCH resource ID for each HARQ-ACK codebook, and each PUCCH resource ID includes a payload size and is commonly applied for all SPS configuration information. When the corresponding information is configured, n1PUCCH-AN configuration information is disregarded. |
| ·SPS-PUCCH-AN-ResourceID: PUCCH resource ID configuration information |
| ·MaxPayloadSize: A maximum payload size for each PUCCH resource ID |
| ·Periodicity: A transmission period of DL SPS |
| ·NrofHARQ-processes: The number of HARQ processes configured for DL SPS |
| ·n1PUCCH-AN: This indicates a PUCCH resource ID. A PUCCH resource ID is determined by a separate PUCCH higher configuration information, and information on a time/frequency resource on which a PUCCH is transmitted, a PUCCH format, hopping information, etc. is included for each PUCCH resource ID. |
| ·mcs-Table: Whether MCS table 3 (QAM64LowSE) is used |

A terminal may receive one or multiple SPSs in one BWP through higher signal configuration information of [Table 11] above. Other pieces of SPS configuration information are included in DCI activating a corresponding SPS. The DCI includes a CRC scrambled with a CS-RNTI.

In FIG. 14, a terminal receives pieces of DL SPS configuration information as shown in [Table 11] above through a higher signal (RRC) in advance. [Table 11] is merely an example, the disclosure is not limited thereto, and use of only partial information may be possible. In addition, the terminal may receive pieces of index information on DL SPSs together, or the pieces of index information on the DL SPSs may be indirectly configured.

The pieces of DL SPS information configured as a high configuration may be activated individually or in group by DCI including a CRC scrambled with a CS-RNTI (operation 1400). Here, a DL SPS may be activated by only receiving configuration information of a higher signal, and in this case, the reception of DCI including a CRC scrambled by a CS-RNTI may be omitted.

The terminal periodically receives each DL SPS on a previously configured resource. If two or more DL SPSs having different indexes time-overlap with each other, the terminal considers or performs at least one of the methods (methods 4-1 to 4-5) described with reference to FIG. 13 (operation 1402). Accordingly, the terminal receives only a DL SPS having a high priority (e.g., the lowest index value), and reports HARQ-ACK information for the DL SPS (operation 1404). The terminal does not receive other DL SPSs having a low priority (e.g., a high index value), and does not report HARQ-ACK information or not generate HARQ-ACK information itself. In a case where the terminal receives two or more DL SPS resources in one slot, the terminal is able to use one of the following two methods when a HARQ-ACK codebook is configured.
∘ Method 5-1: The terminal sequentially maps pieces of HARQ-ACK information from a piece of HARQ-ACK information for a DL SPS resource having the lowest index. For example, in a case where the terminal receives a DL SPS having index 1, a DL SPS having index 3, and a DL SPS having index 5 in one slot, the terminal may configure a HARQ-ACK codebook as [HARQ-ACK information for DL SPS index 1, HARQ-ACK information for DL SPS index 3, HARQ-ACK information for DL SPS index 5].
∘ Method 5-2: The terminal may sequentially map pieces of HARQ-ACK information from a piece of HARQ-ACK information for the first received DL SPS by considering a time resource region of DL SPSs having actually been received by the terminal in a slot. For example, in a case where the terminal receives a DL SPS having index 1 in symbols 1-3, a DL SPS having index 3 in symbols 10 and 11, and a DL SPS having index 5 in symbols 4-6, the terminal configures a HARQ-ACK codebook as [HARQ-ACK information for DL SPS index 1, HARQ-ACK information for DL SPS index 5, HARQ-ACK information for DL SPS index 3] in view of time resources in which an SPS PDSCH is actually transmitted or received. Alternatively, the terminal uses a time domain resource allocation (TDRA) value applied when activating a DL SPS. That is, the terminal generates a HARQ-ACK codebook of DL SPSs received in one slot from TDRA values of the DL SPSs by referring to section 9.1.2 of 3GPP specification TS 38.213.

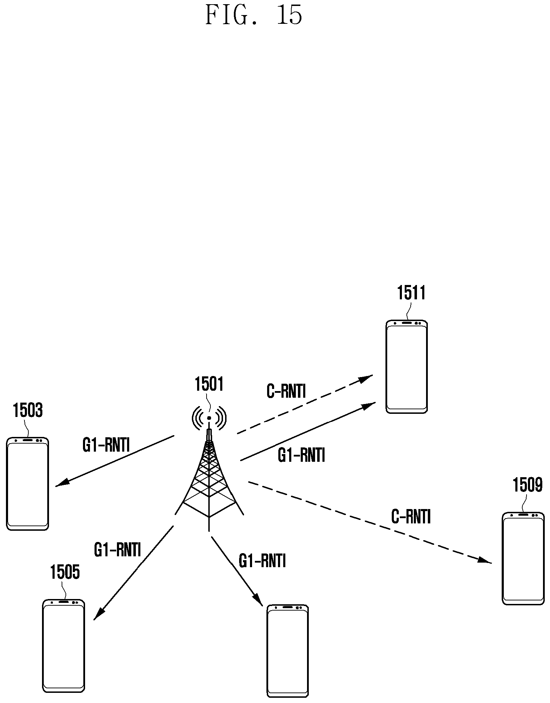

Next, an example of a signal transmission/reception method for a groupcast service in a wireless communication system according to various embodiments of the disclosure will be described with reference to FIG. 15.

FIG. 15 is a diagram briefly illustrating an example of a signal transmission/reception method for a groupcast service in a wireless communication system according to various embodiments of the disclosure.

FIG. 15 illustrates an example of groupcast in which a base station 1501 transmits the same control information and the same data to multiple terminals, for example, terminals 1503, 1505, 1507, and 1511. First, the base station notifies the terminals 1503, 1505, 1507, and 1511 of a G-RNTI usable to receive control information for groupcast through a system information block (SIB, hereinafter, this will be called "SIB"), pre-configured information, or a pre-configured message. Here, the G-RNTI is a group radio network temporary identifier (G-RNTI, hereinafter, this will be called "G-RNTI").

Each of the terminals 1503, 1505, 1507, and 1511 may receive a G1-RNTI (or G-RNTI) transmitted from the base station 1501, and receive control information for groupcast by using the G-RNTI. The G-RNTI may be transmitted after being scrambled with a cyclic redundancy check (CRC, hereinafter, this will be called "CRC") of control information for groupcast, for example, downlink control information (DCI, hereinafter, this will be called "DCI").

In FIG. 15, a terminal 1509 may be a terminal having accessed the base station 1501, and may be a terminal having received a cell radio network temporary identifier (C-RNTI, hereinafter, this will be called "C-RNTI") from the base station 1501. In addition, the terminal 1511 may be a terminal having accessed the base station 1501, and may be a terminal having received a C-RNTI from the base station 1501, and also having received a G-RNTI for groupcast.

In a case where the same control information and data are transmitted and one or multiple terminals are able to receive the transmitted same control information and data, this may indicate groupcast for the control information and data. In addition, in a case where, as the terminal 1509 or the terminal 1511 does in FIG. 15, a C-RNTI or a terminal-specific RNTI is received and only particular terminals receive control information and data by using the C-RNTI or the terminal-specific RNTI, this may indicate unicast for the control information and data.

Meanwhile, in various embodiments of the disclosure, a terminal may be configured to receive a control channel signal and a data channel signal for groupcast from transmitter A, and receive a control channel signal and a data channel signal for unicast from transmitter B. In various embodiments of the disclosure, transmitter A and transmitter B may be the same transmitter or different transmitters. In addition, in various embodiments of the disclosure, transmitter A and transmitter B may be base stations, vehicles, or general terminals.

A case where transmitter A and transmitter B are base stations may be a case where groupcast data and unicast data are transferred from the base stations, that is, are transmitted through Uu links.

On the other hand, in a case where transmitter A and transmitter B are vehicles or general terminals, the groupcast transmission and unicast transmission may be sidelink transmission. In this case, each of transmitter A and transmitter B may be a terminal operating as a leader node or an anchor node in a corresponding group. Therefore, each of transmitter A and transmitter B may a terminal capable of performing groupcast transmission for at least different terminal in the group, and performing an operation of receiving control information from the at least different terminal. In addition, in various embodiments of the disclosure, it is obvious that transmitter A may be a vehicle and transmitter B may be a base station. In addition, various embodiments of the disclosure are described under the assumption that transmitter A and transmitter B are one transmitter. However, various embodiments of the disclosure are obviously applicable even when transmitter A and transmitter B are different transmitters.

A terminal may receive, for reception of a control channel signal and a data channel signal for groupcast, an RNTI (in the following description, it should be noted that an RNTI corresponding to a unique ID for reception of a control channel signal and a data channel signal for the groupcast may be used together with a G-RNTI, a group-common RNTI, or a multicast and broadcast service (MBS)-RNTI, or a group identifier) corresponding to a unique identifier (ID, hereinafter, this will be called "ID"), or receive same from a base station or another terminal in a group (here, the other terminal in the group may be a leader node). The terminal may receive a control channel signal for groupcast by using the G-RNTI, and receive a data channel signal, based on the control channel signal for groupcast.

In addition, in various embodiments of the disclosure, a control channel for data scheduling may be used together with a physical downlink control channel (PDCCH, hereinafter, this will be called "PDCCH") or a physical sidelink control channel (PSCCH, hereinafter, this will be called "PSCCH"). A data channel may be used together with a physical downlink shared channel (PDSCH, hereinafter this will be called "PDSCH") or a physical sidelink shared channel (PSSCH, hereinafter, this will be called "PSSCH"). A feedback channel may be used together with a physical uplink control channel (PUCCH, hereinafter, this will be called "PUCCH") or a PSCCH. In addition, in various embodiments of the disclosure, control information for scheduling, which is received by a terminal, is assumed, for example, as DCI, but the control information for scheduling is naturally implementable in various types other than the DCI.

In various embodiments of the disclosure, one terminal transmitting the same data to multiple terminals or a base station transmitting the same data to multiple terminals may be called groupcast or multicast. In various embodiments of the disclosure, it should be noted that groupcast may be used together with multicast.

In addition, in various embodiments of the disclosure, "data" may include a transport block (TB) that is transferred through a shared channel such as a PDSCH, a PUSCH, or a PSSCH.

In the disclosure, an example of a higher signal (or a high-level signal) may indicate terminal-common higher signals, such as MIB or SIB, or terminal-specific higher signals, such as RRC or MAC CE.

In the disclosure, an example of an L1 signal may indicate a particular field in DCI, DCI format information, information on an RNTI scrambled with a CRC of DCI, or information on a control plane resource on which DCI is transmitted or received.

In the disclosure, groupcast data is schedulable by DCI or is semi-statically schedulable without DCI as SPS. In addition, whether there is a HARQ-ACK feedback for groupcast data may be notified of by a higher signal or an L1 signal. In addition, in a case where a HARQ-ACK feedback for groupcast data is configured, there may be two types of the HARQ-ACK feedback. The first type is sending a NACK when data decoding fails and sending an ACK when data decoding succeeds, and is called a first HARQ-ACK feedback type (reporting ACK/NACK information). The second type is not performing HARQ-ACK feedback when data decoding succeeds and sending a NACK only when data decoding fails, and is called a second HARQ-ACK feedback type (reporting only NACK information).

A base station may know, through the first HARQ-ACK feedback type, whether data decoding has succeeded or failed for each terminal having received groupcast data. Therefore, the base station may re-transmit groupcast data optimized for terminals having failed decoding. In addition, when a terminal misses DCI scheduling the corresponding data, the terminal does not transmit an ACK or NACK. This is called no detection (DTX), and the base station may perform more optimized retransmission by considering same. Specifically, when transmitting data, the base station configures a data information interval in which the data is to be transmitted, by using a redundancy version (RV). If the terminal fails data decoding and thus the base station reschedules corresponding data again, the base station may change an RV value to transmit or receive more parity bits so as to increase decoding performance of the terminal. Meanwhile, if the terminal misses DCI scheduling the first data and thus fails to receive data itself, the base station may retransmit the data at the same RV value as that of the first transmission. Many uplink resources may be needed due to a HARQ-ACK feedback resource being required to be configured for each terminal receiving groupcast data.

Meanwhile, a base station may know, through the second HARQ-ACK feedback type, only whether data decoding of groupcast data has failed, and normally, when terminals receiving groupcast data fail in data decoding, the terminals may transmit NACK information through a common HARQ-ACK feedback resource. Therefore, differently from the first HARQ-ACK feedback type, it is not possible to determine whether groupcast data decoding is successful for each terminal. Therefore, when a NACK is detected (or a detected reception energy is a particular level or higher) through at least a HARQ-ACK feedback resource, a base station may determine that at least one terminal has failed groupcast data decoding. Therefore, the base station performs retransmission of corresponding groupcast data. According to the feedback type, all or some of terminals receiving groupcast data are able to report NACK information on a common HARQ-ACK feedback resource, and thus groupcast data retransmission may be possible with fewer HARQ-ACK resources. However, when some terminals miss DCI scheduling groupcast data, the terminals may not be able to transmit HARQ-ACK information. Therefore, when at least one terminal among terminals receiving groupcast data does not transmit an NACK, a base station may consider that all the terminals have succeeded in groupcast data reception. Therefore, terminals having missed DCI scheduling groupcast data may not be able to receive retransmission of corresponding data.

In a situation where groupcast data is transmitted or received through SPS, there is no separate scheduling DCI, and thus there should be no instance where a terminal receiving groupcast data misses DCI reception. Therefore, some disadvantages of the second HARQ-ACK feedback type described above may not exist in SPS. However, in a case where SPS is a method of receiving higher signal information as shown in [Table 11] and receiving remaining information through DCI, activation of SPS may be indicated by DCI, and a terminal receives data scheduled by DCI indicating SPS activation and reports HARQ-ACK information therefor, whereby SPS activation is completed. Similarly thereto, a terminal reports HARQ-ACK information for DCI indicating release (deactivation) of SPS without separate data transmission or reception according to the DCI, whereby SPS release is completed. If the SPS is for groupcast data transmission or reception, there is a possibility that DCI indicating SPS activation and release may be transmitted or received based on groupcast. Therefore, the following description relates to a process of transmitting or receiving groupcast data by using SPS.

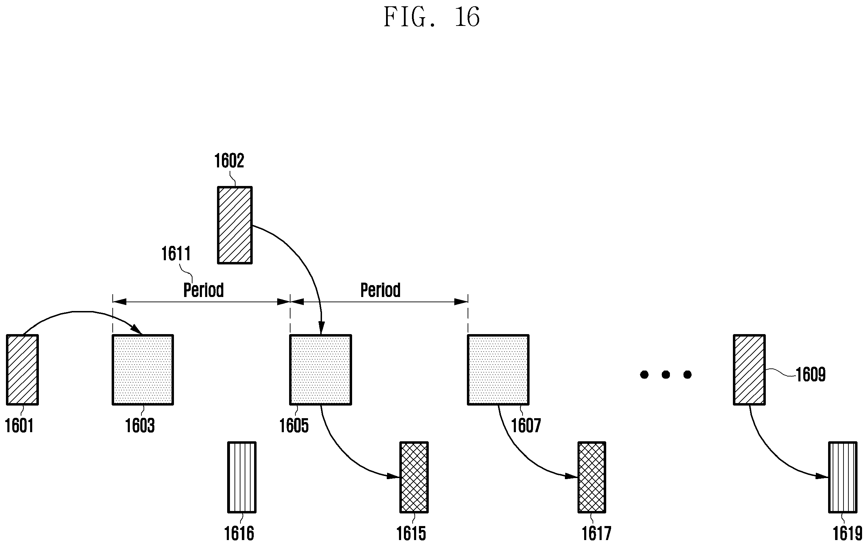

FIG. 16 is a diagram illustrating a SPS-based groupcast data transmission or reception method according to an embodiment of the disclosure.

The SPSs described above are mainly SPSs for unicast data, but FIG. 16 shows an SPS for groupcast data. If an SPS operation process for unicast data is applied to groupcast without change, terminals receiving groupcast data may first receive pieces of SPS higher signal information as shown in [Table 11] in advance, then receive DCI 1601 activating a corresponding SPS, receive a PDSCH 1603 scheduled by the DCI, and then report a PDSCH decoding result through a HARQ-ACK 1616 to a base station. Thereafter, the terminal receiving groupcast data may receive PDSCHs 1605 and 1607 without DCI scheduling according to a period 1611 previously configured through a higher signal, based on a slot in which the PDSCH 1603 has been transmitted and received, and report HARQ-ACKs 1615 and 1617 therefor.

Then, the terminal receiving groupcast data may receive DCI 1609 indicating release of the SPS, and report a corresponding DCI decoding result through a HARQ-ACK 1619 scheduled by the DCI. Thereafter, release of the SPS may be completed. The above SPS operation description may correspond to a case where all terminals has succeeded to receive DCI information indicating SPS activation or release for groupcast data.

If some terminals among terminals to receive groupcast data miss DCI information indicating SPS activation or release, an SPS operation is applied to only terminals having correctly received the DCI information. Therefore, an SPS operation is required to be improved by considering missing of DCI information. In addition, if the HARQ-ACKs 1613 and 1619 corresponding to the DCI 1601 and 1609 indicating SPS activation or release are the second HARQ-ACK feedback type of reporting only NACK information, although data transmission or reception is possible with fewer HARQ-ACK information resources, this type is unable to ensure that all terminals have well received the DCI 1601 and 1609 indicating SPS activation or release. Therefore, at least the HARQ-ACKs 1613 and 1619 corresponding to the DCI 1601 and 1609 indicating SPS activation or release should be the first HARQ-ACK feedback type. After the activation of the SPS, the HARQ-ACKs 1615 and 1617 for the groupcast data 1605 and 1607 having been received without scheduling DCI may be the first HARQ-ACK feedback type or the second HARQ-ACK feedback type, and corresponding information may be indicated by a particular field in the DCI activating the SPS or notified of by a higher signal.

If the HARQ-ACK 1613 corresponding to the DCI 1601 indicating SPS activation is the first HARQ-ACK feedback type, the base station may determine, through an ACK, an NACK, or DTX, whether each of terminals receiving groupcast data has well received the DCI (first DCI). Specifically, when the base station has received an ACK or NACK, the base station may determine that a corresponding terminal has well received at least the DCI (first DCI) activating the SPS.

Meanwhile, when the base station determines DTX, the base station may determine that a corresponding terminal has failed to receive the DCI (first DCI) activating the SPS. Therefore, the base station may transmit DCI (second DCI) 1602 indicating activation information of an SPS to terminals being DTX. However, the DCI (second DCI) information activating the SPS may have an RNTI scrambled with one RNTI (G-RNTI) by all groupcast terminals, and thus even a terminal having well received the DCI (first DCI) activating the SPS may receive the second DCI. Therefore, it may be inefficient to configure resources other than the existing SPS having been activated by at least some terminal by the first DCI.

Therefore, it is sensible for the base station to activate, by using the second DCI, at least one among the SPS resources 1605 and 1607 after the first SPS resource 1603 for terminals having missed the first DCI. This is because, when the SPS resource 1605 is activated by the second DCI, the SPS resource has the same period as that of the SPS resource 1603 activated by the first DCI. Therefore, terminals having received the first DCI and the second DCI, respectively, may consider that SPSs having the same period are activated. A terminal having well received the first DCI 1601 may receive the SPS resources 1605 and 1607 even without the second DCI 1602. Therefore, even if the terminal receives the second DCI 1602, when the corresponding information is identical to the first DCI 1601, the terminal may disregard same. In this case, the terminal may report the HARQ-ACK information 1615 and 1617 for the previously configured SPS resources 1605 and 1607, and corresponding HARQ-ACK feedbacks may be the first HARQ-ACK feedback type or the second HARQ-ACK feedback type. Alternatively, the terminal has well received the first DCI 1601, but may be able to follow information indicated by the second DCI 1602. Therefore, the terminal may receive the SPS resource region 1605 indicated by the second DCI 1602, and report HARQ-ACK information therefor as indicated by reference numeral 1615.

As another example, HARQ-ACK information for DCI scheduled for SPS activation or release, and HARQ-ACK information for other SPS PDSCHs may have the same region or different regions, and these resources may be previously notified of by a higher signal or L1 signal. In addition, an additional HARQ-ACK resource may be differently configured for each groupcast terminal by a groupcast data-related RNTI (e.g., G-RNTI) or unicast data (e.g., C-RNTI). Therefore, a resource region in which the HARQ-ACK information 1615 for a terminal having received the second DCI 1602 is transmitted or received may be identical to or different from a resource region in which HARQ-ACK information 1615 corresponding to terminals having received the second DCI 1602, but having disregarded same or having failed to receive the second DCI 1602 and having received the SPS resource 1605 is transmitted or received. In addition, the pieces of HARQ-ACK information may have different HARQ-ACK feedback types.

HARQ-ACK information as described above may indicate a PUCCH or PUSCH resource in which HARQ-ACK feedback information is transmitted or received, or HARQ-ACK information itself, such as ACK/NACK/DTX. HARQ-ACK information is information that a terminal transmits to a base station. An SPS resource as described above may indicate a resource region in which an SPS PDSCH is transmitted or received, or a resource region for a particular SPS index.

Similarly thereto, when some terminals have failed to receive the DCI 1609 indicating SPS release, the base station may retransmit corresponding DCI information. Therefore, the terminals having missed the DCI 1609 indicating SPS release determine that the SPS continues to operate, and thus HARQ-ACK information for the previously configured SPS is not valid. However, until the SPS of all terminals is released, a resource on which the HARQ-ACK information is transmitted or received may be required not to be used for other terminals. In a case where the DCI 1609 indicating SPS release is transmitted in groupcast, terminals having already transmitted the HARQ-ACK information 1619 therefor may not transmit HARQ-ACK information for DCI indicating the same SPS release when the DCI is retransmitted. This is because the terminal has transmitted confirm information (HARQ-ACK information) for SPS release to the base station, and thus may not need to transmit the same information again, and power consumption of the terminal may be reduced accordingly. As another example, in a case where the DCI 1609 indicating SPS release is transmitted in groupcast, terminals having already transmitted the HARQ-ACK information 1609 therefor may not disregard DCI indicating the same SPS release even when the DCI is retransmitted, and transmit HARQ-ACK information therefor. This is because, even if the terminal has previously transmitted confirm information (HARQ-ACK information) for SPS release, there is a possibility that the base station may miss same, and thus even when SPS release DCI is scheduled continuously, the terminal may transmit HARQ-ACK information therefor.

FIG. 16 is basically described under the situation where an SPS for groupcast data is activated or released by a combination of a higher signal and an L1 signal, but the description below is related to a case where an SPS is configured by only a higher signal. In a case where an SPS for groupcast data is configured by only a higher signal, at least some of the pieces of information as in [Table 12] below in addition to [Table 11] may be configured for a terminal.

**[Table 12]**

| |
|---|
| - Carrier indicator: This indicates a carrier on which data scheduled by DCI is transmitted. |
| - Identifier for DCI formats: This indicate a DCI format, and specifically, indicates an indicator for distinguishing whether corresponding DCI is for downlink or uplink. |
| - Bandwidth part indicator: This indicates a change of a bandwidth part when the bandwidth part is changed. |
| - Frequency domain resource assignment: This is resource allocation information indicating a frequency domain resource allocation, and represents a different resource according to whether a resource allocation type is 0 or 1. |
| - Time domain resource assignment: This is resource allocation information indicating a time domain resource allocation, and may indicate higher layer signaling or one configuration of a predetermined PDSCH time domain resource allocation list. |
| - VRB-to-PRB mapping: This indicates the mapping relation between a virtual resource block (VRB) and a physical resource block (PRB). |
| - PRB bundling size indicator: This indicates a physical resource block bundling size to which the same precoding is assumed to be applied. |
| - Rate matching indicator: This indicates a rate matching group to be applied among rate matching groups configured via a higher layer applied to a PDSCH. |
| - ZP CSI-RS trigger: This triggers zero-power channel state information reference signal. |
| - Transport block (TB)-related configuration information: This indicates a modulation and coding scheme (MCS), a new data indicator (NDI), and a redundancy version (RV) for one or two TBs. |
| - Modulation and coding scheme (MCS): This indicates a modulation scheme and a coding rate which have been used for data transmission. That is, this may indicate a coding rate value providing a TBS and channel coding information together with information indicating whether the modulation scheme is QPSK, 16QAM, 64QAM, or 256QAM. |
| - New data indicator: This indicates whether transmission is a HARQ initial transmission or retransmission. |
| - Redundancy version: This indicates a redundancy version of a HARQ. |
| - HARQ process number: This indicates a HARQ process number applied to a PDSCH. |
| - Downlink assignment index: This is an index for generating a dynamic HARQ-ACK codebook when a HARQ-ACK for a PDSCH is reported. |
| - TPC command for scheduled PUCCH: Power control information applied to a PUCCH for reporting a HARQ-ACK for a PDSCH |
| - PUCCH resource indicator: Information indicating a resource of a PUCCH for reporting a HARQ-ACK for a PDSCH |
| - PDSCH-to-HARQ_feedback timing indicator: Configuration information relating to which slot on which a PUCCH for reporting a HARQ-ACK for a PDSCH is transmitted |
| - Antenna ports: Information indicating a DMRS CDM group on which a PDSCH is not transmitted, and an antenna port of a PDSCH DMRS |
| - Transmission configuration indication: Information indicating beam-related information of a PDSCH |
| - SRS request: Information requesting SRS transmission |
| - CBG transmission information: Information indicating which code block group (CBG) to which data transmitted through a PDSCH corresponds, when a code block group-based retransmission is configured |
| - CBG flushing out information: Information indicating whether a code block group having been previously received by a terminal is available for HARQ combining |
| - DMRS sequence initialization: This indicates a DMRS sequence initialization parameter. |
| - timeDomainOffset: This indicates offset value information of a system frame number (SFN) |
| - harq-ack-feedback: This indicates HARQ-ACK feedback presence/absence information |
| - harq-ack-feedback type: This indicates a HARQ-ACK feedback type |

Therefore, at least some of the pieces of information of [Table 11] and [Table 12] are configured for a terminal by a higher signal, whereby the terminal may be able to periodically receive SPS-based groupcast data without reporting HARQ-ACK information for separate SPS activation or release. The higher signal may be a terminal-specific higher signal, a particular group higher signal for a groupcast terminal, or a higher signal, such as SIB.

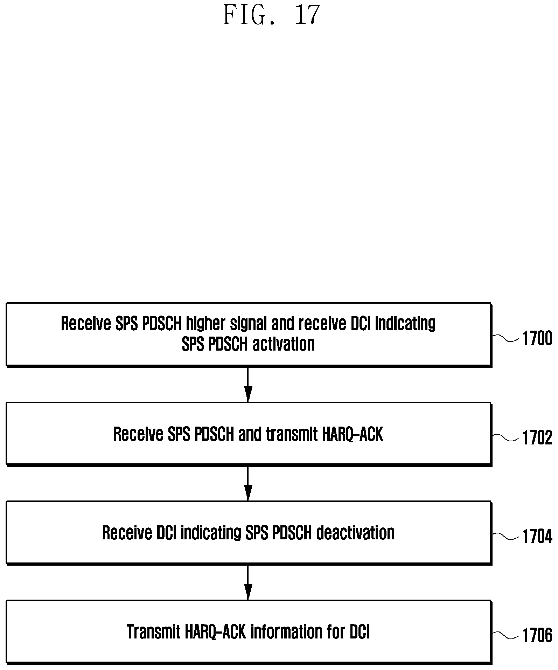

FIG. 17 is a flowchart illustrating an SPS operation method of a terminal according to an embodiment of the disclosure. The terminal determines whether an SPS PDSCH has been activated by SPS higher signal reception and DCI indicating activation of the SPS PDSCH. Information relating to whether the SPS PDSCH is unicast or groupcast may be distinguished by a higher signal, or may be distinguished by an RNTI scrambled in DCI indicating SPS PDSCH activation, particular bit field information in DCI, or DCI format information. The terminal receives data in an SPS PDSCH resource region indicated by the scheduling DCI, and transmits HARQ-ACK information.

When the HARQ-ACK information is groupcast as described with reference to FIG. 16, different HARQ-ACK feedback types may be applied according to whether the HARQ-ACK information is HARQ-ACK information for SPS PDSCH reception indicated by scheduling DCI, or is HARQ-ACK information for SPS PDSCH reception periodically received without scheduling DCI, and moreover, the HARQ-ACK information may be transmitted using different HARQ-ACK resources. Each of the HARQ-ACK resources may be notified of by the SPS higher signal or DCI indicating SPS PDSCH activation. Thereafter, the terminal periodically receives an SPS PDSCH, then receives DCI indicating SPS PDSCH deactivation, and transmits HARQ-ACK information, whereby SPS PDSCH release is completed.

As another example, in a case where an SPS PDSCH is for groupcast data, it may be possible for the terminal not to report HARQ-ACK information for an SPS PDSCH periodically received without separate DCI scheduling, other than reporting HARQ-ACK information for DCI indicating SPS PDSCH activation or release, and not reporting may be notified of by a higher signal or L1 signal.

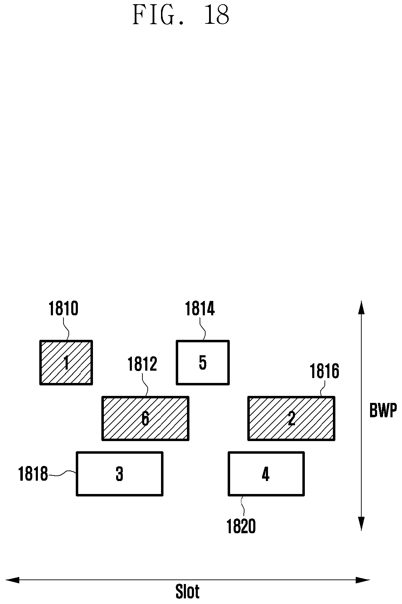

FIG. 18 is a diagram illustrating a situation of a terminal where multiple SPS PDSCHs overlap with each other according to an embodiment of the disclosure.

It may be possible to configure one or more unicast SPS PDSCHs and one or more multicast-based SPS PDSCHs for a terminal in one cell and one BWP. The unicast SPS PDSCH indicates unicast information being included in an SPS PDSCH, and may be scheduled by DCI including a CRC scrambled with a unicast RNTI (e.g., CS-RNTI), and include an activated SPS PDSCH.

The multicast SPS PDSCH indicates multicast (or broadcast) information being included in an SPS PDSCH, and is scheduled by DCI including a CRC scrambled with a multicast RNTI (e.g., G-RNTI, MBS-RNTI, G-CG-RNTI, MBS-CS-RNTI, etc.), and includes an activated SPS PDSCH.

A unicast PDSCH described in the disclosure includes both a PDSCH that is scheduled by DCI including a CRC scrambled with a C-RNTI or MCS-C-RNTI, and a unicast SPS PDSCH that is periodically transmitted or received without DCI. A multicast PDSCH described in the disclosure includes both a PDSCH that is scheduled by DCI including a CRC scrambled with a G-RNTI or MBS-RNTI, and a multicast SPS PDSCH that is periodically transmitted or received without DCI.

In a case where a unicast PDSCH and a multicast PDSCH have been assigned to different frequency resources while the PDSCHs overlaps with each other by at least some symbols in view of time resources according to terminal capability, the unicast PDSCH and the multicast PDSCH may be simultaneously received. Alternatively, different frequency resources have been described, but the disclosure is not limited thereto, and even when at least some frequency resources are the same, a situation where the terminal is capable of simultaneous reception is not excluded.

In addition, a maximum number of unicast PDSCHs and multicast PDSCHs receivable by a terminal in one slot in a TDM scheme may vary according to different terminal capabilities. The meaning of receiving a PDSCH in a time division duplexing (TDM) scheme is receiving PDSCHs in different time resources. For example, a particular terminal may allow to receive scheduling of a maximum of two unicast PDSCHs in one slot. In addition, the maximum number may be configured for each of a unicast PDSCH and a multicast PDSCH according to terminal capability, or a maximum number may be configured without distinguishment between a unicast PDSCH and a multicast PDSCH.

The terminal capabilities may be previously reported to a base station. The following cases may be provided according to a combination of the terminal capabilities. The following cases may be determined by a combination of terminal capabilities, or may be determined by base station higher signal configuration information after terminal capability reporting.
▪ Case 1-1: A terminal is unable to simultaneously receive a multicast PDSCH and a unicast PDSCH, a maximum number of PDSCHs receivable in one slot in TDM may be configured as a first value (N₁), and the sum of the number of multicast PDSCHs and the number of unicast PDSCHs does not exceed the value (that is, the maximum number of PDSCHs is applied without distinguishing between a multicast PDSCH and a unicast PDSCH).
▪ Case 1-2: A terminal is able to simultaneously receive a multicast PDSCH and a unicast PDSCH, a maximum number of PDSCHs receivable in one slot in TDM may be configured as a first value (N₁), and the sum of the number of multicast PDSCHs and the number of unicast PDSCHs does not exceed the value (that is, the maximum number of PDSCHs is applied without distinguishing between a multicast PDSCH and a unicast PDSCH).
▪ Case 1-3: A terminal is unable to simultaneously receive a multicast PDSCH and a unicast PDSCH, and a maximum number of unicast PDSCHs and a maximum number of multicast PDSCHs which are receivable in one slot in TDM may each exist (or be configured). For example, the maximum number of unicast PDSCHs may be configured as a first value (N1), and the maximum number of multicast PDSCHs may be configured as a second value (N2).
▪ Case 1-4: A terminal is able to simultaneously receive a multicast PDSCH and a unicast PDSCH, and a maximum number of unicast PDSCHs and a maximum number of multicast PDSCHs which are receivable in one slot in TDM may each exist (or be configured). For example, the maximum number of unicast PDSCHs may be configured as a first value (N1), and the maximum number of multicast PDSCHs may be configured as a second value (N2).

FIG. 18 shows a situation where multiple unicast SPS 1810, 1812, and 1816 and multiple SPS PDSCHs 1814, 1818, and 1820 are configured in one cell and one BWP, and in one slot according to a scheduling situation. Hereinafter, a method of receiving multiple SPS PDSCHs by a terminal will be described with respect to each of the cases.

### <First embodiment>

In case 1-1, the terminal may receive only one PDSCH that is either a multicast PDSCH or a unicast PDSCH, at a particular moment. Therefore, the terminal may be able to select SPS PDSCHs to be received according to [Table 13] below.

**[Table 13]**

| |
|---|
| If there are two or more PDSCHs on a serving cell scheduled without PDCCH transmission are in a slot, after a terminal may first exclude PDSCHs indicated as uplink symbols by a higher signal configuration related to TDD in the slot, and then receive one or more PDSCHs scheduled without PDCCH transmission according to the following sequence. |
| ▪ Step 1: set j=0. j is the number of selected PDSCHs for decoding. Q is a set of activated PDSCHs scheduled without corresponding PDCCH transmission within the slot. |
| ▪ Step 2: The terminal determines to receive a PDSCH with the lowest SPS index in set Q. Update to j=j+1. Designate the received PDSCH as a survivor PDSCH. |
| ▪ Step 3: The survivor PDSCH in step 2 and other PDSCHs where the at least part symbols overlap with the survivor PDSCH in time resources are excluded from the set Q. |
| ▪ Step 4: Repeat step 2 and step 3 until set Q is empty or j is equal to the number (N1) of PDSCHs in a slot supported by the terminal. |

When FIG. 18 is used as an example, in a case where the sum of the number of unicast PDSCHs and the number of multicast PDSCHs which are receivable by the terminal in one slot is 3, the terminal receives SPS PDSCHs corresponding to reference numerals 1810, 1816, and 1814 and reports a HARQ-ACK feedback therefor according to [Table 13] above. Then, the terminal does not receive SPS PDSCHs corresponding to reference numerals 1812, 1820, and 1818, and may not report a HARQ-ACK feedback or report same as NACK.

### <Second embodiment>

In case 1-2, the terminal is able to simultaneously receive a multicast PDSCH and a unicast PDSCH, and thus a subject required to be excluded from set Q in step 3 of [Table 13] above may need to be limited to PDSCHs for each cast type. Therefore, considering an operation of [Table 14] below may be possible.

**[Table 14]**

| |
|---|
| If there are two or more PDSCHs on a serving cell scheduled without PDCCH transmission are in a slot, a terminal may first exclude PDSCHs indicated as uplink symbols by a higher signal configuration related to TDD in the slot, and then receive one or more PDSCHs scheduled without PDCCH transmission according to the following sequence. |
| ▪ Step 1: set j=0. j is the number of selected PDSCHs for decoding. Q is a set of activated unicast PDSCHs scheduled without corresponding PDCCH transmission within the slot. Q' is a set of activated multicast PDSCHs scheduled without corresponding PDCCH transmission within the slot. |
| ▪ Step 2: The terminal determines to receive a PDSCH with the lowest SPS index in set Q and set Q'. Update to j=j+1. Designate the received PDSCH as a survivor PDSCH. |
| ▪ Step 3: If the survivor PDSCH of step 2 is a unicast PDSCH (a unicast SPS PDSCH or a PDSCH scheduled or activated by a PDCCH scrambled with a CS-RNTI), other PDSCHs where the at least part symbols overlap with the survivor PDSCH in time resources are excluded from set Q. If the survivor PDSCH of step 2 is a multicast PDSCH (a multicast SPS PDSCH or a PDSCH scheduled or activated by a PDCCH scrambled with a multicast RNTI such as an MBS-CS-RNTI or G-CS-RNTI), other PDSCHs where the at least part symbols overlap with the survivor PDSCH in time resources are excluded from set Q'. |
| other PDSCHs where the at least part symbols overlap with the survivor PDSCH in time resources are excluded from the set Q. |
| ▪ Step 4: Repeat step 2 and step 3 until both sets Q and Q' are empty or j is equal to the number (N1, the sum between the sum of multicast PDSCHs and the number of unicast PDSCHs) of PDSCHs in a slot supported by the terminal. |

When FIG. 18 is used as an example, in a case where the sum of the number of unicast PDSCHs and the number of multicast PDSCHs which are receivable by the terminal in one slot is 3, since simultaneous reception between a unicast PDSCH and a multicast PDSCH is possible, the terminal receives SPS PDSCHs corresponding to reference numerals 1810, 1816, and 1818 and reports a HARQ-ACK feedback therefor according to [Table 14] above. Then, the terminal does not receive SPS PDSCHs 1812, 1814, and 1820, and may not report a HARQ-ACK feedback therefor or report an NACK.

### <Third embodiment>

Case 1-3 is a situation where a terminal is unable to simultaneously receive a multicast PDSCH and a unicast PDSCH, and each of a maximum number of unicast PDSCHs and a maximum number of multicast PDSCHs which are receivable in one slot in TDM exists. Therefore, unlikely from the method described in [Table 13], the number of unicast PDSCHs and the number of multicast PDSCHs which are selected is required to be considered with respect to a value reported in terminal capability corresponding to each of the numbers. Therefore, considering an operation of [Table 15] below may be possible.

**[Table 15]**

| |
|---|
| If there are two or more PDSCHs on a serving cell scheduled without PDCCH transmission are in a slot, a terminal may first exclude PDSCHs indicated as uplink symbols by a higher signal configuration related to TDD in the slot, and then receive one or more PDSCHs scheduled without PDCCH transmission according to the following sequence. |
| ▪ Step 1: set j=0 and k=0. j is the number of unicast PDSCHs (a unicast SPS PDSCH or a PDSCH scheduled or activated by a PDCCH scrambled with a CS-RNTI) selected for decoding. k is the number of multicast PDSCHs (or a multicast SPS PDSCH or a PDSCH scheduled or activated by a PDCCH scrambled with a multicast RNTI such as an MBS-CS-RNTI or G-CS-RNTI) selected for decoding, and Q is a set of activated unicast PDSCHs scheduled without corresponding PDCCH transmission within the slot. Q' is a set of activated multicast PDSCHs scheduled without corresponding PDCCH transmission within the slot. |
| ▪ Step 2: The terminal determines to receive a PDSCH with the lowest SPS index in set Q and set Q'. If the PDSCH is a unicast PDSCH, update to j=j+1. If the PDSCH is a multicast PDSCH, Update to k=k+1. Designate the received PDSCH as a survivor PDSCH. |
| ▪ Step 3: The survivor PDSCH in step 2 and other PDSCHs where the at least part symbols overlap with the survivor PDSCH in time resources are excluded from set Q and set Q'. |
| ▪ Step 4: If j is a maximum number (N₁) of unicast PDSCHs in a slot supported by a terminal, determine Q=∅. If k is a maximum number (N₂) of PDSCHs receivable by a terminal in one slot, determine Q'=∅. |
| ▪ Step 5: Repeat steps 2-4 until set Q and set Q' are both empty. |

When FIG. 18 is used as an example, in a case where the number of unicast PDSCHs receivable by the terminal is 1 and the number of multicast PDSCHs is 2, the terminal receives SPS PDSCHs corresponding to reference numerals 1810, 1814, and 1820 and reports a HARQ-ACK feedback therefor according to [Table 15]. Then, the terminal does not receive SPS PDSCHs 1812, 1816, and 1818, and may not report a HARQ-ACK feedback therefor or report an NACK.

### <Fourth embodiment>

Case 1-4 is a situation where a terminal is able to simultaneously receive a multicast PDSCH and a unicast PDSCH, and each of a maximum number of unicast PDSCHs and a maximum number of multicast PDSCHs which are receivable in one slot in TDM exists. Therefore, the terminal is capable of simultaneous reception, and may be able to determine whether SPS PDSCHs overlap with each other, by considering each of a unicast PDSCH and a multicast PDSCH. Considering an operation of [Table 16] below may be possible.

**[Table 16]**

| |
|---|
| If there are two or more unicast PDSCHs on a serving cell scheduled without PDCCH transmission are in a slot, a terminal may first exclude unicast PDSCHs indicated as uplink symbols by a higher signal configuration related to TDD in the slot, and then receive one or more unicast PDSCHs scheduled without PDCCH transmission according to the following sequence. |
| ▪ Step 1: set j=0. j is the number of unicast PDSCHs selected for decoding. Q is a set of activated unicast PDSCHs scheduled without corresponding PDCCH transmission within the slot. |
| ▪ Step 2: The terminal determines to receive a unicast PDSCH with the lowest SPS index in set Q. Update to j j+1. Desginate the unicast PDSCH as a survivor unicast PDSCH. |
| ▪ Step 3: The survivor unicast PDSCH in step 2 and other unicast PDSCHs where the at least part symbols overlap with the survivor unicast PDSCH in time resources are excluded from set Q. |
| ▪ Step 4: Repeat step 2 and step 3 until set Q is empty or j is identical to the number (N1) of unicast PDSCHs in a slot supported by the terminal. |
| If there are two or more multicast PDSCHs on a serving cell scheduled without PDCCH transmission are, a terminal may first exclude multicast PDSCHs indicated as uplink symbols by a higher signal configuration related to TDD in the slot, and then receive one or more multicast PDSCHs scheduled without PDCCH transmission according to the following sequence.. |
| ▪ Step 1: Configure k=0. k is the number of multicast PDSCHs selected for decoding. Q' is a set of active multicast PDSCHs scheduled without corresponding PDCCH transmission within the slot. |
| ▪ Step 2: The terminal determines to receive a multicast PDSCH with the lowest SPS index in set Q'. Update to k=k+1. Designate the multicast PDSCH as a survivor multicast PDSCH. |
| ▪ Step 3: The survivor multicast PDSCH in step 2 and other multicast PDSCHs where the at least part symbols overlap with the survivor multicast PDSCH in time resources are excluded from the set Q'. |
| ▪ Step 4: Repeat step 2 and step 3 until set Q' is empty or k is equal to the number (N₂) of multicast PDSCHs in a slot supported by the terminal. |

When FIG. 18 is used as an example, in a case where the number of unicast PDSCHs receivable by the terminal is 1 and the number of multicast PDSCHs is 1, the terminal receives SPS PDSCHs corresponding to reference numerals 1810 and 1818 and reports a HARQ-ACK feedback therefor according to [Table 16]. Then, the terminal does not receive SPS PDSCHs 1812, 1814, 1816, and 1818, and may not report a HARQ-ACK feedback therefor or report an NACK.

The descriptions of [Table 13] to [Table 16] given in the embodiment are examples describing respective cases, and in relation thereto, a terminal operation for each case is not limited. In addition, a terminal operation is not limited to the cases described with reference to FIG. 18, and may be definable according to a combination of some or all of [Table 13] to [Table 16] according to a combination of some of the cases.

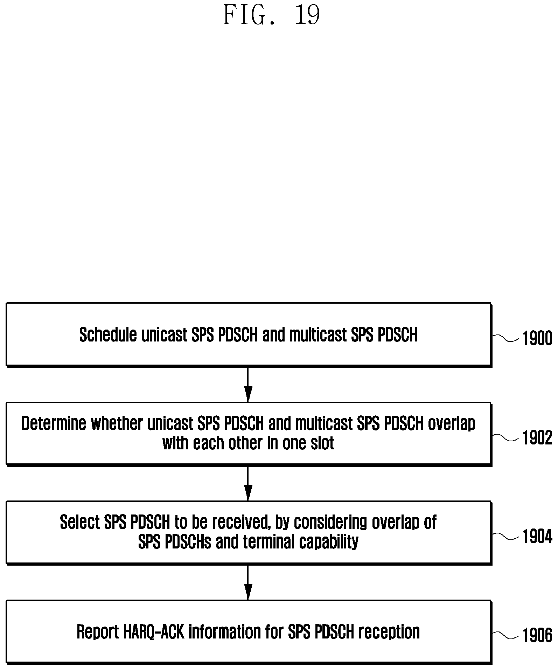

FIG. 19 is a flowchart illustrating a terminal operation for SPS PDSCH reception according to an embodiment of the disclosure.

A terminal may receive configuration information on an SPS PDSCH through a higher signal.

Thereafter, the terminal may receive DCI. The terminal identifies activation information related to the SPS PDSCH, based on the DCI (operation 1900). In addition, the terminal determines, based on higher information or scheduling DCI, whether the SPS PDSCH is for unicast data or for multicast or broadcast data.

When multiple configurations for the SPS PDSCH are configured in one cell and one BWP, the terminal determines whether a unicast PDSCH and a multicast PDSCH overlap with each other in one slot (operation 1902). When an overlap occurs, the terminal may select SPS PDSCH to be received, by at least one of the above embodiments related to FIG. 18 or a combination thereof (operation 1904). The terminal may receive the SPS PDSCHs and report HARQ-ACK information therefor (operation 1906).

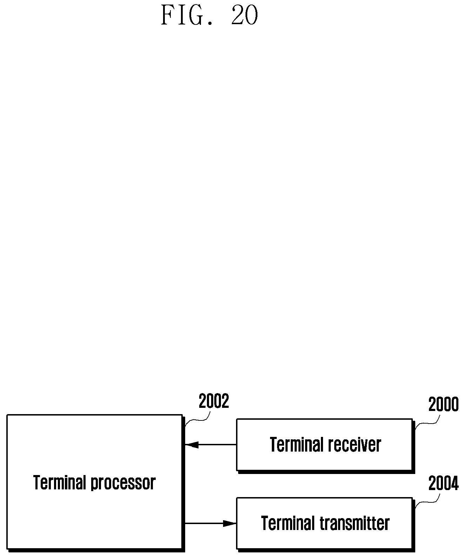

FIG. 20 is a block diagram of illustrating a structure of a terminal capable of performing an embodiment of the disclosure.

Referring to FIG. 20, a terminal of the disclosure may include a terminal receiver 2000, a terminal transmitter 2004, and a terminal processor 2002. The terminal receiver 2000 and the terminal transmitter 2004 may be collectively referred to as a transceiver in an embodiment. The transceiver may transmit or receive a signal to or from a base station. The signal may include control information and data. To this end, the transceiver may include an RF transmitter that up-converts and amplifies a frequency of a transmitted signal, an RF receiver that low-noise amplifies a received signal and down-converts the frequency thereof, and the like. In addition, the transceiver may receive a signal through a wireless channel and output the signal to the terminal processor 2002, and may transmit a signal output from the terminal processor 2002, through a wireless channel. The terminal processor 2002 may control a series of processes so as to enable the terminal to operate according to an embodiment described above.

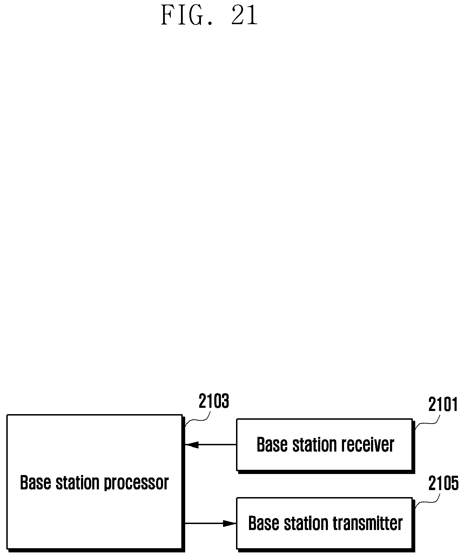

FIG. 21 is a block diagram of illustrating a structure of a base station capable of performing an embodiment of the disclosure.

Referring to FIG. 21, in an embodiment, a base station may include at least one of a base station receiver 2101, a base station transmitter 2105, and a base station processor 2103. The base station receiver 2101 and the base station transmitter 2105 may be collectively referred to as a transceiver in an embodiment of the disclosure. The transceiver may transmit or receive a signal to or from a terminal. The signal may include control information and data. To this end, the transceiver may include an RF transmitter that up-converts and amplifies a frequency of a transmitted signal, an RF receiver that low-noise amplifies a received signal and down-converts the frequency thereof, and the like. In addition, the transceiver may receive a signal through a wireless channel and output the signal to the base station processor 2103, and may transmit a signal output from the base station processor 2103, through a wireless channel. The base station processor 2103 may control a series of processes so as to enable the base station to operate according to embodiments described above.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. Furthermore, although the above embodiments have been described on the basis of the FDD LTE system, other variants based on the technical idea of the embodiments may also be implemented in other systems such as TDD LTE, 5G, and NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the scope of the disclosure.

## Claims

1. A method performed by a terminal in a communication system, the method comprising:
receiving, from a base station, a semi-persistent scheduling, SPS, configuration including an SPS configuration index;
in case that there are at least two physical downlink shared channels, PDSCHs, associated with the SPS configuration on a serving cell without a physical downlink control channel, PDCCH, in a slot:
performing identification of a PDSCH with a lowest SPS configuration index based on the SPS configuration index, and
performing exclusion of the identified PDSCH and a PDSCH that is overlapped with the identified PDSCH from a set of the at least two PDSCHs within the slot; and
until the set of the at least two PDSCHs is empty or until a number of at least one selected PDSCH for decoding is equal to a number of PDSCHs including a multicast PDSCH in the slot supported by the terminal, repeating the identification and the exclusion.

2. The method of claim 1, wherein the SPS configuration further includes at least one of a periodicity, a number of hybrid automatic repeat requests, HARQs, a HARQ resource of a physical uplink control channel, PUCCH, for a downlink SPS, or a modulation and coding scheme, MCS, table, and
wherein the SPS configuration is received through higher layer signaling.

3. The method of claim 1, further comprising transmitting, to the base station, capability information including information associated with the number of PDSCHs in the slot supported by the terminal.

4. The method of claim 1, wherein each PDSCH among the set of the at least two PDSCHs is not overlapped with a symbol indicated as an uplink symbol by a configuration associated with a time division duplex, TDD, in the slot.

5. A method performed by a base station in a communication system, the method comprising:
transmitting, to a terminal, a semi-persistent scheduling, SPS, configuration including an SPS configuration index;
in case that there are at least two physical downlink shared channels, PDSCHs, associated with the SPS configuration on a serving cell without a physical downlink control channel, PDCCH, in a slot:
performing identification of a PDSCH with a lowest SPS configuration index based on the SPS configuration index, and
performing exclusion of the identified PDSCH and a PDSCH that is overlapped with the identified PDSCH from a set of the at least two PDSCHs within the slot; and
until the set of the at least two PDSCHs is empty or until a number of transmitted PDSCHs is equal to a number of PDSCHs including a multicast PDSCH in the slot supported by the terminal, repeating the identification and the exclusion.

6. The method of claim 5,
wherein the SPS configuration further includes at least one of a periodicity, a number of hybrid automatic repeat requests, HARQs, a HARQ resource of a physical uplink control channel, PUCCH, for a downlink SPS, or a modulation and coding scheme, MCS, table, and
wherein the SPS configuration is transmitted through higher layer signaling.

7. The method of claim 5, further comprising receiving, from the terminal, capability information including information associated with the number of PDSCHs in the slot supported by the terminal.

8. The method of claim 5, wherein each PDSCH among the set of the at least two PDSCHs is not overlapped with a symbol indicated as an uplink symbol by a configuration associated with a time division duplex, TDD, in the slot .

9. A terminal for a communication system, the terminal comprising:
a transceiver (2000, 2004); and
a controller (2002) coupled with the transceiver (2000, 2004) and configured to:
receive, from a base station, a semi-persistent scheduling, SPS, configuration including an SPS configuration index,
in case that there are at least two physical downlink shared channels, PDSCHs, associated with the SPS configuration on a serving cell without a physical downlink control channel, PDCCH, in a slot:
perform identification of a PDSCH with a lowest SPS configuration index based on the SPS configuration index, and
perform exclusion of the identified PDSCH and a PDSCH that is overlapped with the identified PDSCH from a set of the at least two PDSCHs within the slot, and
until the set of the at least two PDSCHs is empty or until a number of at least one selected PDSCH for decoding is equal to a number of PDSCHs including a multicast PDSCH in the slot supported by the terminal, repeat the identification and the exclusion.

10. The terminal of claim 9, wherein the SPS configuration further includes at least one of a periodicity, a number of hybrid automatic repeat requests, HARQs, a HARQ resource of a physical uplink control channel, PUCCH, for a downlink SPS, or a modulation and coding scheme, MCS, table, and
wherein the SPS configuration is received through higher layer signaling.

11. The terminal of claim 9, wherein the controller (2002) is configured to transmit, to the base station, capability information including information associated with the number of PDSCHs in the slot supported by the terminal.

12. The terminal of claim 9, wherein each PDSCH among the set of the at least two PDSCHs is not overlapped with a symbol indicated as an uplink symbol by a configuration associated with a time division duplex, TDD, in the slot .

13. A base station for a communication system, the base station comprising:
a transceiver (2101, 2105); and
a controller (2103) coupled with the transceiver (2101, 2105) and configured to:
transmit, to a terminal, a semi-persistent scheduling, SPS, configuration including an SPS configuration index,
in case that there are at least two physical downlink shared channels, PDSCHs, associated with the SPS configuration on a serving cell without a physical downlink control channel, PDCCH, in a slot:
perform identification of a PDSCH with a lowest SPS configuration index based on the SPS configuration index, and
perform exclusion of the identified PDSCH and a PDSCH that is overlapped with the identified PDSCH from a set of the at least two PDSCHs within the slot, and
until the set of the at least two PDSCHs is empty or until a number of transmitted PDSCHs is equal to a number of PDSCHs including a multicast PDSCH in the slot supported by the terminal, repeat the identification and the exclusion.

14. The base station of claim 13, wherein the controller (2103) is configured to receive, from the terminal, capability information including information associated with the number of PDSCHs in the slot supported by the terminal,
wherein the SPS configuration further includes at least one of a periodicity, a number of hybrid automatic repeat requests, HARQs, a HARQ resource of a physical uplink control channel, PUCCH, for a downlink SPS, or a modulation and coding scheme, MCS, table, and
wherein the SPS configuration is transmitted through higher layer signaling.

15. The base station of claim 13, wherein each PDSCH among the set of the at least two PDSCHs is not overlapped with a symbol indicated as an uplink symbol by a configuration associated with a time division duplex, TDD, in the slot.

## Patentansprüche

1. Verfahren, das von einem Endgerät in einem Kommunikationssystem durchgeführt wird, wobei das Verfahren Folgendes umfasst:
Empfangen, von einer Basisstation, einer Konfiguration für eine semipersistente Planung, SPS, die einen SPS-Konfigurationsindex beinhaltet;
falls mindestens zwei gemeinsam genutzte physikalische Downlink-Kanäle, PDSCHs, die der SPS-Konfiguration an einer bedienenden Zelle ohne physikalischen Downlink-Steuerungskanal, PDCCH, zugeordnet sind, in einem Schlitz vorhanden sind:
Durchführen einer Identifizierung eines PDSCH mit einem niedrigsten SPS-Konfigurationsindex basierend auf dem SPS-Konfigurationsindex und
Durchführen eines Ausschlusses des identifizierten PDSCH und eines PDSCH, der sich mit dem identifizierten PDSCH überschneidet, aus einer Menge der mindestens zwei PDSCHs innerhalb des Schlitzes; und
bis die Menge der mindestens zwei PDSCHs leer ist oder bis eine Anzahl von mindestens einem ausgewählten PDSCH zur Dekodierung gleich einer Anzahl von PDSCHs, die einen Multicast-PDSCH beinhalten, in dem Schlitz, die vom Endgerät unterstützt werden, ist, Wiederholen der Identifizierung und des Ausschlusses.

2. Verfahren nach Anspruch 1, wobei die SPS-Konfiguration ferner mindestens eines von einer Periodizität, einer Anzahl von hybriden automatischen Wiederholungsanforderungen, HARQs, einer HARQ-Ressource eines physikalischen Uplink-Steuerungskanals, PUCCH, für eine Downlink-SPS oder eine Tabelle mit einem Modulations- und Codierungsschema, MCS, beinhaltet und
wobei die SPS-Konfiguration über die Signalisierung der höheren Schicht empfangen wird.

3. Verfahren nach Anspruch 1, ferner umfassend Übertragen, an die Basisstation, von Fähigkeitsinformationen, die Informationen beinhalten, die der Anzahl von PDSCHs in dem Schlitz, die vom Endgerät unterstützt werden, zugeordnet sind.

4. Verfahren nach Anspruch 1, wobei sich kein PDSCH aus der Menge der mindestens zwei PDSCHs mit einem Symbol, das durch eine Konfiguration als Uplink-Symbol angegeben ist, die einem Zeitduplexverfahren, TDD, zugeordnet ist, in dem Schlitz überschneidet.

5. Verfahren, das von einer Basisstation in einem Kommunikationssystem durchgeführt wird, wobei das Verfahren Folgendes umfasst:
Übertragen, an ein Endgerät, einer Konfiguration für eine semipersistente Planung, SPS, die einen SPS-Konfigurationsindex beinhaltet;
falls mindestens zwei gemeinsam genutzte physikalische Downlink-Kanäle, PDSCHs, die der SPS-Konfiguration an einer bedienenden Zelle ohne physikalischen Downlink-Steuerungskanal, PDCCH, zugeordnet sind, in einem Schlitz vorhanden sind:
Durchführen einer Identifizierung eines PDSCH mit einem niedrigsten SPS-Konfigurationsindex basierend auf dem SPS-Konfigurationsindex und
Durchführen eines Ausschlusses des identifizierten PDSCH und eines PDSCH, der sich mit dem identifizierten PDSCH überschneidet, aus einer Menge der mindestens zwei PDSCHs innerhalb des Schlitzes; und
bis die Menge der mindestens zwei PDSCHs leer ist oder bis eine Anzahl von übertragenen PDSCHs gleich einer Anzahl von PDSCHs, die einen Multicast-PDSCH beinhalten, in dem Schlitz, die vom Endgerät unterstützt werden, ist, Wiederholen der Identifizierung und des Ausschlusses.

6. Verfahren nach Anspruch 5,
wobei die SPS-Konfiguration ferner mindestens eines von einer Periodizität, einer Anzahl von hybriden automatischen Wiederholungsanforderungen, HARQs, einer HARQ-Ressource eines physikalischen Uplink-Steuerungskanals, PUCCH, für eine Downlink-SPS oder eine Tabelle mit einem Modulations- und Codierungsschema, MCS, beinhaltet und
wobei die SPS-Konfiguration über die Signalisierung der höheren Schicht übertragen wird.

7. Verfahren nach Anspruch 5, ferner umfassend Empfangen, von dem Endgerät, von Fähigkeitsinformationen, die Informationen beinhalten, die der Anzahl von PDSCHs in dem Schlitz, die vom Endgerät unterstützt werden, zugeordnet sind.

8. Verfahren nach Anspruch 5, wobei sich kein PDSCH aus der Menge der mindestens zwei PDSCHs mit einem Symbol, das durch eine Konfiguration als Uplink-Symbol angegeben ist, die einem Zeitduplexverfahren, TDD, zugeordnet ist, in dem Schlitz überschneidet.

9. Endgerät für ein Kommunikationssystem, wobei das Endgerät Folgendes umfasst:
einen Transceiver (2000, 2004); und
eine Steuerung (2002), die mit dem Transceiver (2000, 2004) gekoppelt ist und konfiguriert ist zum:
Empfangen, von einer Basisstation, einer Konfiguration für eine semipersistente Planung, SPS, die einen SPS-Konfigurationsindex beinhaltet,
falls mindestens zwei gemeinsam genutzte physikalische Downlink-Kanäle, PDSCHs, die der SPS-Konfiguration an einer bedienenden Zelle ohne physikalischen Downlink-Steuerungskanal, PDCCH, zugeordnet sind, in einem Schlitz vorhanden sind:
Durchführen einer Identifizierung eines PDSCH mit einem niedrigsten SPS-Konfigurationsindex basierend auf dem SPS-Konfigurationsindex und
Durchführen eines Ausschlusses des identifizierten PDSCH und eines PDSCH, der sich mit dem identifizierten PDSCH überschneidet, aus einer Menge der mindestens zwei PDSCHs innerhalb des Schlitzes; und
bis die Menge der mindestens zwei PDSCHs leer ist oder bis eine Anzahl von mindestens einem ausgewählten PDSCH zur Dekodierung gleich einer Anzahl von PDSCHs, die einen Multicast-PDSCH beinhalten, in dem Schlitz, die vom Endgerät unterstützt werden, ist, Wiederholen der Identifizierung und des Ausschlusses.

10. Endgerät nach Anspruch 9, wobei die SPS-Konfiguration ferner mindestens eines von einer Periodizität, einer Anzahl von hybriden automatischen Wiederholungsanforderungen, HARQs, einer HARQ-Ressource eines physikalischen Uplink-Steuerungskanals, PUCCH, für eine Downlink-SPS oder eine Tabelle mit einem Modulations- und Codierungsschema, MCS, beinhaltet und
wobei die SPS-Konfiguration über die Signalisierung der höheren Schicht empfangen wird.

11. Endgerät nach Anspruch 9, wobei die Steuerung (2002) konfiguriert ist, zum Übertragen, an die Basisstation, von Fähigkeitsinformationen, die Informationen beinhalten, die der Anzahl von PDSCHs in dem Schlitz, die vom Endgerät unterstützt werden, zugeordnet sind.

12. Endgerät nach Anspruch 9, wobei sich kein PDSCH aus der Menge der mindestens zwei PDSCHs mit einem Symbol, das durch eine Konfiguration als Uplink-Symbol angegeben ist, die einem Zeitduplexverfahren, TDD, zugeordnet ist, in dem Schlitz überschneidet.

13. Basisstation für ein Kommunikationssystem, wobei die Basisstation Folgendes umfasst:
einen Transceiver (2101, 2105); und
eine Steuerung (2103), die mit dem Transceiver (2101, 2105) gekoppelt ist und konfiguriert ist zum:
Übertragen, an ein Endgerät, einer Konfiguration für eine semipersistente Planung, SPS, die einen SPS-Konfigurationsindex beinhaltet,
falls mindestens zwei gemeinsam genutzte physikalische Downlink-Kanäle, PDSCHs, die der SPS-Konfiguration an einer bedienenden Zelle ohne physikalischen Downlink-Steuerungskanal, PDCCH, zugeordnet sind, in einem Schlitz vorhanden sind:
Durchführen einer Identifizierung eines PDSCH mit einem niedrigsten SPS-Konfigurationsindex basierend auf dem SPS-Konfigurationsindex und
Durchführen eines Ausschlusses des identifizierten PDSCH und eines PDSCH, der sich mit dem identifizierten PDSCH überschneidet, aus einer Menge der mindestens zwei PDSCHs innerhalb des Schlitzes; und
bis die Menge der mindestens zwei PDSCHs leer ist oder bis eine Anzahl von übertragenen PDSCHs gleich einer Anzahl von PDSCHs, die einen Multicast-PDSCH beinhalten, in dem Schlitz, die vom Endgerät unterstützt werden, ist, Wiederholen der Identifizierung und des Ausschlusses.

14. Basisstation nach Anspruch 13, wobei die Steuerung (2103) konfiguriert ist, zum Empfangen, von dem Endgerät, von Fähigkeitsinformationen, die Informationen beinhalten, die der Anzahl von PDSCHs in dem Schlitz, die vom Endgerät unterstützt werden, zugeordnet sind,
wobei die SPS-Konfiguration ferner mindestens eines von einer Periodizität, einer Anzahl von hybriden automatischen Wiederholungsanforderungen, HARQs, einer HARQ-Ressource eines physikalischen Uplink-Steuerungskanals, PUCCH, für eine Downlink-SPS oder eine Tabelle mit einem Modulations- und Codierungsschema, MCS, beinhaltet und
wobei die SPS-Konfiguration über die Signalisierung der höheren Schicht übertragen wird.

15. Basisstation nach Anspruch 13, wobei sich kein PDSCH aus der Menge der mindestens zwei PDSCHs mit einem Symbol, das durch eine Konfiguration als Uplink-Symbol angegeben ist, die einem Zeitduplexverfahren, TDD, zugeordnet ist, in dem Schlitz überschneidet.

## Revendications

1. Procédé exécuté par un terminal dans un système de communication, le procédé comprenant :
recevoir, depuis une station de base, une configuration de planification semi-persistante, SPS, comprenant un indice de configuration SPS ;
dans le cas où il existe au moins deux canaux physiques partagés de liaison descendante, PDSCH, associés à la configuration SPS sur une cellule de desserte ne disposant pas de canal de commande de liaison descendante physique, PDCCH, dans un créneau :
effectuer l'identification d'un PDSCH présentant un indice de configuration SPS le plus faible, en se basant sur l'indice de configuration SPS, et
effectuer l'exclusion du PDSCH identifié et d'un PDSCH qui se chevauche avec le PDSCH identifié, parmi un ensemble des au moins deux PDSCH au dans le créneau ; et
répéter l'identification et l'exclusion jusqu'à ce que l'ensemble des au moins deux PDSCH soit vide ou jusqu'à ce qu'un nombre d'au moins un PDSCH sélectionné pour le décodage soit égal à un nombre de PDSCH comprenant un PDSCH de multidiffusion, dans le créneau pris en charge par le terminal.

2. Procédé selon la revendication 1, dans lequel la configuration SPS comprend en outre au moins l'un d'une périodicité, d'un nombre de demandes de répétition automatiques hybrides, HARQ, d'une ressource HARQ d'un canal de commande de liaison montante physique, PUCCH, pour un SPS de liaison descendante, ou d'une table de schémas de modulation et de codage, MCS, et
dans lequel la configuration SPS est reçue par le biais d'une signalisation de couche supérieure.

3. Procédé selon la revendication 1, comprenant en outre la transmission, à la station de base, d'informations de capacité comprenant des informations associées au nombre de PDSCH dans le créneau pris en charge par le terminal.

4. Procédé selon la revendication 1, dans lequel chaque PDSCH parmi l'ensemble des au moins deux PDSCH ne chevauche pas un symbole indiqué comme symbole de liaison montante par une configuration associée à un duplexage par répartition dans le temps, TDD, dans le créneau.

5. Procédé exécuté par une station de base dans un système de communication, le procédé comprenant :
transmettre à un terminal une configuration de planification semi-persistante, SPS, comprenant un indice de configuration SPS ;
dans le cas où il existe au moins deux canaux physiques partagés de liaison descendante, PDSCH, associés à la configuration SPS sur une cellule de desserte ne disposant pas de canal de commande de liaison descendante physique, PDCCH, dans un créneau :
effectuer l'identification d'un PDSCH présentant un indice de configuration SPS le plus faible, en se basant sur l'indice de configuration SPS, et
effectuer l'exclusion du PDSCH identifié et d'un PDSCH qui se chevauche avec le PDSCH identifié, parmi un ensemble des au moins deux PDSCH au dans le créneau ; et
répéter l'identification et l'exclusion jusqu'à ce que l'ensemble des au moins deux PDSCH soit vide ou jusqu'à ce qu'un nombre de PDSCH transmis pour soit égal à un nombre de PDSCH comprenant un PDSCH de multidiffusion, dans le créneau pris en charge par le terminal.

6. Procédé selon la revendication 5,
dans lequel la configuration SPS comprend en outre au moins l'un d'une périodicité, d'un nombre de demandes de répétition automatiques hybrides, HARQ, d'une ressource HARQ d'un canal de commande de liaison montante physique, PUCCH, pour un SPS de liaison descendante, ou d'une table de schémas de modulation et de codage, MCS, et
dans lequel la configuration SPS est transmise par le biais de la signalisation de couche supérieure.

7. Procédé selon la revendication 5, comprenant en outre la réception, depuis le terminal, d'informations de capacité comprenant des informations associées au nombre de PDSCH dans le créneau pris en charge par le terminal.

8. Procédé selon la revendication 5, dans lequel chaque PDSCH parmi l'ensemble des au moins deux PDSCH ne chevauche pas un symbole indiqué comme symbole de liaison montante par une configuration associée à un duplexage par répartition dans le temps, TDD, dans le créneau.

9. Terminal pour un système de communication, le terminal comprenant :
un émetteur-récepteur (2000, 2004) ; et
une commande (2002), couplée à l'émetteur-récepteur (2000, 2004) et configurée pour :
recevoir, depuis une station de base, une configuration de planification semi-persistante, SPS, comprenant un indice de configuration SPS ;
dans le cas où il existe au moins deux canaux physiques partagés de liaison descendante, PDSCH, associés à la configuration SPS sur une cellule de desserte ne disposant pas de canal de commande de liaison descendante physique, PDCCH, dans un créneau :
effectuer l'identification d'un PDSCH présentant un indice de configuration SPS le plus faible, en se basant sur l'indice de configuration SPS, et
effectuer l'exclusion du PDSCH identifié et d'un PDSCH qui se chevauche avec le PDSCH identifié, parmi un ensemble des au moins deux PDSCH au dans le créneau, et
répéter l'identification et l'exclusion jusqu'à ce que l'ensemble des au moins deux PDSCH soit vide ou jusqu'à ce qu'un nombre d'au moins un PDSCH sélectionné pour le décodage soit égal à un nombre de PDSCH comprenant un PDSCH de multidiffusion, dans le créneau pris en charge par le terminal.

10. Terminal selon la revendication 9, dans lequel la configuration SPS comprend en outre au moins l'un d'une périodicité, d'un nombre de demandes de répétition automatiques hybrides, HARQ, d'une ressource HARQ d'un canal de commande de liaison montante physique, PUCCH, pour un SPS de liaison descendante, ou d'une table de schémas de modulation et de codage, MCS, et
dans lequel la configuration SPS est reçue par le biais d'une signalisation de couche supérieure.

11. Terminal selon la revendication 9, dans lequel la commande (2002) est configurée pour transmettre à la station de base des informations de capacité comprenant des informations associées au nombre de PDSCH dans le créneau pris en charge par le terminal.

12. Terminal selon la revendication 9, dans lequel chaque PDSCH parmi l'ensemble des au moins deux PDSCH ne chevauche pas un symbole indiqué comme symbole de liaison montante par une configuration associée à un duplexage par répartition dans le temps, TDD, dans le créneau.

13. Station de base pour un système de communication, la station de base comprenant :
un émetteur-récepteur (2101, 2105) ; et
une commande (2103), couplée à l'émetteur-récepteur (2101, 2105) et configurée pour :
transmettre à un terminal une configuration de planification semi-persistante, SPS, comprenant un indice de configuration SPS,
dans le cas où il existe au moins deux canaux physiques partagés de liaison descendante, PDSCH, associés à la configuration SPS sur une cellule de desserte ne disposant pas de canal de commande de liaison descendante physique, PDCCH, dans un créneau :
effectuer l'identification d'un PDSCH présentant un indice de configuration SPS le plus faible, en se basant sur l'indice de configuration SPS, et
effectuer l'exclusion du PDSCH identifié et d'un PDSCH qui se chevauche avec le PDSCH identifié, parmi un ensemble des au moins deux PDSCH au dans le créneau, et
répéter l'identification et l'exclusion jusqu'à ce que l'ensemble des au moins deux PDSCH soit vide ou jusqu'à ce qu'un nombre de PDSCH transmis pour soit égal à un nombre de PDSCH comprenant un PDSCH de multidiffusion, dans le créneau pris en charge par le terminal.

14. Station de base selon la revendication 13, dans laquelle la commande (2103) est configurée pour recevoir, depuis le terminal, des informations de capacité comprenant des informations associées au nombre de PDSCH dans le créneau pris en charge par le terminal,
dans laquelle la configuration SPS comprend en outre au moins l'un d'une périodicité, d'un nombre de demandes de répétition automatiques hybrides, HARQ, d'une ressource HARQ d'un canal de commande de liaison montante physique, PUCCH, pour un SPS de liaison descendante, ou d'une table de schémas de modulation et de codage, MCS, et
dans laquelle la configuration SPS est transmise par le biais de la signalisation de couche supérieure.

15. Station de base selon la revendication 13, dans laquelle chaque PDSCH parmi l'ensemble des au moins deux PDSCH ne chevauche pas un symbole indiqué comme symbole de liaison montante par une configuration associée à un duplexage par répartition dans le temps, TDD, dans le créneau.
